# EUROPEAN PATENT SPECIFICATION

(11) **EP 3 295 854 B1**
(45) Date of publication and mention of the grant of the patent: **20.01.2021**
(21) Application number: 16824641.1
(22) Date of filing: 05.07.2016
(51) Int. Cl.: A47L 9/28, B25J 13/08, G05D 1/02, B25J 9/16, B25J 11/00, G05D 1/00

(54) **MOVING BODY AND METHOD FOR CONTROLLING MOVEMENT OF MOVING BODY**
SICH BEWEGENDER KÖRPER UND VERFAHREN ZUR STEUERUNG DER BEWEGUNG DES SICH BEWEGENDEN KÖRPERS
CORPS MOBILE ET PROCÉDÉ DE COMMANDE DU DÉPLACEMENT D'UN CORPS MOBILE

(30) Priority: 14.07.2015 KR 20150100004
(43) Date of publication of application: 21.03.2018
(73) Proprietor: Samsung Electronics Co., Ltd., Suwon-si, Gyeonggi-do 16677 (KR)
(72) Inventor: KIM, Jin Hee, Incheon 21515 (KR); YOON, Sang Sik, Yongin-si Gyeonggi-do 16953 (KR); KIM, Shin, Hwaseong-si Gyeonggi-do 18437 (KR); SO, Jea Yun, Suwon-si Gyeonggi-do 16697 (KR); JEONG, Yeon Kyu, Suwon-si Gyeonggi-do 16491 (KR)
(74) Representative: Walaski, Jan Filip
(86) International application number: PCT/KR2016/007248
(87) International publication number: WO 2017/010724

(56) References cited:
- EP-A2- 1 921 523
- DE-A1-102009 059 215
- JP-A- H08 164 101
- KR-A- 20060 037 008
- KR-A- 20060 037 008
- KR-A- 20070 018 319
- KR-A- 20080 041 891
- KR-A- 20090 089 599
- US-A1- 2004 236 470
- US-A1- 2006 087 273
- US-B1- 8 606 404

## Description

Embodiments of the present disclosure relate to a movable object and a method for controlling movement of the same.

A movable object represents an apparatus that can move from a predetermined location to another location according to a predetermined method. The movable object may move from a certain location to another location by using at least one moving means, e.g., a wheel, a rail, or a foot for walking. The movable object may collect external information by using a sensor and then move according to the collected information. Alternatively, the movable object may move according to a user's command, which is input by using an additional operating device.

The movable object may include robot cleaners, toy cars, and robots used in the household, industrial, medical or military purposes. The movable object may move by using only wheels or by traveling on rails using wheels or toothed wheels, or by using one or more walking legs.

A robot cleaner is an apparatus for automatically cleaning the cleaning space by sucking foreign substances such as dust accumulated on the floor while running the cleaning space. As for the cleaner in the conventional manner, a user grips the handle of the cleaner and applies the force to the cleaner to move the cleaner to a specific place so that the cleaning is performed on the cleaning space. However, the robot cleaner cleans the cleaning space while moving by using external information or a predetermined movement pattern.

The robot cleaner may automatically move by using a predetermined pattern or may detect an external obstacle by the detection sensor and then move according to the detection result. In addition, the robot cleaner may move according to a signal transmitted from a remote controller operated by a user.

DE102009059215 discloses an infrared emitter and laser pointer that projects an infrared pattern onto the ground to guide a cleaning robot to the center of the pattern.

US20040236470 discloses a system for providing communication of position information between moving bodies navigating in proximity of each other. Orientation information is provided by transmitting infrared digital signals that are specific to individual zones around the moving body.

US8606404 discloses a system for directing a cleaning apparatus on a surface, the system comprising a signal emitting device, separate from the cleaning apparatus, that projects a target onto the surface to direct the cleaning apparatus.

KR20060037008 discloses an external recharging apparatus including a plurality of transmission parts for sending signals having different codes and strengths to guide a robot cleaner including a receiving part for receiving the signals

US 2006/087273 A1 discloses a movable object according to the preamble of claim 1.

Therefore, it is an aspect of the present disclosure to provide a movable object configured to be easily and conveniently moved to a position desired by a user, a remote controller controlling the movement of the movable object, and a movement control system of the movable object and a movement method of the movable object.

It is another aspect of the present disclosure to provide a robot cleaner configured to easily and conveniently move to a position desired by a user, a movement control system of the robot cleaner, and a movement method of the robot cleaner.

According to an aspect of the invention, there is provided a movable object as set out in claim 1. According to another aspect of the invention, there is provided a movement control method of a movable object as set out in claim 11.

In accordance with an aspect of the present disclosure, there is provided a movable object including: at least one infrared receiver configure to receive at least one infrared light among a plurality of infrared lights emitted from a plurality of light sources, the plurality of infrared lights being overlapped with each other on at least a part thereof; and a controller configured to identify a unit zone according to at least one of the emitted or overlapped infrared light and the number of the overlapped infrared lights on the basis of the infrared light received by the at least one infrared receiver, and configured to control the movement of the movable object according to the identified unit zone.

The controller may control the movable object so that the movable object moves to the identified unit zone or moves along in between the identified unit zones, according to a predetermined pattern.

The unit zone may include a first unit zone to a n^{th} unit zone, wherein the controller allows the movable object to sequentially move from first unit zone to the n^{th} unit zone according to a predetermined order, wherein n is a natural number equal to or more than 1.

The controller may control the movable object so that the movable object moves from the first unit zone in which the number of overlapped infrared light is relatively small, to the second unit zone in which the number of overlapped infrared light is relatively large, or the movable object moves from the second unit zone to the first unit zone or the movable object reciprocates between the first unit zone and the second unit zone.

The controller may controls the movable object so that the movable object moves from the first unit zone to the second unit zone or from the second unit zone to the first unit zone according to at least one of a linear path, a curved path, and a spiral path.

The controller may identify and determine a position of the unit zone on the basis of the infrared light received by each of the at least one infrared receiver, determines a moving direction of the movable object according the determined position of the unit zone, or the controller determines at least one of the emitted or overlapped infrared light and the number of the overlapped infrared lights corresponding to each of the at least one infrared receiver on the basis of the infrared light received by the at least one infrared receiver, calculates a center of gravity or a vector sum on the basis of at least one of the emitted or overlapped infrared light and the number of the overlapped infrared lights corresponding to each of the at least one infrared receiver, and determines a moving direction of the movable object according to the center of gravity or the position or the direction of the vector sum.

The plurality of infrared lights may each include an identification signal to identify the plurality of infrared lights from each other, wherein the controller determines at least one of the emitted or overlapped infrared light and the number of the overlapped infrared lights, by using an identification signal that is mixed according to the overlap of the infrared light.

The controller may detect a pulse from the identification signal that is mixed according to the overlap of the infrared lights to determine the number of the pulses in the mixed identification signal, determines at least one of emitted or overlapped infrared light in a certain zone, and the number of the overlapped infrared light in the certain zone according to the determined number of pulses, and identifies the certain zone as a certain unit zone according to the determined at least one of the emitted or overlapped infrared light and the number of the overlapped infrared lights.

The entire or a part of a first irradiation region to which the first infrared light is emitted among the plurality of infrared lights, may be contained in a second irradiation region to which the second infrared light, which may be different from the first infrared light, is emitted, so that the entire or a part of the first irradiation region and the entire or a part of the second irradiation region are overlapped with each other.

The unit zone may include at least one of a point in which the first irradiation region and the second irradiation region are overlapped with each other, and a point in which the first irradiation region and the second irradiation region are not overlapped with each other.

The plurality of light sources may be provided in a remote controller separated from the movable object.

In accordance with an aspect of the present disclosure, there is provided a movement control method of a movable object including: emitting, by a remote controller, a first infrared light and a second infrared light to be different from each other in at least one of a direction and a range, wherein a part of the second infrared light is overlapped with the first infrared light; receiving, by the movable object, at least one of the first infrared light and the second infrared light; determining at least one of the emitted or overlapped infrared light and the number of the overlapped infrared lights on the basis of at least one of the first infrared light and second infrared light received by the movable object, and identifying a unit zone according to the determined at least one of the emitted or overlapped infrared light and the number of the overlapped infrared lights; and moving the movable object according the identified unit zone.

The moving of the movable object according the identified unit zone includes may include moving the movable object to the identified unit zone or along in between the identified unit zones according to a predetermined pattern.

The plurality of infrared lights may each include an identification signal to identify the plurality of infrared lights from each other, wherein the identifying of a unit zone according to at least one of the emitted or overlapped infrared light and the number of the overlapped infrared lights on the basis of at least one of the received first infrared light and second infrared light received by the movable object, may include determining at least one of the emitted or overlapped infrared light and the number of the overlapped infrared lights by using the identification signal mixed according to the overlap of the infrared lights.

The unit zone may include at least one of a point, in which a first irradiation region to which the first infrared light is emitted and a second irradiation region to which the second infrared light is emitted are overlapped with each other, and a point in which the first irradiation region and the second irradiation region are not overlapped with each other.

### [Advantageous Effects]

According to the proposed movable object, remote controller controlling the movement of the movable object, movement control system of the movable object and movement method of the movable object, it may be possible to easily and conveniently move the movable object to a position that is desired by a user.

According to the proposed movable object, remote controller controlling the movement of the movable object, movement control system of the movable object and movement method of the movable object, it may be possible to prevent a case in which the movable object is not controlled since a distance between the movable object and a region to which the light, e.g., the infrared light is emitted, is far or since the movable object is placed in the region to which the infrared light is emitted. Therefore, it may be possible to appropriately control the movement of the movable object regardless of the position or the size of the region to which the infrared light is emitted.

According to the proposed robot cleaner, movement control system of the robot cleaner and movement method of the robot cleaner, it may be possible to easily and conveniently move the robot cleaner to a position that is desired by a user.

According to the proposed robot cleaner, , movement control system of the robot cleaner and movement method of the robot cleaner, it may be possible to appropriately control the movement of the position of the robot cleaner regardless of the position or the size of the region to which the infrared light is emitted.

According to the proposed movable object, remote controller controlling the movement of the movable object, movement control system of the movable object, robot cleaner, movement control system of the robot cleaner, movement method of the movable object, and movement method of the robot cleaner, it may be possible to control the movable object or the robot cleaner although a distance between the center of the infrared light emitted from the remote controller and the movable object or the robot cleaner is far, and also it may be possible to appropriately control the movable object or the robot cleaner when the movable object or the robot cleaner is placed in the inside of the region to which the infrared light is emitted.

### [Description of Drawings]

FIG. 1 is a view illustrating a movement control system of a movable object.
FIG. 2 is a block diagram illustrating the movement control system of the movable object.
FIG. 3 is a view illustrating an irradiation region.
FIG. 4 is a view illustrating a unit zone.
FIG. 5 is a block diagram illustrating the remote controller in accordance with the first embodiment.
FIG. 6 is a perspective view illustrating an appearance of a remote controller in accordance with a first embodiment of the present disclosure.
FIG. 7 is a plan view illustrating the appearance of the remote controller in accordance with the first embodiment.
FIG. 8 is a front view illustrating the front end assembly provided with four infrared emitters in the remote controller in accordance with the first embodiment.
FIG. 9 is a perspective view illustrating the front end assembly provided with four infrared emitters in the remote controller.
FIG. 10 is a cross-sectional view taken along line A of FIG. 8.
FIG. 11 is a cross-sectional view taken along line C of FIG. 8.
FIG. 12A is a cross-sectional view illustrating the first infrared emitter and the second infrared emitter of the remote controller in accordance with the first embodiment.
FIG. 12B is a cross-sectional view illustrating the third infrared emitter and the fourth infrared emitter of the remote controller in accordance with the first embodiment.
FIG. 13 is a view illustrating the infrared irradiation by the first infrared emitter to the fourth infrared emitter and the irradiation region formed on the ground.
FIG. 14 is a view illustrating the first irradiation region to the fourth irradiation region and the first unit zone to the fourth unit zone formed on the ground according to the infrared irradiation by the first infrared emitter to the fourth infrared emitter.
FIG. 15 is a view illustrating an example of a first identification signal to a fourth identification signal transmitted by the first infrared light to the fourth infrared light emitted by the first infrared emitter to the fourth infrared emitter.
FIG. 16 is a view illustrating an example of an identification signal acquirable in the first unit zone according to the overlap of the infrared light.
FIG. 17 is a view illustrating an example of an identification signal acquirable in the second unit zone according to the overlap of the infrared light.
FIG. 18 is a view illustrating an example of an identification signal acquirable in the third unit zone according to the overlap of the infrared light.
FIG. 19 is a view illustrating an example of an identification signal acquirable in the fourth unit zone according to the overlap of the infrared light.
FIG. 20 is a side cross-sectional view illustrating an example of a visible light emitter provided in the infrared emitter.
FIG. 21 is a front view illustrating a front end assembly in which three infrared emitters are provided, in a remote controller according to a second embodiment.
FIG. 22 is a side view illustrating the front end assembly of the remote controller according to the second embodiment.
FIG. 23 is a view illustrating an irradiation region formed on the ground according to the infrared irradiation by a first infrared emitter to a third infrared emitter.
FIG. 24 is a view illustrating an example of a first irradiation region to a third irradiation region and a first unit zone to seventh unit zone formed on the ground according to the infrared irradiation by the first infrared emitter to the third infrared emitter.
FIG. 25 is a view illustrating an example of an identification signal acquirable from an eleventh unit zone, according to the overlap of the infrared light.
FIG. 26 is a view illustrating an example of an identification signal acquirable from a twelfth unit zone, according to the overlap of the infrared light.
FIG. 27 is a view illustrating an example of an identification signal acquirable from a thirteenth unit zone, according to the overlap of the infrared light.
FIG. 28 is a view illustrating an example of an identification signal acquirable from a fourteenth unit zone, according to the overlap of the infrared light.
FIG. 29 is a view illustrating an example of an identification signal acquirable from a fifteenth unit zone, according to the overlap of the infrared light.
FIG. 30 is a view illustrating an example of an identification signal acquirable from a sixteenth unit zone, according to the overlap of the infrared light.
FIG. 31 is a view illustrating an example of an identification signal acquirable from a seventeenth unit zone, according to the overlap of the infrared light.
FIG. 32 is a perspective view illustrating a remote controller provided with two infrared emitters according to a third embodiment.
FIG. 33 is a view illustrating an interior of a front end assembly in the remote controller provided with two infrared emitters according to the third embodiment.
FIG. 34 is a view illustrating an example of a first irradiation region and a second irradiation region formed on the ground, by the infrared light emitted from the two infrared emitters.
FIG. 35 is a perspective view illustrating an appearance of a robot cleaner as an embodiment of a movable object.
FIG. 36 is a diagram illustrating the robot cleaner as an embodiment of the movable object.
FIG. 37 is a bottom view illustrating the robot cleaner as an embodiment of the movable object.
FIG. 38 is a view illustrating an internal structure of the robot cleaner as an embodiment of the movable object.
FIG. 39 is a view illustrating an example in which an infrared receiver is provided in the movable object.
FIG. 40 is a view illustrating a case in which the movable object is placed in the outside of the first irradiation region to the fourth irradiation region.
FIG. 41 is a view illustrating a case in which the movable object is placed in at least two irradiation region among the first irradiation region to the fourth irradiation region.
FIG. 42 is a view illustrating a process in which the received infrared signal is transmitted to the second controller.
FIGS. 43 to 46 are views illustrating a process in which the second controller determines a direction based on the identification signal received by the infrared receiver of the movable object.
FIG. 47 is a view illustrating a first example of a path in which the movable object is moved, when the infrared light is irradiated by the remote controller according to the first embodiment.
FIGS. 48A and 48B are views illustrating a second example of a path in which the movable object is moved, when the infrared light is irradiated by the remote controller according to the first embodiment.
FIGS. 49A to 49F are views illustrating a third example of a path in which the movable object is moved, when the infrared light is irradiated by the remote controller according to the first embodiment.
FIG. 50 is a view illustrating a fourth example of a path in which the movable object is moved, when the infrared light is irradiated by the remote controller according to the first embodiment.
FIG. 51 is a view illustrating a fifth example of a path in which the movable object is moved, when the infrared light is irradiated by the remote controller according to the first embodiment.
FIGS. 52A and 52B are views illustrating a first example of a path in which the movable object is moved, when the infrared light is irradiated by the remote controller according to the second embodiment.
FIGS. 53A and 53B are views illustrating a second example of a path in which the movable object is moved, when the infrared light is irradiated by the remote controller according to the second embodiment.
FIGS. 54A and 54B are views illustrating a third example of a path in which the movable object is moved, when the infrared light is irradiated by the remote controller according to the second embodiment.
FIGS. 55A and 55B are views illustrating a fourth example of a path in which the movable object is moved, when the infrared light is irradiated by the remote controller according to the second embodiment.
FIG. 56 is a view illustrating a fifth example of a path in which the movable object is moved, when the infrared light is irradiated by the remote controller according to the second embodiment.
FIG. 57 is a view illustrating a case where the distance between the first irradiation region to the third irradiation region is irradiated by the remote controller according to the second embodiment is relatively shorter.
FIGS. 58A and 58B are views illustrating a first example in which a moving body moves, when the distance between the first irradiation region to the third irradiation region is relatively shorter.
FIGS. 59A and 59B are views illustrating a second example in which a moving body moves, when the distance between the first irradiation region to the third irradiation region is relatively shorter.
FIGS. 60A and 60B are views illustrating a third example in which a moving body moves, when the distance between the first irradiation region to the third irradiation region is relatively shorter.
FIGS. 61A and 61B are views illustrating an example of a path in which the movable object is moved, when the infrared light is irradiated by the remote controller according to the third embodiment.
FIG. 62 is a view illustrating an embodiment of a moving control method for a moving body.
FIG. 63 is a view illustrating an example of a process of receiving infrared rays and determining the moving direction of the movable object using the received infrared rays.

### [Best Mode]

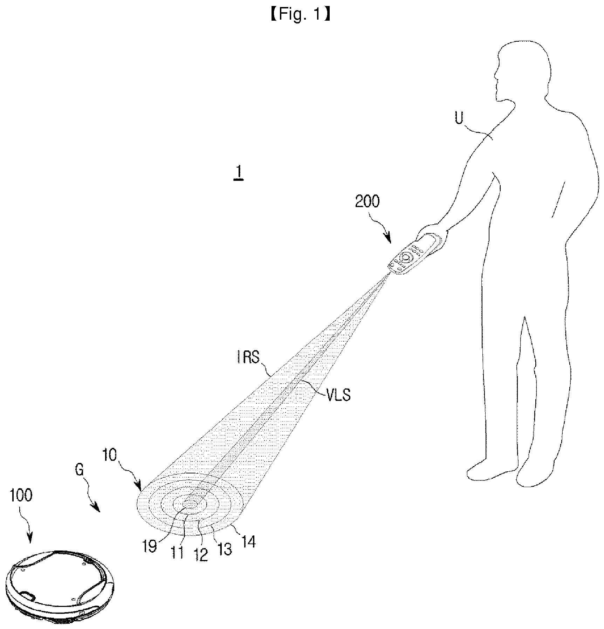

Hereinafter embodiments of a movable object, a movable object control system, a remote controller controlling the movable object, a robot cleaner, a robot cleaner control system and a remote controller controlling the robot cleaner will be described with reference to FIGS. 1 to 63.

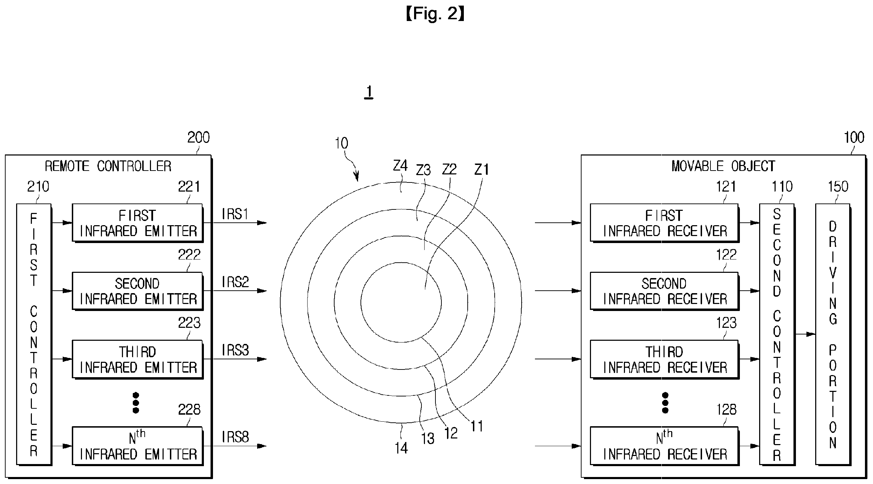

FIG. 1 is a view illustrating a movement control system of a movable object and FIG. 2 is a block diagram illustrating the movement control system of the movable object.

As illustrated in FIGS. 1 and 2, a movement control system of a movable object 1 may include a movable object 100 and a remote controller 200 controlling the movable object. When a remote control command is transmitted from the remote controller 200, the movable object 100 may move according to the remote control command transmitted from the remote controller 200.

The movable object 100 may move according to at least one of a predetermined set, which is set by itself, and a control command of the remote controller 200.

In a state in which the movable object 100 moves in the cleaning region according to the predetermined movement pattern, when a remote control command is transmitted, the movable object 100 may move according to the transmitted control command, or in a state in which the movable object 100 is in a stopped state, when the remote control command is transmitted, the movable object 100 may move according to the transmitted control command. The predetermined movement pattern may include various movement paths, which is considered by a user, e.g., a straight line, a rotation, a curve movement, a circular movement, or a zig-zag movement, or a combination thereof. According to embodiments, the predetermined movement pattern may further include a moving direction or a movement path that is re-set due to the detection of the obstacle.

When the transmission of the remote control command is stopped from the remote controller 200, the movable object 100 may stop the movement according to the stop of the transmission of the remote control command, or may continue to move according to the predetermined movement pattern. The predetermined movement pattern is the same as the above mentioned.

A user (u) may move the movable object 100 by directly operating the remote controller 200. Through the remote controller 200, the user (u) may move the movable object 100, which is moving or stopped, to a direction desired by the user.

The remote controller 200 may transmit the control command to the movable object 100 according to the operation of the user (u). The remote controller 200 may transmit the control command to the movable object 100 by using visible light, infrared light, ultrasound waves, or various electromagnetic waves. The remote controller 200 may be provided with a visible light source, an infrared light source, an ultrasonic transducer, or an electromagnetic wave generator for emitting the visible light, the infrared light, the ultrasound waves, or the electromagnetic waves.

As illustrated in FIGS. 1 and 2, the remote controller 200 may emit the infrared light (IR) generated in the light source, to a ground (G), and the movable object 100 may receive the infrared light (IR) emitted to the ground (G). The remote controller 200 may determine a movement path or a moving direction based on a signal transmitted via the received infrared light (IR) and move according to the determined movement path or moving direction. The ground (G) may represent a bottom to which the infrared light (IR) is incident and may include a soil ground, a floor, or an aisle floor. In addition, the ground (G) may include a floor of a cleaning region to be cleaned by a robot cleaner 100a.

According to an embodiment, the remote controller 200 may emit a plurality of infrared lights (IR1 to IR4), and the movable object 100 may receive at least one of the plurality of infrared lights (IR1 to IR4). The movable object 100 may move by using at least one of the received plurality of infrared lights (IR1 to IR4). In this case, the movable object 100 may simultaneously receive at least two infrared lights (IR) among the plurality of infrared lights (IR1 to IR4).

Hereinafter for convenience of the description, the infrared light received by the movable object 100 may be referred to as infrared signal (IRS). Infrared signal (IRS) received by the movable object 100 may be formed by a single infrared light among infrared lights (IR1 to IR4), or a combination of at least two infrared lights among infrared lights (IR1 to IR4).

Hereinafter the remote controller 200 will be described in details.

Referring to FIG. 2, the remote controller 200 may include a first controller 210, and a plurality of infrared emitters 221 to 228.

The first controller 210 may control the overall operation of the remote controller 200, and may transmit the control signal to the plurality of infrared emitters 221 to 228 according to the operation of the user.

The plurality of infrared emitters may operate the light source to emit the infrared light. Particularly, the plurality of infrared emitters may include a first infrared emitter to n^{th} infrared emitter 221 to 228. "n" represents a natural number of 1 or more.

The first infrared emitter to the n^{th} infrared emitter 221 to 228 may emit a first infrared light to n^{th} infrared light (IR1 to IR8) corresponding to the first infrared emitter to the n^{th} infrared emitter 221 to 228. The first infrared emitter to the n^{th} infrared emitter 221 to 228 may be configured to emit infrared light in a different direction, to a different range, or in a different direction and a different range. "That a range to which an infrared light is emitted is a different" may represent that the size of a region, to which each infrared light (IR1 to IR8) is incident, is different from each other when the plurality of infrared lights (IR1 to IR8) is emitted to a plane in the same distance. In other words, "that a range to which an infrared light is emitted is a different" may represent that the size of the image generated on the ground (G) by each infrared lights (IR1 to IR4) is different from each other.

The plurality of infrared lights (IR1 to IR8) emitted from the first infrared emitter to the n^{th} infrared emitter 221 to 228 may reach an irradiation region 10 of the ground (G) and form an infrared light image in a certain shape. The irradiation region 10 may include a first irradiation region to a n^{th} irradiation region 11 to 14 according to the type of the infrared light (IR1 to IR8) reached to the irradiation region 10.

Hereinafter for convenience of the description, a region to which a k^{th} infrared light emitted from a k^{th} infrared emitter is reached may be referred to as "a k^{th} irradiation region". In other words, a region to which the first infrared light (IR1) emitted from the first infrared emitter 221 is incident may be referred to as a first irradiation region 11 and a region to which the second infrared light (IR2) emitted from the first infrared emitter 222 is incident may be referred to as a second irradiation region 12.

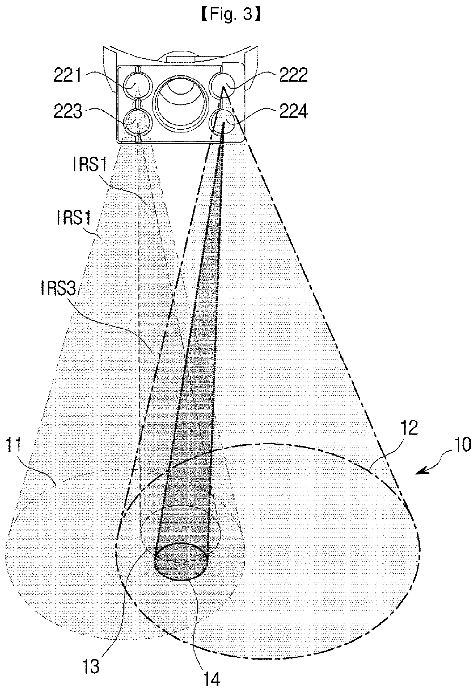

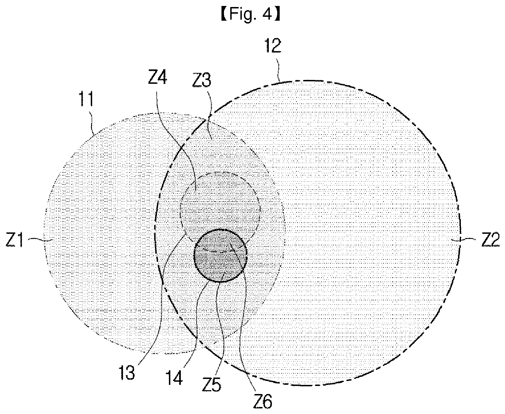

FIG. 3 is a view illustrating an irradiation region, and FIG. 4 is a view illustrating a unit zone.

The plurality of infrared lights (IR1 to IR8) emitted from the first infrared emitter to the n^{th} infrared emitter 221 to 228 may be entirely or partially overlapped. As a result, at least one of the first irradiation region to the fourth irradiation region 11 to 14 may be overlapped with other irradiation region 11 to 14. For example, referring to FIGS. 3 and 4, a part of the first irradiation region 11 may be overlapped with a part of the second irradiation region 12. An entire of the third irradiation region 13 or an entire of the fourth irradiation region 14 may be placed in the first irradiation region 11 or the second irradiation region 12 and thus the entire of the third irradiation region 13 or the entire of the fourth irradiation region 14 may be overlapped with a part of the first irradiation region 11 or the second irradiation region 12.

The overlapped area and non-overlapped area of the first irradiation region to the fourth irradiation region 11 to 14 may be separated from each other. In other words, it is possible to distinguish each region on the infrared light image according to whether the infrared lights (IR1 to IR8) are overlapped or not, the number of the overlapped infrared lights (IR1 to IR8) or the type of the overlapped infrared lights (IR1 to IR8). Hereinafter each area distinguished according to the number or the type of the overlapped infrared light (IR1 to IR8) may be referred to as "unit zone (z1 to z4)". Unit zone (z1 to z4) may be referred to as a first zone to a n^{th} zone. "n" represents a natural number of 1 or more. The number of the overlapped infrared lights (IR1 to IR8) may be a natural number of 1 or more, and when the number of the overlapped infrared light (IR1 to IR8) is 1, it may represent that a zone is formed such that a single infrared light among infrared lights (IR1 to IR8) is emitted. In each unit zone (z1 to z4), the number of the overlapped infrared lights (IR1 to IR8) or the type of the emitted or overlapped infrared light may be different from each other.

For example, referring to FIG. 2, a first unit zone (z1) may represent a zone to which all of infrared lights (IR1 to IR8) are reached, and a second unit zone (z2) may represent a zone to which the infrared lights (IR2 to IR8) except for the first infrared light (IR1) are reached.

For another example, referring to FIG. 4, a first unit zone (z1) may represent a zone to which the first infrared light (IR1) is reached, and a second unit zone (z2) may represent a zone to which the second infrared light (IR2) is reached. A third unit zone (z3) may represent a zone in which the first infrared light (IR1) and the second infrared light (IR2) are overlapped, and a fourth unit zone (z4) may represent a zone in which the first infrared light (IR1), the second infrared light (IR2), and the third infrared light (IR3) are overlapped. A fifth unit zone (z5) may represent a zone in which the first infrared light (IR1), the second infrared light (IR2), and the fourth infrared light (IR4) are overlapped, and a sixth unit zone (z6) may represent a zone in which the first infrared light (IR1), the second infrared light (IR2), the third infrared light (IR3) and the fourth infrared light (IR4) are overlapped.

As illustrated in FIGS. 2 to 4, the distinguished unit zone (z1 to z4) may be separated from other unit zone (z1 to z4) by an entire or a part of the boundary line of the irradiation region 11 to 14.

For example, referring to FIG. 2, the first unit zone (z1) may be separated from the second unit zone (z2) by the boundary line of the first irradiation region 11 formed by the first infrared light (IR1). Similarly, the second unit zone (z2) may be separated from the first unit zone (z1) by the boundary line of the first irradiation region 11 formed by the first infrared light (IR1) and separated from the third unit zone (z3) by the boundary line of the second irradiation region 12 formed by the second infrared light (IR2).

According to embodiments, a visible light irradiation region 19 formed by the irradiation of the visible light (VLS) may be formed in the inside of the irradiation region 10 or formed adjacent to the irradiation region 10, as illustrated in FIG. 1. Since the visible light can be seen by the user, the user may easily recognize the position of the infrared irradiation region formed by the infrared lights (IR1 to IR8) that cannot be seen by the user.

The movable object 100 may include at least one infrared receiver 121 to 128, a second controller 110 and a driving portion 150.

The at least one infrared receiver may include a first infrared receiver to a n^{th} infrared receiver 121 to 128, wherein the first infrared receiver to the n^{th} infrared receiver 121 to 128 may be configured to detect at least one of the infrared light (IR1 to IR8) emitted to the first irradiation region to the n^{th} irradiation region 11 to 14 from the remote controller 200, respectively. Each of the infrared receivers 121 to 128 may be installed in a different position of the movable object 100. The infrared receivers 121 to 128 may receive all of the infrared light (IR1 to IR8) or may not receive any of the infrared light (IR1 to IR8) according to the installation position in the movable object 100 or the position of the first irradiation region to the n^{th} irradiation region 11 to 14.

When at least one of the infrared receivers 121 to 128 receives each of the infrared lights (IR1 to IR8), the at least one of the infrared receivers 121 to 128 may output an electrical signal corresponding to the received infrared light (IR1 to IR8) and transmit the output electrical signal to the second controller 110.

The second controller 110 may determine a moving direction of the movable object 100 based on the infrared lights (IR1 to IR8) received by the infrared receivers 121 to 128. According to an embodiment, the second controller 110 may recognize and identify the each unit zone (z1 to z4) and then control the movement of the movable object 100 according to the recognized and identified unit zone (z1 to z4).

Particularly, since the unit zone (z1 to z4) is distinguished from each other according to whether the infrared lights (IR1 to IR8) are overlapped or not, the number of the overlapped infrared lights (IR1 to IR8) or the type of the overlapped infrared lights (IR1 to IR8), the second controller 110 may determine the number of the overlapped infrared lights (IR1 to IR8) based on the electrical signal transmitted via each infrared receiver 121 and thus recognize and identify each unit zone (z1 to z4). A method in which the second controller 110 recognizes and identifies each unit zone (z1 to z4) will be described later.

Based on the recognized and identified unit zone (z1 to z4), the second controller 110 may determine at least one of whether to move the movable object 100, a moving direction, whether to rotate the movable object 100, a rotation direction, and a movement pattern or a movement path. The second controller 110 may transmit a control signal corresponding to a result of determination to the driving portion 150 so as to move or rotate the movable object 100.

The driving portion 150 may be driven according to the transmitted control signal so as to move the movable object 100. The driving portion 150 may include at least one of a wheel, a rail and a leg for walking, and may further include a motor configured to drive the wheel, the rail or the leg.

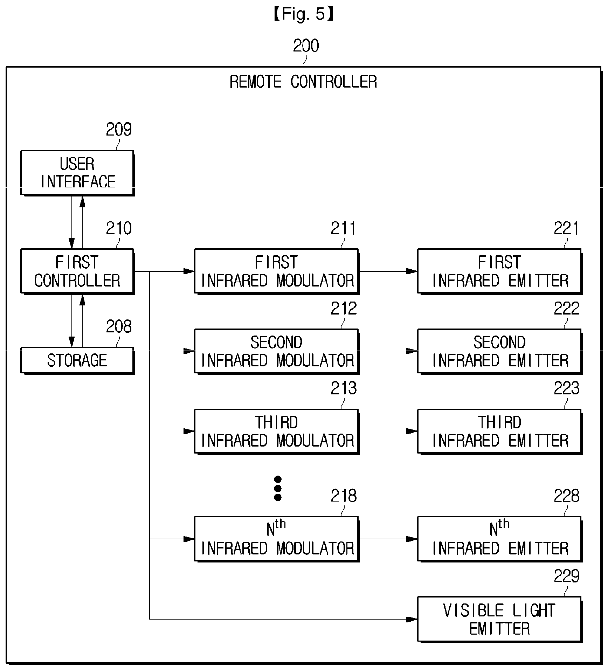

Hereinafter various embodiments of a remote controller will be described in details with reference to FIGS. 5 to 34.

A first embodiment of a remote controller will be described with reference to FIGS. 5 to 20.

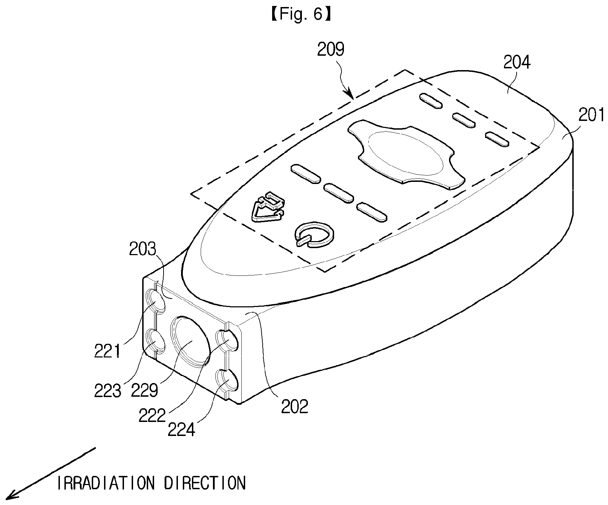

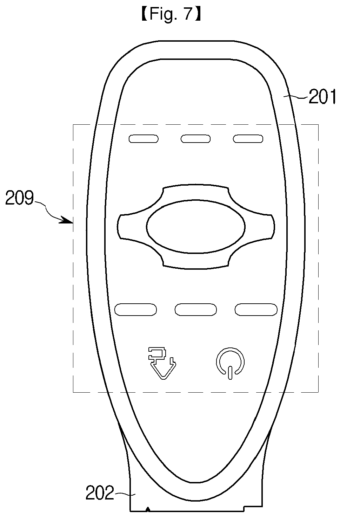

FIG. 5 is a block diagram illustrating the remote controller in accordance with the first embodiment, and FIG. 6 is a perspective view illustrating an appearance of a remote controller in accordance with a first embodiment of the present disclosure. FIG. 7 is a plan view illustrating the appearance of the remote controller in accordance with the first embodiment.

As illustrated in FIGS. 5 and 6, the remote controller 200 may include an exterior housing 201 forming an appearance thereof, and a front end assembly 202 may be provided in a front end portion of the exterior housing 201.

A variety of components such as a semiconductor chip, a printed circuit board, or a power device, e.g., a battery, which are needed for the operation of the remote controller 200 may be embedded in the inside of the exterior housing 201. A first user interface 209 may be provided on an upper surface of the exterior housing 201, and thus an input device such as a variety of buttons and an output device such as a display may be provided on the upper surface of the exterior housing 201.

A plurality of infrared emitters 221 to 228 and at least one visible light emitter 229 may be formed in the front end assembly 202. The front end assembly 202 may form a part of the exterior housing 201 and protrude in an irradiation direction of the infrared light in the exterior housing 201. The front end assembly 202 may be integrally formed with the exterior housing 201. Alternatively, the front end assembly 202 may be formed separately from the exterior housing 201 and then assembled with the exterior housing 201. The front end assembly 202 will be described later.

As illustrated in FIG. 7, the remote controller 200 may include a first controller 210, a first storage 208, the first user interface 209, a first infrared modulator to a n^{th} infrared modulator 211 to 218, a first infrared emitter to a n^{th} infrared emitter 221 to 228, and a visible light emitter 229.

The first controller 210 may transmit a signal to each infrared modulator 211 to 218 according to a user command, which is transmitted from the first user interface 209, so that the infrared modulator 211 to 218 modulates the signal. The first controller 210 may transmit a control signal to the infrared emitter 221 to 228 so that the infrared emitter 221 to 228 emits the infrared light corresponding to the modulated signal. In addition, the first controller 210 may transmit a control signal to the visible light emitter 229 so that the visible light emitter 229 emits the visible light to the ground (G). The control signal transmitted to the infrared modulator 211 to 218 or the visible light emitter 229 may be implanted in the form of electrical signal.

The first controller 210 may control the infrared modulator 211 to 218 or the infrared emitter 221 to 228 so that infrared signals transmitted from the infrared emitter 221 to 228 are synchronized with each other.

The first controller 210 may control a display of the first user interface 209 so that the display of the first user interface 209 outputs a certain character, a certain symbol, or an image, wherein the image may include at least one of a still image and a moving image. The first controller 210 may control a speaker of the first user interface 209 so that the speaker of the first user interface 209 may output a certain sound. When a motor configured to vibrate the remote controller 200 through the first user interface 209 is provided, the first controller 210 may transmit a control signal to the motor so as to vibrate the remote controller 200.

The first storage 208 may temporarily or non-temporarily store a variety of information that is needed for the control of the first controller 210. The first storage 208 may be implemented by a volatile memory device or a non-volatile memory device and may include a RAM or a ROM.

The first controller 210 may include a processor. The first controller 210 and the first storage 208 may be implemented by one or more semiconductor chip and a related component installed on the substrate embedded in the exterior housing 201.

The first user interface 209 may receive a variety of command from a user. The variety of command input from the user may include whether to operate the remote controller, whether to emit the infrared light and the visible light or a variety of commands related to the operation of the movable object 100.

The first user interface 209 may be implemented by a variety of input devices, e.g., various physical buttons, knobs, touch pads, touch screens, joy sticks or wheels. The input devices may generate an electrical signal corresponding to the user operation, according to the user operation, and transmit the generated electrical signal to the first controller 210 through a circuit or a cable.

In addition, the first user interface 209 may provide a variety of information to the user. The first user interface 209 may include a light emitting diode (LED) lamp, a display formed of a light emitting diode, a liquid crystal display (LCD), or a display formed of an organic light emitting diode (OLED). By displaying predetermined characters, symbols or images in accordance with the electrical signal from the first controller 210, the display may provide the state of the remote controller 200 or a variety of information, which is needed for the control of the movable object 100. According to embodiments, the first user interface 209 may further include an output device such as a speaker outputting sound or a motor vibrating the remote controller 200.

As described above, the first user interface 209 may be provided on the upper surface 204 of the exterior housing 201.

The infrared modulator 211 to 218 may modulate a signal transmitted from the first controller 210. A single infrared modulator 211 to 218 may correspond to a single infrared emitter 221 to 228. Therefore, the number of the infrared modulator 211 to 218 may be identical to the number of the infrared emitter 221 to 228.

The infrared emitter 221 to 228 may emit the infrared light to the outside according to the modulated signal. As illustrated in FIG. 5, a plurality of infrared emitters 221 to 228 may be provided in a single remote controller 200, and each infrared emitters 221 to 228 may be configured to emit the infrared light to at least one of the different direction or the different range.

As for the infrared emitter 221 to 228, four infrared emitters may be provided or three infrared emitters may be provided. Alternatively, two infrared emitters may be provided. According to embodiments, five infrared emitters may be provided, but is not limited thereto. In consideration with a designer, the number of the infrared emitter 221 to 228 installed in the remote controller 200 may vary.

According to an embodiment, the infrared emitter 221 to 228 may emit the infrared light such that at least one of the size and the direction of the irradiation region 11 to 14 is different from each other.

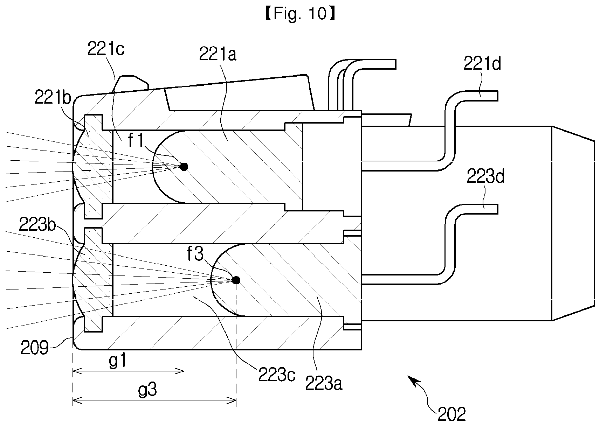

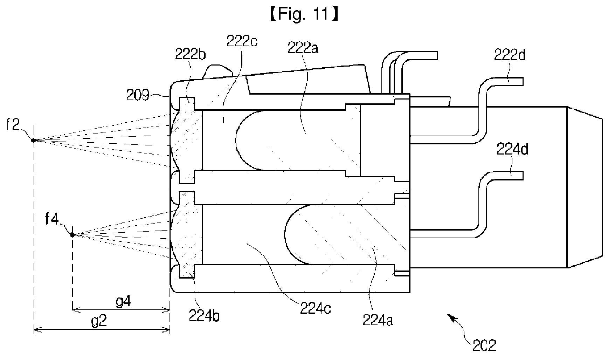

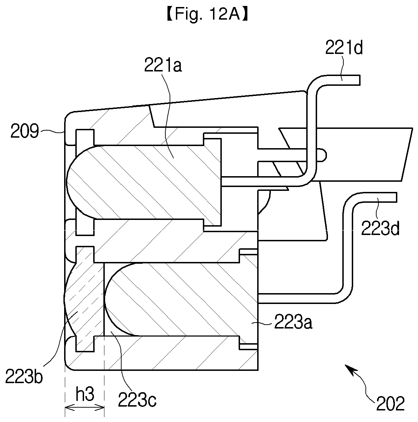

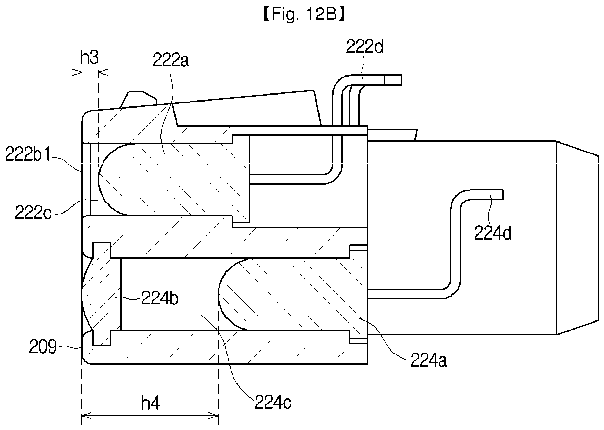

The infrared emitter 221 to 228 may allow the size of the irradiation region 11 to 14 to be different from each other by allowing at least one of lens 221b of FIG. 10 to 224b of FIG. 11 and a tube 222c of FIG. 12A to 224c of FIG. 12B to be different from each other. Particularly, the infrared emitter 221 to 228 may allow at least one of the lens 221b to 224b and the tube 222c to 224c to be different from each other by changing the type or the presence of the lens 221b to 224b or the presence or the length (h2 to h4) of the tube 222c to 224c.

The infrared emitter 221 to 228 may allow the direction of the irradiation region 11 to 14 to be different from each other by allowing the irradiation direction of the infrared light to be different from each other.

A method in which the infrared light is emitted to allow at least one of the size and the direction of the irradiation region 11 to 14 to be different from each other, will be described later in details.

Hereinafter a case in which the front end assembly 202 and the first infrared emitter to the fourth infrared emitter 221 to 224 provided in the front end assembly 202 are provided when four infrared emitters 221 to 228 are provided, will be described.

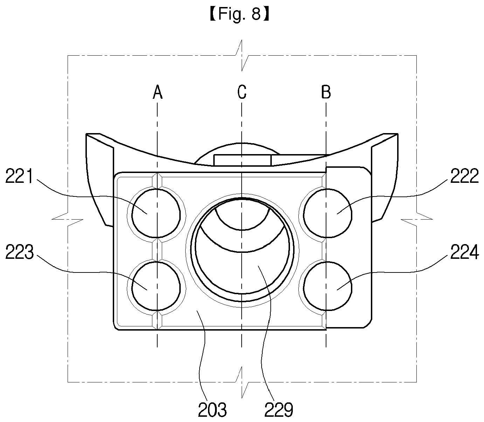

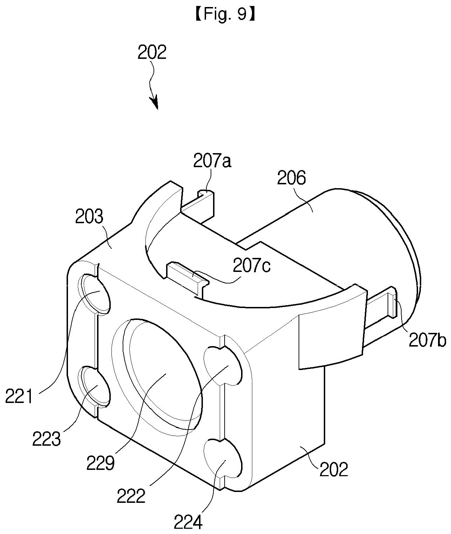

FIG. 8 is a front view illustrating the front end assembly provided with four infrared emitters in the remote controller in accordance with the first embodiment, and FIG. 9 is a perspective view illustrating the front end assembly provided with four infrared emitters in the remote controller.

According to an embodiment, as illustrated in FIG. 8, in the front end assembly 202, four infrared emitters 221 to 224 may be installed to emit the infrared light to a certain direction and the visible light emitter 229 may be installed to emit the visible light (VLS) to a direction the same as or similar with the direction to which the infrared light is emitted. A front surface 203 of the front end assembly 202 may have a rectangular shape, and the four infrared emitters 221 to 224 may be installed around four corners of the rectangular, respectively. At the center of the front surface 203 of the front end assembly 202, the visible light emitter 229 may be installed.

In the rear side of the front end assembly 202, a portion such as a circuit or a connecting cable, configured to connect among various printed circuit board or circuit, the infrared emitter 221 to 224 or the visible light emitter 229, which are embedded in the exterior housing 201, may be embedded. In addition, a connecting portion 206 inserted into a groove (not shown) provided in the exterior housing 201 may be provided in the rear side of the front end assembly 202.

In the front end assembly 202, a hook 207a to 207c configured to be fixed to the exterior housing 201 may be provided. The hook may be inserted into a locking groove provided in the exterior housing 201 to fix the front end assembly 202 and the exterior housing 201. Alternatively, the hook 207a to 207c may be provided on the outer surface of the front end assembly 202.

Hereinafter an internal structure of the front end assembly 202 according to an embodiment will be described with reference to FIGS. 10 and 11.

FIGS. 10 and 11 are cross-sectional views illustrating lens. FIG. 10 is a cross-sectional view taken along line A of FIG. 8, and FIG. 11 is a cross-sectional view taken along line C of FIG. 8.

Referring to FIG. 10, the first infrared emitter 221 may include a first infrared illuminating portion 221a, a first lens 221b, a first tube 221c and a first signal transmitter 221d.

The first infrared illuminating portion 221a may irradiate the infrared light corresponding to the signal, which is modulated by the first infrared modulator 211, according to the control signal transmitted from the first controller 210. The first infrared illuminating portion 221a may be implemented by light emitting devices, e.g., a light emitting diode, configured to output the infrared light.

The first lens 221b may converge the first infrared light (IR1) emitted from the first infrared illuminating portion 221a, to a certain focus (f1) or may diverge the first infrared light (IR1). Accordingly, the first infrared light may be diffused or converged. One surface of the first lens 221b may be exposed to the outside through the front surface 203 of the front end assembly 202 or the other surface of the first lens 221b may be directed to the first tube 221c.

The first tube 221c may represent a tube configured to maintain a certain distance between the first infrared illuminating portion 221a and the first lens 221b, and according to embodiments, the first tube 221c may be formed in the shape of cylinder. The first tube 221c may reflect the infrared light emitted from the first infrared illuminating portion 221a to the inside so that the infrared light is moved to the direction of the first lens 221b. For this, the first tube 221c may be formed of a material capable of reflecting light, e.g. infrared light. According to embodiments, a material may be applied to the inner surface of the first tube 221c to reflect the light.

The first signal transmitter 221d may electrically connect the first infrared illuminating portion 221a, the first infrared modulator 211, the first controller 210 or the power source. The first signal transmitter 221d may transmit a signal modulated by the first infrared modulator 211, the control signal transmitted from the first controller 210, or the power transmitted from the power source, to the first infrared illuminating portion 221a. The first infrared illuminating portion 221a may irradiate the infrared light corresponding to the signal, which is modulated by the first infrared modulator 211, by using the power transmitted from the power source according to the control signal transmitted from the first controller 210.

Some thereof may be omitted. For example, the first tube 221c may be omitted according to embodiments.

A second infrared emitter 212 may include a second infrared illuminating portion 222a, a second lens 222b, a second tube 222c and a second signal transmitter 222d. A third infrared emitter 213 may include a third infrared illuminating portion 223a, a third lens 223b, a third tube 223c and a third signal transmitter 223d. A fourth infrared emitter 214 may include a fourth infrared illuminating portion 224a, a fourth lens 224b, a fourth tube 224c and a fourth signal transmitter 224d. As needed, some thereof may be omitted. For example, the tube 222c, 223c, and 224c may be omitted.

The second infrared illuminating portion 222a, the third infrared illuminating portion 223a, and the fourth infrared illuminating portion 224a may have the function or the structure identical to or similar to the above mentioned first infrared illumination 221a. The second tube 222c, the third tube 223c, and the fourth tube 224c may have the function or the structure identical to or similar to the above mentioned first tube 221c. The second signal transmitter 222d, the third signal transmitter 223d, and the fourth signal transmitter 224d may have the function or the structure identical to or similar to the above mentioned first signal transmitter 221d.

In the same manner as the first lens 221b, the second lens 222b, the third lens 223b, and the fourth lens 224b may converge the infrared light emitted from the second infrared illuminating portion 222a, the third infrared illuminating portion 223a, and the fourth infrared illuminating portion 224a to a certain focus (f2 to f4) or may diverge the infrared light.

According to an embodiment, the second lens 222b may diverge or converge the second infrared light emitted from the second infrared illuminating portion 222a, which is different from the first lens 221b. The third lens 223b may diverge or converge the third infrared light emitted from the third infrared illuminating portion 223a which is different from the first lens 221b and the second lens 222b. The fourth lens 224b may diverge or converge the fourth infrared light emitted from the fourth infrared illuminating portion 224a which is different from the first lens 221b, the second lens 222b, and the third lens 223b. Therefore, the first lens 221b, the second lens 222b, the third lens 223b, and the fourth lens 224b may differently converge or diverge the first infrared light to the fourth infrared light emitted from the first infrared illuminating portion 221a to the fourth infrared illuminating portion 224a, from each other.

For example, the first lens 221b may emit the first infrared light (IR1) emitted from the first infrared illuminating portion 221a, so as to irradiate the first infrared light (IR1) to the outside. The third lens 223b may emit the third infrared light (IR3) emitted from the third infrared illuminating portion 223a, so as to irradiate the third infrared light (IR3) to the outside, wherein a third focal length (g3), i.e., a focal length of the third lens 223b, may be different from a first focal length (g1), i.e., a focal length of the first lens 221b. Therefore, the size of the first irradiation region 11 of the first infrared light (IR1), which is irradiated to the outside via the first lens 221b, may be different from the size of the third irradiation region 13 of the third infrared light (IR3), which is irradiated to the outside via the third lens 223b. As illustrated in FIG. 10, when the third focal length (g3) is longer than a second focal length (g2), the third irradiation region 13 may be smaller than the first irradiation region 11 on the ground (G).

In addition, the second lens 222b may allow the second infrared light (IR2) emitted from the second infrared illuminating portion 222a to be converged to the second focus (f2) provided in the front side, and the fourth lens 224b may allow the fourth infrared light (IR4) emitted from the fourth infrared illuminating portion 224a to be converged to the fourth focus (f4) provided in the front side. In this case, a second focal length (g2) may be different from a fourth focal length (g4). Therefore, the size of the second irradiation region 12 of the second infrared light (IR2), which is irradiated to the outside via the second lens 222b, may be different from the size of the fourth irradiation region 14 of the fourth infrared light (IR4), which is irradiated to the outside via the fourth lens 224b. As illustrated in FIG. 11, when the second focal length (g2) is longer than the fourth focal length (g4), the fourth irradiation region 14 may be smaller than the second irradiation region 12 on the ground (G).

As mentioned above, when the first lens 221b and the third lens 223b emit the first infrared light and the third infrared light according to the different focus (f1 and f3) and also when the second lens 222b and the fourth lens 224b converge the second infrared light and the fourth infrared light according to the different focus (f2 and f4), the size of the first irradiation region to the fourth irradiation region 11 to 14, which are generated by the infrared light emitted from the first infrared emitter 221 to the fourth infrared emitter 224, may be different from each other.

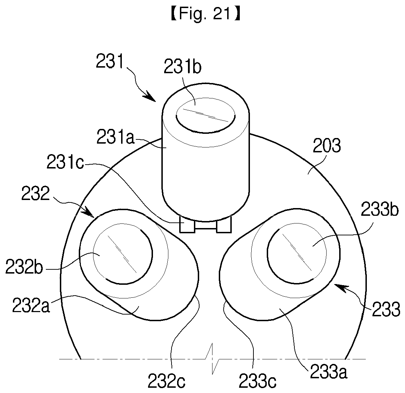

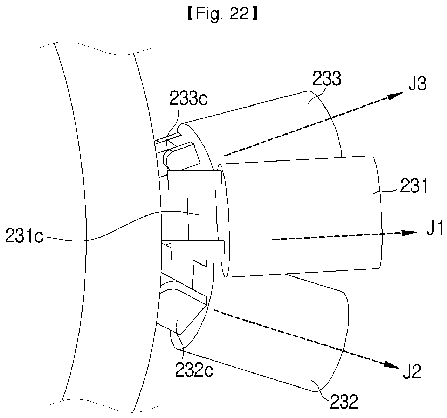

In this case, when the irradiation direction of the first infrared emitter 221 to the fourth infrared emitter 224 is different from each other, the size and the position of the first irradiation region 11 to the fourth irradiation region 14 may be different from each other. For example, the first infrared emitter 221 to the fourth infrared emitter 224 may include a first infrared guide portion to a fourth infrared guide portion 241 to 243 (refer to FIGS. 21 and 22), wherein the first infrared guide portion to the fourth infrared guide portion 241 to 243 may be directed to the different direction and thus the first infrared emitter 221 to the fourth infrared emitter 224 may irradiate the first infrared light to the fourth infrared light (IR1 to IR4) to the different direction. In other words, the first infrared guide portion 241 may be provided to face the first direction, and the second infrared guide portion 242 may be provided to face the second direction that is different from the first direction.

Hereinafter an internal structure of the front end assembly 202 according to another embodiment will be described with reference to FIGS. 12A and 12B.

FIG. 12A is a cross-sectional view illustrating the first infrared emitter and the second infrared emitter of the remote controller in accordance with the first embodiment, and FIG. 12B is a cross-sectional view illustrating the third infrared emitter and the fourth infrared emitter of the remote controller in accordance with the first embodiment. FIGS. 12A and 12B are cross-sectional views taken along line A and C of FIG. 8 of the front end assembly.

Referring to FIG.S 12A and 12B, the first infrared emitter 221 may include a first infrared illuminating portion 221a, and a first signal transmitter 221d. According to embodiments, the first infrared emitter 221 may further include a first lens (not shown in FIG. 12A) and a first tube (not shown in FIG. 12A).

A second infrared emitter 212 may include a second infrared illuminating portion 222a, a second tube 222c and a second signal transmitter 222d. The second infrared emitter 212 may further include a cover 222b1 instead of a second lens, wherein the cover 222b1 may be formed of a material to which light is transmitted, e.g., glass or plastic, so as to protect the second infrared illuminating portion 222a in the inside of the second infrared emitter 212. As needed, the second infrared emitter 212 may further include a second lens (not shown in FIG. 12B)

A third infrared emitter 213 may include a third infrared illuminating portion 223a, a third lens 223b, a third tube 223c and a third signal transmitter 223d.

A fourth infrared emitter 214 may include a fourth infrared illuminating portion 224a, a fourth lens 224b, a fourth tube 224c and a fourth signal transmitter 224d.

The first infrared illuminating portion 221a, the second infrared illuminating portion 222a, the third infrared illuminating portion 223a, and the fourth infrared illuminating portion 224a may have the function or the structure identical to or similar to the first infrared illuminating portion 221a as illustrated in FIG. 10. The first signal transmitter 221d, the second signal transmitter 222d, the third signal transmitter 223d, and the fourth signal transmitter 224d may have the function or the structure identical to or similar to the first signal transmitter 221d as illustrated in FIG. 10.

The second tube 222c, the third tube 223c and the fourth tube 224c may maintain a certain distance between the infrared illuminating portion 222a, 223a and 224a and the lens 222b, 223b and 224b corresponding to the infrared illuminating portion 222a, 223a and 224a. A length (h2) of the second tube 222c, a length (h3) of the third tube 223c, and a length (h4) of the fourth tube 224c may be different from each other.

The field of view of the infrared light emitted from the first infrared illuminating portion to the fourth infrared illuminating portion 222a, 222a, 223a and 224a may be different from each other according to the length or the presence of the tube 222c, 223c and 224c. In other words, when the length (h2 to h4) of the tube 222c, 223c and 224c is different from each other or when the tube is not present as the first infrared emitter 221, the irradiation region 11 to 14 irradiated to the ground (G) may be different from each other. Particularly, as the length of the tube 222c, 223c and 224c is increased, the field of view of the infrared light may be relatively reduced, and in contrast, as the length of the tube 222c, 223c and 224c is reduced, the field of view of the infrared light may be relatively increased. Therefore, when the length (h2 to h4) of the tube 222c, 223c and 224c is different from each other or when the tube is removed, the irradiation region 11 to 14 to which the first infrared light to the fourth infrared light (IR1 to IR4) is emitted may be different from each other.

In this case, when the irradiation direction of the first infrared emitter 221 to the fourth infrared emitter 224 is different from each other, the size and the position of the first irradiation region 11 to the fourth irradiation region 14 may be different from each other. In this case, the first infrared emitter 221 to the fourth infrared emitter 224 may include a first infrared guide portion to a fourth infrared guide portion 241 to 243, wherein the first infrared guide portion to the fourth infrared guide portion 241 to 243 may be directed to the different direction and thus the first infrared emitter 221 to the fourth infrared emitter 224 may irradiate the first infrared light to the fourth infrared light (IR1 to IR4) to the different direction.

According to an embodiment, when the first infrared emitter 221 does not include a tube, and when the second infrared emitter to the fourth infrared emitter 222 to 224 include the tube 222c, 223c and 224c having a different length (h2 to h4), the third infrared emitter 223 and the fourth infrared emitter 224 may further include the third lens 223b and the fourth lens 224b which are different from each other. Particularly, as illustrated in FIGS. 10 and 11, the third lens 223b and the fourth lens 224b may be configured to converge or diverge the third infrared light and the fourth infrared light in the different range. In other words, it may be possible to allow the size of the irradiation region 11 to 14 to be different from each other by employing the different lens as well as by using the tube having the different length.

As mentioned above, the infrared emitter 221 to 224 may emit the infrared light to the different range according to the presence or the type of the lens 221b to 224b of the infrared emitter 221 to 224, or the presence or the length of the tube 222c, 223c and 224c. Accordingly, the infrared image, which is generated by the plurality of infrared light emitted to the different size irradiation region, may be generated on the ground (G).

Hereinafter an example of the infrared image formed on the ground (G) according to the infrared irradiation region will be described.

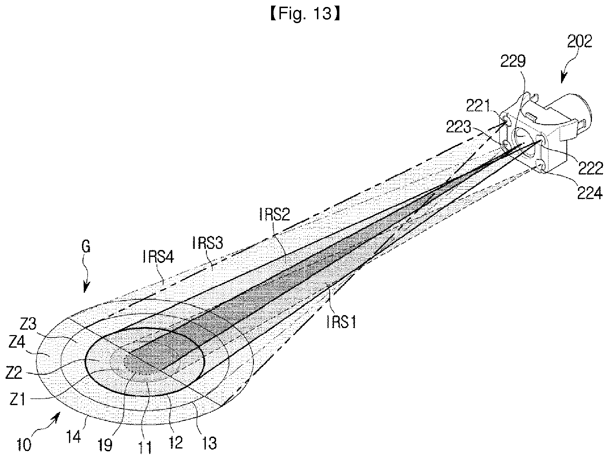

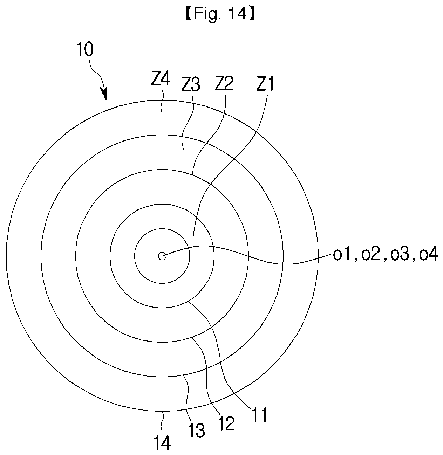

FIG. 13 is a view illustrating the infrared irradiation by the first infrared emitter to the fourth infrared emitter and the irradiation region formed on the ground. FIG. 14 is a view illustrating the first irradiation region to the fourth irradiation region and the first unit zone to the fourth unit zone formed on the ground according to the infrared irradiation by the first infrared emitter to the fourth infrared emitter.

As illustrated in FIG. 13, the first infrared light to the fourth infrared light (IR1 to IR4) emitted from the first infrared emitter to the fourth infrared emitter 221 to 224 provided in the front end assembly 202 may reach the ground (G) and generate the infrared image that cannot be seen by the naked eyes.

In this case, the first infrared emitter to the fourth infrared emitter 221 to 224 may emit the first infrared light to the fourth infrared light (IR1 to IR4) to places adjacent to each other. Particularly, the first infrared emitter to the fourth infrared emitter 221 to 224 may emit the first infrared light to the fourth infrared light (IR1 to IR4), such that the first irradiation region 11 generated by the first infrared light (IR1) is placed within the second irradiation region 12 generated by the second infrared light (IR2), the second irradiation region 12 is placed within the third irradiation region 13 generated by the third infrared light (IR3), and the third irradiation region 13 is placed within the fourth irradiation region 14 generated by the fourth infrared light (IR4). In this case, the infrared irradiation region formed by the first infrared light to the fourth infrared light (IR1 to IR4) may have a shape similar to a target board.

Each irradiation region 11 to 14 may have a circular shape and each central point (01 to 04) of the each irradiation region 11 to 14 may be matched to each other or may be not matched to each other. Alternatively, each irradiation region 11 to 14 may have an oval shape and in this case, a vertex of the each irradiation region 11 to 14 may be matched to each other or may be not matched to each other.

The each irradiation region 11 to 14 may be overlapped with each other, and the first unit zone to the fourth unit zone (z1 to z4) may be formed according to the number of the overlapped infrared light. In this case, the first unit zone (z1) may be an area in which the first infrared light to the fourth infrared light (IR1 to IR4) are overlapped, and the second unit zone (z2) may be an area in which the second infrared light to the fourth infrared light (IR2 to IR4) are overlapped. The third unit zone (z3) may be an area in which the third infrared light and the fourth infrared light (IR3 and IR4) are overlapped, and the fourth unit zone (z4) may be an area in which only the fourth infrared light (IR4) is irradiated.

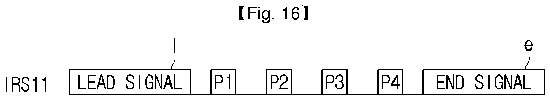

The movable object 100 may receive at least one of the first infrared light to the fourth infrared light (IR1 to IR4) and identify the unit zone (z1 to z4) according to the number of the overlapped infrared light (IR1 to IR4) based on the received infrared light (IR1 to IR4). In this case, the movable object 100 may receive an infrared signal (e.g., IRS11 to IRS 14 of FIGS. 16 to 19) that is reflected and then transmitted from the each unit zone (z1 to z4). By using the received infrared signal (IRS11 to IRS 14), the movable object 100 may acquire information related to the number of the overlapped infrared light (IR1 to IR4), the type of the overlapped infrared light (IR1 to IR4), or the type of infrared light (e.g., the fourth infrared light (IR4)), which is incident to the unit zone (e.g., the fourth unit zone (z4)) where the infrared light (IR1 to IR4) are not overlapped. The movable object 100 may identify the unit zone (z1 to z4) based on the acquired information. When the unit zone (z1 to z4) is identified, the movable object 100 may move based on the identified unit zone (z1 to z4).

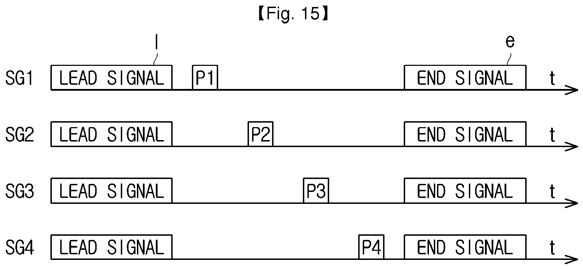

FIG. 15 is a view illustrating an example of a first identification signal to a fourth identification signal transmitted by the first infrared light to the fourth infrared light emitted by the first infrared emitter to the fourth infrared emitter. In FIG. 15, X axis represents time, and Y axis represents amplitude.

As illustrated in FIG. 15, the first infrared emitter to the fourth infrared emitter 221 to 224 may emit the plurality of infrared light including different identification signal (SG1 to SG4) so that the movable object 100 may identify the unit zone (z1 to z4).

Particularly, the first infrared emitter 221 may emit the first infrared light (IR1) including a first identification signal (SG1), the second infrared emitter 222 may emit the second infrared light (IR2) including a second identification signal (SG2), the third infrared emitter 223 may emit the third infrared light (IR3) including a third identification signal (SG3), and the fourth infrared emitter 224 may emit the fourth infrared light (IR4) including a fourth identification signal (SG4).

In this case, the first identification signal to the fourth identification signal (SG1 to SG4) each may include a lead signal (I), an end signal (e) and a pulse signal (p1 to p4).

The lead signal (I) represents a signal indicating the start of a transmitted signal, and the end signal (e) represents a signal indicating the end of a signal. The first identification signal to the fourth identification signal (SG1 to SG4) may be synchronized with each other by matching the start of the end of at least one of the lead signal (I) and the end signal (e). For example, the first identification signal and the second identification signal (SG1 and SG2) may be synchronized with each other by using a first lead signal of the first identification signal (SG1) and a second lead signal of the second identification signal (SG2), or by using a first end signal of the first identification signal (SG1) and a second end signal of the second identification signal (SG2).

The synchronization of the first identification signal to the fourth identification signal (SG1 to SG4) may be performed by the first controller 210 of the remote controller 200 or the second controller 110 of the movable object 100, or both of the second controller 110 and the first controller 210.

Pulse signal (p1 to p4) represents a signal for distinguishing the first identification signal to the fourth identification signal (SG1 to SG4) from each other. A first pulse signal (p1) of the first identification signal (SG1), a second pulse signal (p2) of the second identification signal (SG2), a third pulse signal (p3) of the third identification signal (SG3), and a fourth pulse signal (p4) of the fourth identification signal (SG4) may be output or present at different time when at least one of the start and the end of the lead signal (I) and the end signal (e) is matched, as illustrated in FIG. 15. In this case, the first controller 210 may generate the first identification signal (SG1) by outputting the lead signal (I), outputting the first pulse signal (p1) when a first time is expired, and outputting the end signal (e). The first controller 210 may transmit the first identification signal (SG1) to the first infrared modulator 211. The first controller 210 may generate the second identification signal (SG2) by outputting the lead signal (I), outputting the second pulse signal (p2) when a second time, which is longer than the first time, is expired, and outputting the end signal (e). The first controller 210 may transmit the second identification signal (SG2) to the second infrared modulator 212. Accordingly, the first identification signal (SG1) transmitted through the first infrared light (IR1) and the second identification signal (SG2) transmitted through the second infrared light (IR2) may be different from each other.

Although at least two of the first infrared light to the fourth infrared light (IR1 to IR4) are overlapped and thus each identification signal (SG1 to SG4) are mixed, it may be possible to easily determine whether the infrared light (IR1 to IR4) is overlapped or not, and which infrared light (IR1 to IR4) is overlapped, since the first pulse signal to the fourth pulse signal (p1 to p4) are output or present at the different time.

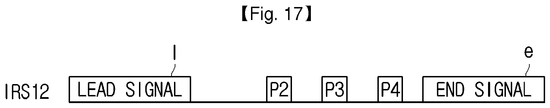

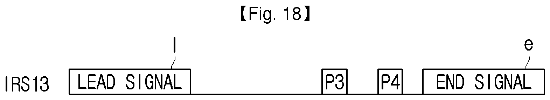

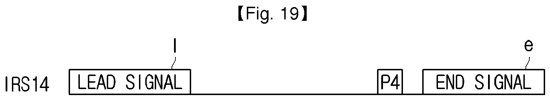

FIG. 16 is a view illustrating an example of an identification signal acquirable in the first unit zone according to the overlap of the infrared light, and FIG. 17 is a view illustrating an example of an identification signal acquirable in the second unit zone according to the overlap of the infrared light. FIG. 18 is a view illustrating an example of an identification signal acquirable in the third unit zone according to the overlap of the infrared light, and FIG. 19 is a view illustrating an example of an identification signal acquirable in the fourth unit zone according to the overlap of the infrared light. The example of the signal illustrated in FIGS. 16 to 19 will illustrate a signal, which is acquirable when the infrared image is generated, as illustrated in FIGS. 13 to 14, and the identification signal (SG1 to SG4) will be illustrated as in a state of being synchronized with each other by using at least one of the lead signal (I) and the end signal (e).

Particularly, in the first unit zone (z11) in which the first infrared light to the fourth infrared light (IR1 to IR4) are overlapped, all identification signal (SG1 to SG4), as illustrated in FIG. 15, may be mixed. Therefore, an infrared signal (IRS11) acquired in the first unit zone (z11) may include the lead signal (I), the end signal (e), and the first pulse signal to the fourth pulse signal (p1 to p4) disposed between the lead signal (I) and the end signal (e), as illustrated in FIG. 16.

In the second unit zone (z12) in which the second infrared light to the fourth infrared light (IR2 to IR4) are overlapped, the second identification signal to the fourth identification signal (SG2 to SG4) among the identification signal (SG1 to SG4), as illustrated in FIG. 15, may be mixed. Therefore, an infrared signal (IRS12) acquired in the second unit zone (z12) may include the lead signal (I), the end signal (e), and the second pulse signal to the fourth pulse signal (p2 to p4) disposed between the lead signal (I) and the end signal (e), as illustrated in FIG. 17.

In the third unit zone (z13) in which the third infrared light and the fourth infrared light (IR3 and IR4) are overlapped, the third identification signal and the fourth identification signal (SG3 to SG4) among the identification signal (SG1 to SG4), as illustrated in FIG. 15, may be mixed. Therefore, an infrared signal (IRS13) acquired in the third unit zone (z13) may include the lead signal (I), the end signal (e), and the third pulse signal and the fourth pulse signal (p3 and p4) disposed between the lead signal (I) and the end signal (e), as illustrated in FIG. 18.

In the fourth unit zone (z14) in which the fourth infrared light (IR4) is irradiated, the fourth identification signal (SG4) among the identification signal (SG1 to SG4), as illustrated in FIG. 15, may be present. Therefore, an infrared signal (IRS14) acquired in the fourth unit zone (z14) may include the lead signal (I), the end signal (e), and the fourth pulse signal (p4) disposed between the lead signal (I) and the end signal (e), as illustrated in FIG. 19.

As illustrated in FIGS. 16 to 19, since the infrared signal (IRS11 to IRS14) acquired from each unit zone (z11 to z14) are different from each other, the movable object 100 may identify each unit zone (z11 to z14) by using the received infrared signal (IRS11 to IRS14), and thus the movable object 100 may move along the identified unit zone (z11 to z14).

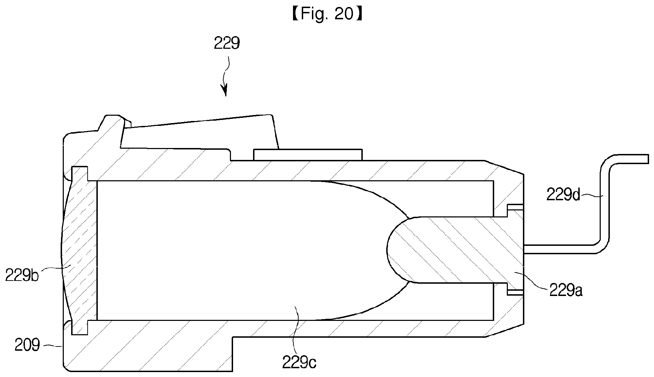

FIG. 20 is a side cross-sectional view illustrating an example of a visible light emitter provided in the infrared emitter. FIG. 20 is a cross-sectional view taken along line B of FIG. 8 of the front end assembly.

Referring to FIG. 20, the visible light emitter 229 may include a visible light illuminating portion 229a, a visible light emission lens 229b, a visible light emission tube 229c, and a visible light emission signal transmitter 229d.

The visible light illuminating portion 229a may output the visible light (VLS) according to the control signal transmitted from the first controller 210. The visible light illuminating portion 229a may be implemented by light emitting devices, e.g., a light emitting diode, configured to output the visible light (VLS). According to embodiments, the visible light illuminating portion 229a may output light in various colors, e.g., white, blue, red or green color.

The visible light emission lens 229b may converge or diverge the visible light (VLS) emitted from the visible light illuminating portion 229a. One surface of the visible light emission lens 229b may be exposed to the outside through the front surface 203 of the front end assembly 202 and the other surface of the visible light emission lens 229b may be directed to the visible light emission tube 229c.

The visible light emission tube 229c may represent a tube configured to maintain a certain distance between the visible light illuminating portion 229a and the visible light emission lens 229b, and according to embodiments, the visible light emission tube 229c may be formed in the shape of cylinder.

The visible light emission signal transmitter 229d may electrically connect the visible light illuminating portion 229a, the first controller 210 or the power source. The visible light emission signal transmitter 229d may transmit the control signal transmitted from the first controller 210, or the power transmitted from the power source, to the visible light illuminating portion 229a. The visible light illuminating portion 229a may irradiate the visible light (VLS) having a certain intensity, by using the power transmitted from the power source according to the control signal transmitted through the visible light emission signal transmitter 229d. The intensity of the visible light (VLS) may vary according to the designer's selection.

According to embodiments, some of the visible light illuminating portion 229a, the visible light emission lens 229b, the visible light emission tube 229c, and the visible light emission signal transmitter 229d may be omitted.

The visible light (VLS) output from the visible light illuminating portion 229a may be emitted to the outside via the visible light emission lens 229b, and then reach the visible light irradiation region 19 on the ground (G). The visible light (VLS) reaching the ground (G) may form a light spot.

The size of the visible light irradiation region 19 may be smaller than the size of the irradiation region 10. In this case, the visible light irradiation region 19 may be placed in a part of the irradiation region 10. For example, the visible light irradiation region 19 may be placed in the center of the irradiation region 10 or placed adjacent to the center of the irradiation region 10. The size of the visible light irradiation region 19 may be greater than the size of the irradiation region 10. In this case, the visible light irradiation region 19 may include the entire or part of the irradiation region 10. Alternatively, the visible light irradiation region 19 and the irradiation region 10 may be partially overlapped. In this case, the size of the visible light irradiation region 19 may be similar to the size of the irradiation region 10.

The user may be able to easily determine the position of the irradiation region 10 by recognizing the visible light irradiated to the visible light irradiation region 19. Therefore, the visible light emitter 229 may make it possible for the user to improve the convenience of the control of the movable object 100.

It has been described that four infrared emitters 221 to 224 are provided and each irradiation region is overlapped in the target board shape. However, the number of the infrared emitters 221 to 224 is not limited thereto, and thus two or three infrared emitters may be formed in the target board shape, as illustrated in FIGS. 13 and 14. Alternatively, five or more infrared irradiation regions may be formed in the target board shape.

Hereinafter according to a second embodiment, a remote controller provided with three infrared emitters 231 to 233 configured to emit infrared light in a different direction and a different range will be described with reference to FIGS. 21 to 31.

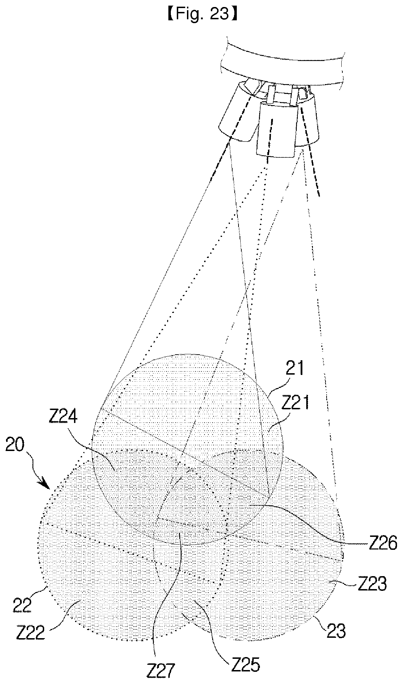

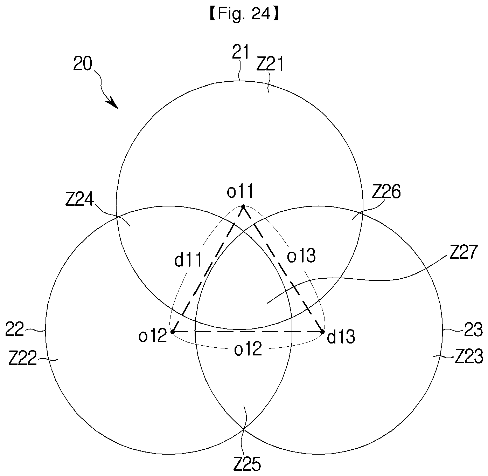

FIG. 21 is a front view illustrating a front end assembly in which three infrared emitters are provided, in a remote controller according to a second embodiment, and FIG. 22 is a side view illustrating the front end assembly of the remote controller according to the second embodiment. FIG. 23 is a view illustrating an irradiation region formed on the ground according to the infrared irradiation by a first infrared emitter to a third infrared emitter, and FIG. 24 is a view illustrating an example of a first irradiation region to a third irradiation region and a first unit zone to seventh unit zone formed on the ground according to the infrared irradiation by the first infrared emitter to the third infrared emitter.

As illustrated in FIGS. 21 and 22, a first infrared emitter to a third infrared emitter 231 to 233 may be provided on a front surface 203 of a remote controller 200, wherein the first infrared emitter to the third infrared emitter 231 to 233 may be provided to face the different direction (J1 to J3). Therefore, a first infrared light to a third infrared light (IR1 to IR3) emitted from the first infrared emitter to the third infrared emitter 231 to 233 may be irradiated to the different directions (J1 to J3).

The emitted first infrared light to third infrared light (IR1 to IR3) may be entirely or partially overlapped with each other. Particularly, as illustrated in FIGS. 23 and 24, at least two of a first irradiation region 21 to which a first infrared light (IR1) is irradiated, a second irradiation region 22 to which a second infrared light (IR2) is irradiated, and a third irradiation region 23 to which a third infrared light (IR3) is irradiated, may be overlapped with each other. According to the overlap thereof, a unit zone (z21, z22 and z23) in which the infrared light is not overlapped, and a unit zone (z 24, i.e., a region in which the first irradiation region 21 and the second irradiation region 22 are overlapped) in which the first infrared light (IR1) and the second infrared light (IR2) are overlapped, a unit zone (z 25, i.e., a region in which the second irradiation region 22 and the third irradiation region 23 are overlapped) in which the second infrared light (IR2) and the third infrared light (IR3) are overlapped, a unit zone (z 26, i.e., a region in which the first irradiation region 21 and the third irradiation region 23 are overlapped) in which the first infrared light (IR1) and the third infrared light (IR3) are overlapped, and a unit zone (z 27, i.e., a region in which the first irradiation region 21 to the third irradiation region 23 are overlapped) in which the first infrared light (IR1) to the third infrared light (IR3) are overlapped, may be present in the infrared irradiation region 20, and each unit zone may be divided by the boundary line of the first irradiation region 21 to the third irradiation region 23.

When each irradiation region 21 to 23 is formed in a circular shape or an approximately circular shape, a center point (o11, o12, and o13) of the first irradiation region to the third irradiation region 21 to 23 may be apart from each other by a certain distance (d11, d12 and d13) and the distance (d11, d12 and d13) between the center points (o11, o12, and o13) may vary according to the direction (J1, J2 and J3) of the first infrared emitter 231 to the third infrared emitter 233, and a distance between the remote controller 200 and the ground (G).

The first infrared emitter to the third infrared emitter 231 to 233 may irradiate the first infrared light to the third infrared light to the same range, or to the different range. When the first infrared emitter to the third infrared emitter 231 to 233 irradiate the first infrared light to the third infrared light to the same range, each circle 21 to 23 of FIG. 23 may have the same size or a similar size to each other. In contrast, when the first infrared emitter to the third infrared emitter 231 to 233 irradiate the first infrared light to the third infrared light to the different range, each circle 21 to 23 of FIG. 23 may have different size.

Hereinafter the structure of the first infrared emitter to the third infrared emitter 231 to 233 will be described in details.

The first infrared emitter to the third infrared emitter 231 to 233 may be installed on the above mentioned front end assembly 202. The first infrared emitter to the third infrared emitter 231 to 233 may receive a modulated electrical signal from the first infrared modulator 211 to 218 through a circuit or a connecting cable, which are embedded in the connecting portion 206 of the front end assembly 202. In addition, the first infrared emitter to the third infrared emitter 231 to 233 may irradiate the first infrared light to the third infrared light (IR1 to IR3) by receiving the control signal from the first controller 210.

The first infrared emitter 231 may include a first infrared emitter exterior housing 231a, a first lens 231b and a coupling portion 231c.

On one surface of the first infrared emitter exterior housing 231a, a transmission hole may be formed to allow the infrared light to be emitted, and the other surface of the first infrared emitter exterior housing 231a, the coupling portion 231c may be provided. In the inside of the first infrared emitter exterior housing 231a, a first infrared illuminating portion (not shown) and a first tube (not shown) may be provided. In the transmission hole, the first lens 231b may be installed. The function of the first infrared illuminating portion and the first tube may be the same as mentioned above.

The first lens 231b may be installed in the transmission hole by sealing the transmission hole, and converge or diverge the first infrared light (IR1) emitted from the first infrared illuminating portion.

The coupling portion 231c may connect the first infrared emitter exterior housing 231a to the front surface 203 of the remote controller 200 and particularly the coupling portion 231c may be provided to adjust the direction (J1) of the first infrared emitter exterior housing 231a within a certain range. In this case, the coupling portion 231c may connect the first infrared emitter exterior housing 231a to the front surface 203 of the remote controller 200 by using a hinge or a shaft according to an embodiment. The coupling portion 231c may allow the direction (J1) of the first infrared emitter exterior housing 231a to be adjusted by a manual operation or an automatic operation.

A second infrared emitter 232 may include a second infrared emitter exterior housing 232a, a second lens 232b and a coupling portion 232c.

On one surface of the second infrared emitter exterior housing 232a, a transmission hole to which the second lens 232b is installed may be formed to allow the infrared light to be emitted, and on the other surface of the second infrared emitter exterior housing 232a, the coupling portion 232c may be provided. In the inside of the second infrared emitter exterior housing 232a, a second infrared illuminating portion (not shown) and a second tube (not shown) may be provided. The function of the second infrared illuminating portion and the second tube may be the same as mentioned above.

The second lens 232b may converge or diverge the second infrared light emitted from the second infrared illuminating portion. The second lens 232b may converge or diverge the second infrared light (IR2) to a range the same as the first lens 231b, or a range different from the first lens 231b.

The coupling portion 232c may connect the second infrared emitter exterior housing 232a to the front surface 203 of the remote controller 200 and particularly the coupling portion 232c may be provided to adjust the direction (J2) of the second infrared emitter exterior housing 232a within a certain range.

A third infrared emitter 233 may include a third infrared emitter exterior housing 233a, a third lens 233b and a coupling portion 233c.

The third infrared emitter exterior housing 233a may be provided with a transmission hole to which the third lens 233b is installed and the coupling portion 233c. In the inside of the third infrared emitter exterior housing 233a, a third infrared illuminating portion (not shown) and a third tube (not shown) may be provided. The function of the third infrared illuminating portion and the third tube may be the same as mentioned above.

The third lens 233b may converge or diverge the third infrared light (IR3) emitted from the third infrared illuminating portion. The third lens 233b may converge or diverge the third infrared light (IR3), to a range the same as at least one of the first lens 231b and the second lens 232b, or a range different from at least one of the first lens 231b and the second lens 232b

The third coupling portion 233c may connect the third infrared emitter exterior housing 233a to the front surface 203 of the remote controller 200 and particularly the coupling portion 233c may be provided to adjust the direction (J3) of the third infrared emitter exterior housing 233a within a certain range.

According to embodiments, a visible light emitter (not shown) may be provided on the front surface 203 separated from the first infrared emitter to the third infrared emitter 231 to 233. The visible light emitter may irradiate the visible light to the infrared irradiation region or the surroundings of the infrared irradiation region so that the user may easily recognize the infrared irradiation region.

Hereinafter an infrared signal (IRS21 to IRS27) acquired in the above-mentioned unit zone (z21 to z27) will be described.

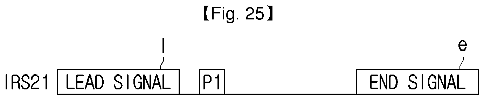

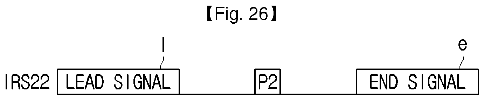

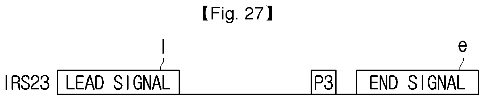

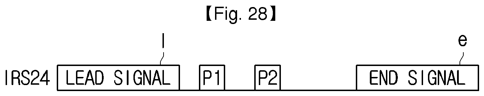

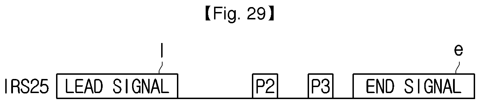

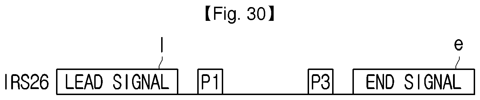

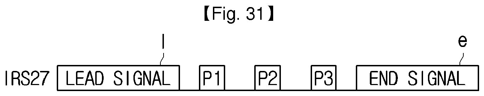

FIG. 25 is a view illustrating an example of an identification signal acquirable from an eleventh unit zone, according to the overlap of the infrared light, FIG. 26 is a view illustrating an example of an identification signal acquirable from a twelfth unit zone, according to the overlap of the infrared light, and FIG. 27 is a view illustrating an example of an identification signal acquirable from a thirteenth unit zone, according to the overlap of the infrared light. FIG. 28 is a view illustrating an example of an identification signal acquirable from a fourteenth unit zone, according to the overlap of the infrared light, FIG. 29 is a view illustrating an example of an identification signal acquirable from a fifteenth unit zone, according to the overlap of the infrared light, and FIG. 30 is a view illustrating an example of an identification signal acquirable from a sixteenth unit zone, according to the overlap of the infrared light. FIG. 31 is a view illustrating an example of an identification signal acquirable from a seventeenth unit zone, according to the overlap of the infrared light.

The first infrared light to the third infrared light (IR1 to IR3) emitted from the first infrared emitter to the third infrared emitter 231 to 233 each may include a first identification signal to a third identification signal (SG1 to SG3), as illustrated in FIG. 15. When the first infrared light to the third infrared light (IR1 to IR3) are overlapped, the first identification signal to the third identification signal (SG1 to SG3) may be mixed. In this case, since the first identification signal to the third identification signal (SG1 to SG3) are different from each other, and since each unit zone (z21 to z27) are different from each other according to whether the infrared light is overlapped or not, the type of the infrared light when the infrared light is not overlapped, the number of the overlapped infrared light or the type of the overlapped infrared light, it may be possible to identify each unit zone (z21 to z27) by using the mixed first identification signal to third identification signal (SG1 to SG3).

Referring to FIGS. 25 to 27, an infrared signal (IRS21) acquired in the first unit zone (z21) may include a lead signal, a first pulse signal (p1), and an end signal. An infrared signal (IRS22) acquired in the second unit zone (z22) may include the lead signal, a second pulse signal (p2), and the end signal, and an infrared signal (IRS23) acquired in the second unit zone (z23) may include the lead signal, a third pulse signal (p3), and the end signal.

Referring to FIGS. 28 to 30, an infrared signal (IRS24) acquired in the fourth unit zone (z24) may include the lead signal, a first pulse signal (p1), a second pulse signal (p2) and the end signal since the first infrared light (IR1) and the second infrared light (IR2) are overlapped in the fourth unit zone (z24). An infrared signal (IRS25) acquired in the fifth unit zone (z25) may include the lead signal, the second pulse signal (p2), a third pulse signal (p3) and the end signal since the second infrared light (IR2) and the third infrared light (IR3) are overlapped in the fifth unit zone (z25). An infrared signal (IRS26) acquired in the sixth unit zone (z26) may include the lead signal, the first pulse signal (p1), the third pulse signal (p3) and the end signal since the first infrared light (IR1) and the third infrared light (IR3) are overlapped in the sixth unit zone (z26).

Referring to FIG. 31, an infrared signal (IRS27) acquired in the seventh unit zone (z27) may include the lead signal, the first pulse signal (p1), the second pulse signal (p2), the third pulse signal (p3) and the end signal since the first infrared light (IR1) to the third infrared light (IR3) are overlapped in the seventh unit zone (z27).

Since the infrared signal (IRS 21 to IRS27) acquired in the each unit zone (z21 to z27) are different from each other, the movable object 100 may identify the each unit zone (z21 to z27).

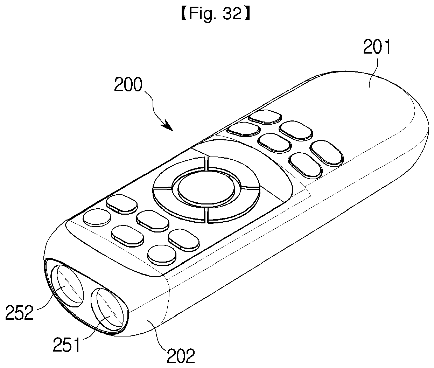

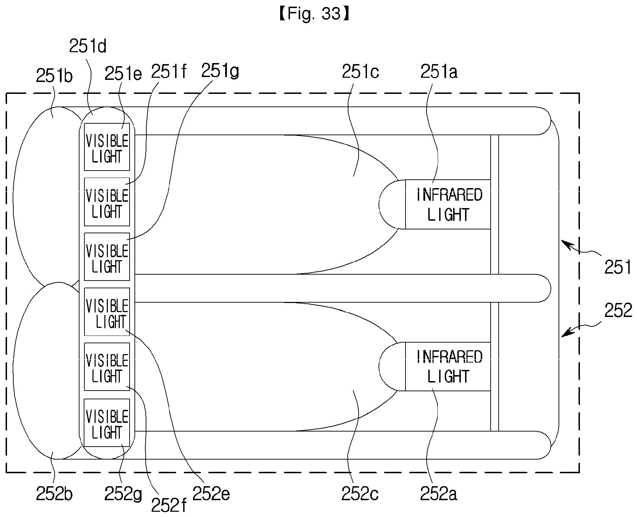

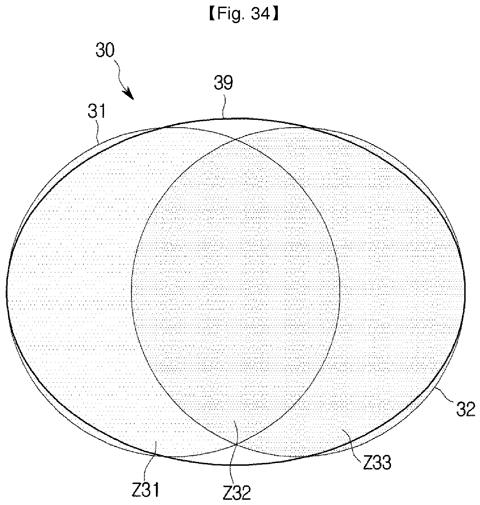

FIG. 32 is a perspective view illustrating a remote controller provided with two infrared emitters according to a third embodiment and FIG. 33 is a view illustrating an interior of a front end assembly in the remote controller provided with two infrared emitters according to the third embodiment. FIG. 34 is a view illustrating an example of a first irradiation region and a second irradiation region formed on the ground, by the infrared light emitted from the two infrared emitters.

As illustrated in FIGS. 32 and 33, the remote controller 200 may include the exterior housing 201 and the front end assembly 202 provided in the front end of the exterior housing. In the inside of the exterior housing 201, a variety of components needed for the operation of the remote controller 200 may be provided or in the outer surface of the exterior housing 201, a user interface may be provided. In the front end assembly 202, two infrared emitters 251 and 252 may be provided. The front end assembly 202 may be separately formed from the exterior housing 201 or the front end assembly 202 may be integrally formed with the exterior housing 201.

A first infrared emitter 251 may include a first infrared illuminating portion 251a, a first lens 251b, and a first tube 251c.

The first infrared illuminating portion 251a may irradiate the first infrared light (IR1) according to the control signal transmitted from the first controller 210 of the remote controller 200. The first infrared illuminating portion 251a may be implemented by light emitting devices, e.g., a light emitting diode.

The first lens 251b may converge the emitted first infrared light (IR1) to a certain focus (f1) or may diverge the first infrared light (IR1).

The first tube 251c may be configured to maintain a certain distance between the first infrared illuminating portion 251a and the first lens 251b, and the first tube 251c may be formed in the shape of cylinder.

The second infrared emitter 252 may include a second infrared illuminating portion 252a, a second lens 252b, and a second tube 252c.

The second infrared illuminating portion 252a may irradiate the second infrared light (IR2) according to the control signal transmitted from the first controller 210 of the remote controller 200. The second infrared illuminating portion 252a may be implemented by light emitting devices, e.g., a light emitting diode.

The second lens 252b may converge the emitted second infrared light (IR2) to a certain focus (f1) or may diverge the second infrared light (IR2). The second lens 252b may diverge or converge the second infrared light (IR2) to a range different from or the same as the first infrared light (IR1), which is converged or diverged via the first lens 251b.

The second tube 252c may be configured to maintain a certain distance between the second infrared illuminating portion 252a and the second lens 252b. According to embodiments, the width or the distance of the second tube 252c may be different from or the same as the width or the distance of the first tube 251c.

Between the first lens 251b and the first tube 251c, a lamp installing portion 251d in which a visible light lamp 251e to 251g outputting visible light is installed, may be provided. In the same way, between the second lens 252b and the second tube 252c, the lamp installing portion 251d in which a visible light lamp 252e to 252g outputting visible light is installed, may be provided. The lamp installing portion 251d may be extended from one end portion of the first infrared emitter 251 to one end portion of the second infrared emitter 252. In other words, a single lamp installing portion 251d may be provided between the first lens 251b and the first tube 251c and between the second lens 252b and the second tube 252c.

The visible light lamp 251e to 251g and 252e to 252g may be implemented by using a light emitting diode, and the visible light may be reached to a visible light irradiation region 39 in the inside of an infrared irradiation region 30 or adjacent to the infrared irradiation region 30 and thus a visible light image may be generated on the ground (G). The visible light irradiation region 39 to which the visible light is reached may be partially overlapped with the infrared irradiation region 30. The visible light irradiation region 39 may include entire of the infrared irradiation region 30.

The first infrared light (IR1) and the second infrared light (IR2) emitted from two infrared emitter 251 and 252 may reach the infrared irradiation region 30 on the ground (G). In this case, the first infrared light (IR1) may reach a first irradiation region 31 and the second infrared light (IR2) may reach a second irradiation region 32. As a result, the infrared image may be generated as illustrated in FIG. 34.

The first irradiation region 31 and the second irradiation region 32 may be partially overlapped. Therefore, the infrared irradiation region 30 may be divided into a first unit zone (z31) to which the first infrared light (IR1) is irradiated, a second unit zone (z32) to which the second infrared light (IR2) is irradiated, and a third unit zone (z33) in which the first infrared light (IR1) and the second infrared light (IR2) are overlapped.

As illustrated in FIG. 15, when the first infrared light (IR1) includes a first identification signal (SG1) and the second infrared light (IR2) includes a second identification signal (SG2), it may be possible to acquire the first identification signal (SG1) from the first unit zone (z31) and to acquire the second identification signal (SG2) from the second unit zone (z32) and it may be possible to acquire a mixed signal of the first identification signal (SG1) and the second identification signal (SG2) from the third unit zone (z33), as illustrated in FIG. 18.

Accordingly, the movable object 100 may identify each unit zone (z31, z32 and z33) and then move or rotate according to the identified unit zone (z31, z32 and z33).

The movable object 100 may identify the unit zone (z11 to z33) in the infrared irradiation region 10, 20 and 30 and move the according to the identified unit zone (z11 to z33). The movable object 100 may identify at least one unit zone (z11 to z33) by using at least one of the number of overlapped infrared light (IR1 to IR8), the type of emitted infrared light (IR1 to IR8) when the infrared light (IR1 to IR8) is not overlapped, and the type of the overlapped infrared light (IR1 to IR8) based on the received infrared light.

The movable object 100 may include robot cleaners, toy cars, and robots used in the household, industrial, medical or military purposes. In addition, the movable object 100 may include a variety of apparatuses in which the movement is controlled by using the remote controller 200.

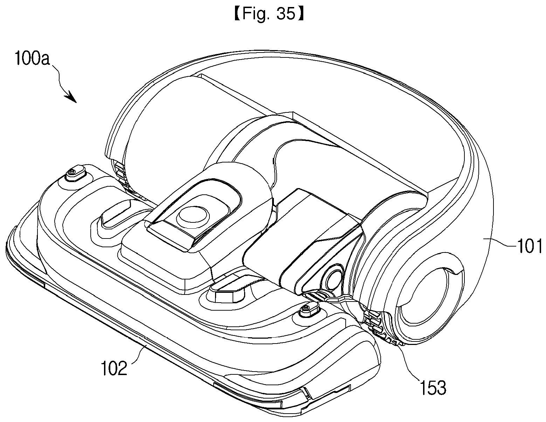

Hereinafter a robot cleaner will be described as an example of the movable object 100 with reference to FIGS. 35 to 38.

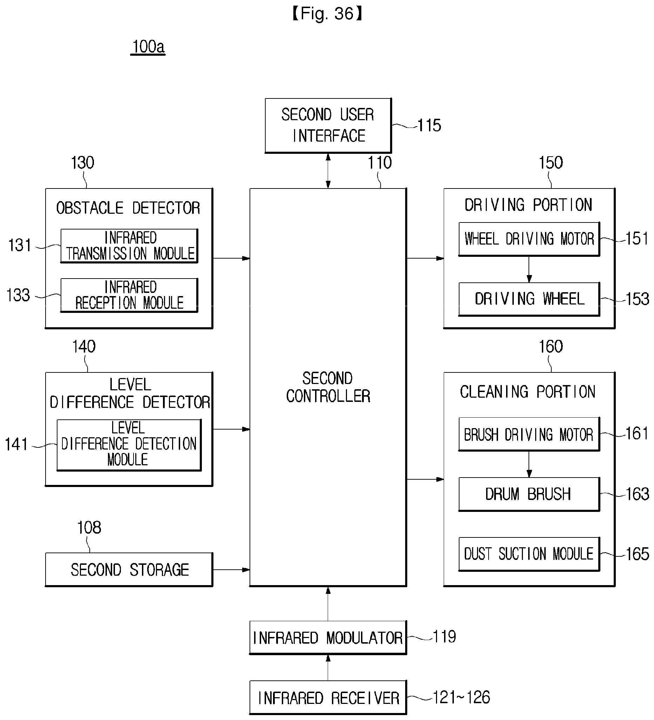

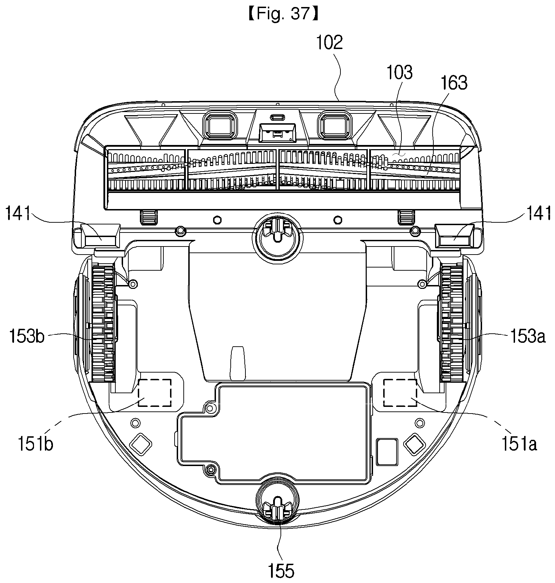

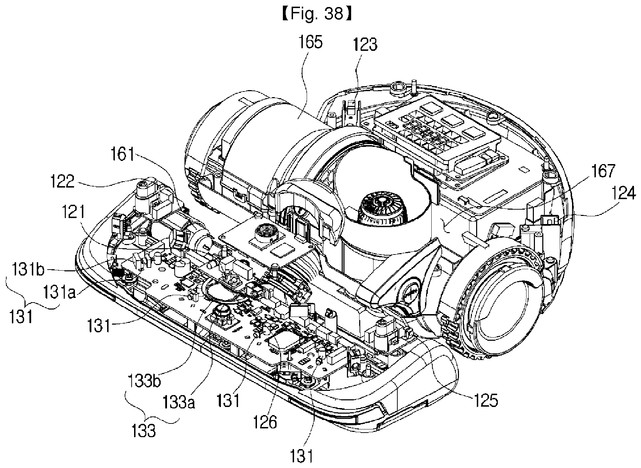

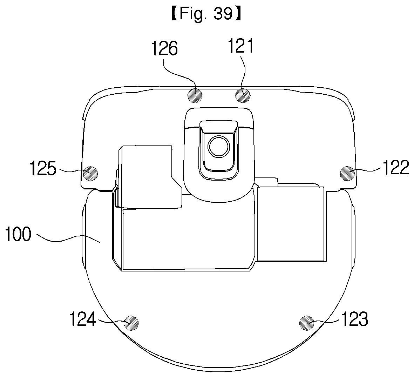

FIG. 35 is a perspective view illustrating an appearance of a robot cleaner as an embodiment of a movable object, and FIG. 36 is a diagram illustrating the robot cleaner as an embodiment of the movable object. FIG. 37 is a bottom view illustrating the robot cleaner as an embodiment of the movable object and FIG. 38 is a view illustrating an internal structure of the robot cleaner as an embodiment of the movable object. FIG. 39 is a view illustrating an example in which an infrared receiver is provided in the movable object.

As illustrated in FIG. 35, as for an exterior, a robot cleaner 100a may include a body 101 and a cleaning assembly 102. In the body 101, a variety of components related to the control of the robot cleaner 100a, e.g., a semiconductor chip and a printed circuit board may be embedded. In addition, a variety of component 161, 163 and 165 needed for the cleaning may be embedded. A second user interface 109 may be provided on the outer surface of the body 101.

As illustrated in FIGS. 36 to 39, according to an embodiment, the robot cleaner 100a may include a second storage 108, the second user interface 109, an obstacle detector 130, a level difference detector 140, a driving portion 150, a cleaning portion 160, an infrared demodulator 119, an infrared receiver 121 to 126 and a second controller 110.

The second storage 108 may temporarily or non-temporarily store a variety of information related to the operation of the robot cleaner 100a. The second storage 108 may store information related to the moving direction or the movement path of the robot cleaner 100a according to the movement pattern of the robot cleaner 100a, the identification method of the unit zone (z1 to z33) and the identified unit zone (z1 to z33), and the information may be stored in the form of database.

The database may include information related to the unit zone (z1 to z33) defined by the number of the overlapped infrared light and the type of the emitted or overlapped infrared light. In this case, an identification number may be given to each unit zone (z1 to z33). The database may include information related to the movement control pattern or method of the robot cleaner 100a based on the unit zone (z1 to z33), wherein the movement control pattern or method of the robot cleaner 100a may be defined by using the identification number additionally assigned to each unit zone (z1 to z33).

The second storage 108 may be implemented by using a non-volatile memory, e.g., magnetic disc, solid state disk, read only memory (ROM), erasable programmable read only memory (EPROM), and electrically erasable programmable read only memory (EEPROM), and volatile memory, e.g., D-RAM and S-RAM. The non-volatile memory may store a variety of information related to the operation of the robot cleaner 100a, and the volatile memory may temporarily store data related to the identified unit zone (z1 to z33).

The second user interface 109 may include a variety of input devices, e.g., various physical buttons, knobs, touch pads, touch screens, joy sticks or wheels, and a variety of output devices, e.g., a lamp, a display or a speaker.

The input device may include a power button turning on or off the power of the robot cleaner 100a, an operation button receiving a command for starting and ending the operation of the robot cleaner 100a, and a return button returning the robot cleaner to the charging station. The output device, e.g., the display may output the information related to the operation of the robot cleaner 100a according to the control command input through the remote controller 200 or directly input by a user, so as to inform a user of the information. For example, the output device may display the operation state of the robot cleaner 100a, the power state, the cleaning mode selected by a user, and whether to return to the charging station (not shown).

The obstacle detector 130 may detect an obstacle interrupting the movement of the robot cleaner 100a before the robot cleaner 100a is collided with the obstacle.

The obstacle may represent all kinds of objects that protrude on the ground of the cleaning area to interrupt the movement of the robot cleaner 100a. The obstacle may include furniture, tables, and sofas placed in the living room, and a wall dividing the cleaning area.

The obstacle detector 130 may transmit infrared light or ultrasonic waves and detect the infrared or ultrasonic waves reflected and returned from the obstacle. The obstacle detector 130 may determine whether an obstacle is placed in the path or a distance between the obstacle and the robot cleaner 100a, based on the intensity of the detected infrared light or ultrasonic waves or a time of fight (TOF), i.e., a period of time which is taken for the infrared light or ultrasonic waves to be reflected and returned from the obstacle.

When the obstacle detector 130 detects the obstacles by using the infrared light, the obstacle detector 130 may include an infrared transmission module 131 transmitting the infrared light, and an infrared reception module 133 receiving the infrared light reflected from the obstacle.

The infrared transmission module 131 may be provided on the front portion of the body 101 or the cleaning assembly 102 to transmit the infrared light to the front side of the robot cleaner 100a. The infrared reception module 133 may be provided on the front portion of the body 101 or the cleaning assembly 102 to detect an obstacle that is placed front of the robot cleaner 100a.

The level difference detector 140 may detect a level difference interrupting the movement of the robot cleaner 100a. The level difference may represent a portion recessed downward in the movement path of the robot cleaner 100a. The level difference may include a threshold.

According to embodiments, the level difference detector 140 may include a level difference detection module 141 provided on the lower surface of the body 101 or the cleaning assembly 102. The level difference detection module 141 may transmit infrared light or ultrasonic waves to the ground of the cleaning area and detect the infrared or ultrasonic waves reflected and returned from the ground of the cleaning area. The second controller 110 may determine whether the level difference is present or not, based on the intensity of the infrared light or ultrasonic waves reflected from the ground of the cleaning area or the time of fight (TOF) of the infrared light or ultrasonic waves.

The driving portion 150 may be configured to move the robot cleaner 100a and include a wheel driving motor 151, a driving wheel 153 and a caster wheel 155.

The wheel driving motor 151 may generate a torque to rotate the driving wheel 153 and include a left driving motor 151a rotating a left driving wheel 153a and a right driving motor 151b rotating a right driving wheel 153b.

The left and right driving motor 151a and 151b may be independently operated by the control signal of the second controller 110, and the left driving wheel 153a and the right driving wheel 153b may be independently rotated by the operation of the left and right driving motor 151a and 151b. According to embodiments, the left and right driving motor 151a and 151b each may include a rotation detection sensor (not shown) or a position detection sensor (not shown) detecting the rotational speed or rotational displacement of the left and right driving motor 151a and 151b.

The driving wheel 153 may be provided on opposite sides of the lower surface of the body 101 to be rotated so as to move the body 101. The driving wheel 153 may include the left driving wheel 153a provided in the left side of the body 101 with respect to the front side of the body 101, and the right driving wheel 153b provided in the right side of the body 101 with respect to the front side of the body 101. The robot cleaner 100a may perform the linear movement, the curved movement, and the rotation movement according to the rotation direction and the rotational speed of the left driving wheel 153a and the right driving wheel 153b, wherein the linear movement and the curved movement may include moving back and forth.

The caster wheel 155 may be provided on the lower surface of the body 101 to be rotated according to the moving direction of the body 101 so that the robot cleaner 100a moves while maintaining a stable posture.

The cleaning portion 160 may suck and store the dust on the ground. The cleaning portion 160 may include a drum brush 163 scattering the dust on the ground of the cleaning area, a brush driving motor 161 rotating the drum brush 163, a dust suction module 165 sucking the scattered dust, and a dust storage box 167 storing the suctioned dust.

The drum brush 163 may be provided in a dust suction port 103 formed in the lower surface of the cleaning assembly 102. The drum brush 163 may be rotated with respect to a rotary shaft in the front direction and the vertical direction of the cleaning assembly 102 so as to scatter the dust on the ground of the cleaning area to the inside of the dust suction port 103.

The brush driving motor 161 may rotate the drum brush 163 according to the control signal of the second controller 110.

The dust suction module 165 may suction the dust scattered by the drum brush 163 to the dust storage box 167 and include a dust suction fan generating the suction force to suction the dust to the dust storage box 167 and a dust suction motor rotating the dust suction fan.

The dust storage box 167 may store the dust that is suctioned by the dust suction module 165.

The infrared receiver 121 to 126 may receive the infrared light transmitted from the remote controller 200.

The plurality of infrared receivers 121 to 126 may be provided. For example, as illustrated in FIGS. 38 and 39, six infrared receivers may be provided in a single robot cleaner 100a. Hereinafter for the convenience of the description, an embodiment in which six infrared receivers are provided, will be described, but the number of the infrared receiver is not limited thereto. The number of the infrared receiver 121 to 126 is greater or less than six, according to the designer's selection or the need.

The infrared receiver 121 to 126 each may be installed in the front right side, the right side, the rear right side, the rear left side, the left side, and the front left side, so as to receive the infrared signal transmitted from the four directions. The position of the infrared receiver 121 to 126 is not limited thereto and thus the infrared receiver 121 to 126 may be installed in various position according to the designer's selection or the need.

Hereinafter the infrared receiver 121 to 126 may be referred to as a first infrared receiver 121, a second infrared receiver 122, a third infrared receiver 123, a fourth infrared receiver 124, a fifth infrared receiver 125, and a sixth infrared receiver 126, described in order. The first infrared receiver 121 may receive an infrared signal transmitted from the front side and the front right side. The second infrared receiver 122 may receive an infrared signal transmitted from the right side. The third infrared receiver 123 may receive an infrared signal transmitted from the rear right side. The fourth infrared receiver 124 may receive an infrared signal transmitted from the rear left side. The fifth infrared receiver 125 may receive an infrared signal transmitted from the left side. The sixth infrared receiver 126 may receive an infrared signal transmitted from the front left side.

A range (hereinafter referred to as an infrared detection range) in which the infrared receiver 121 to 126 detects the infrared light, may be present and the infrared receiver 121 to 126 may receive only infrared light that is transmitted in a certain direction, according to the presence of the structure installed in the inside of the robot cleaner 100a or the presence of shielding devices, e.g., a wall.

The infrared demodulator 119 may demodulate the infrared light received by the infrared receiver 121 to 126. The infrared demodulator 119 may demodulate the infrared light, which is modulated by the infrared modulator 211 to 218 of the remote controller 200, by using a method corresponding the modulation method, and transmit an electrical signal, which is acquired through the demodulation, to the second controller 110.

The second controller 110 may control the overall operation of the robot cleaner 100a, and according to embodiments, the second controller 110 may control the movement or the rotation of the robot cleaner 100a according to the received infrared light.

The second controller 110 may control the operation of the driving portion 150 and the cleaning portion 160 based on at least one of a setting, which is pre-stored in the second storage 170, a control command, which is input from a user via the remote controller 200, at least one unit zone (z1 to z33) generated by the infrared light emitted from the remote controller 200, a signal output from the obstacle detector 130 and a signal output from the level difference detector 140.

For example, the second controller 110 may control the driving portion 150 based on the signal output from the obstacle detector 130 and the level difference detector 140 so that the robot cleaner 100a moves while avoiding the obstacle and the level difference, or the second controller 110 may control the driving portion 150 according to the predetermined set so that the robot cleaner 100a drives on a cleaning surface according to a certain pattern.

The above mentioned second controller 110 may include a processor or may be implemented by using one or more than two semiconductor chip and associated components.

Hereinafter a process in which the movable object 100 is moved based on the control command and at least one unit zone (z1 to z33) that is generated by the infrared light emitted from the remote controller 200, will be described.

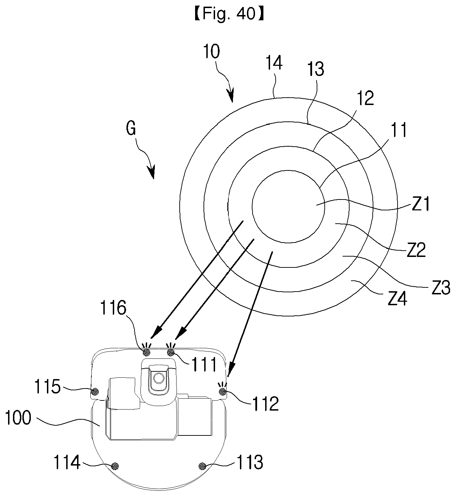

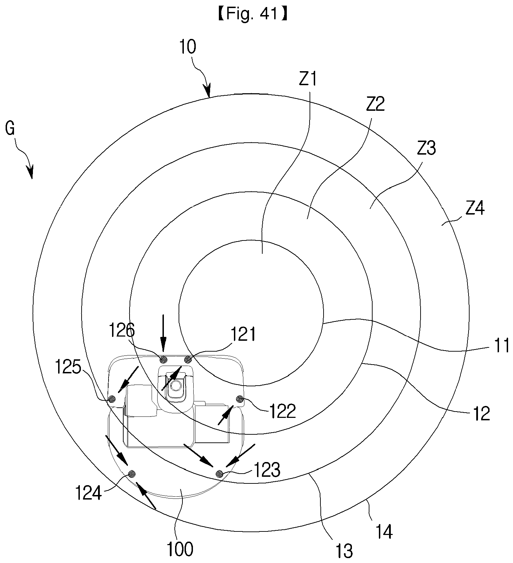

FIG. 40 is a view illustrating a case in which the movable object is placed in the outside of the first irradiation region to the fourth irradiation region, and FIG. 41 is a view illustrating a case in which the movable object is placed in at least two irradiation region among the first irradiation region to the fourth irradiation region. FIGS. 40 and 41 illustrate the infrared irradiation region generated according to the embodiment in which the remote controller 200 irradiates four different infrared lights (IR1 to IR4).

A user (u) may allow the infrared lights (IR1 to IR4) to be emitted by operating the remote controller 200, so that the remote controller 200 is directed to a certain position on the ground (G). Accordingly, the movable object 100 may be placed in the outside of the irradiation region 10, as illustrated in FIG. 40 or the movable object 100 may be placed in the inside of the irradiation region 10, as illustrated in FIG. 41. Although not shown in the drawings, the movable object 100 may be placed such that a part thereof is placed in the inside of the irradiation region 10 and other part thereof is placed in the outside of the irradiation region 10.

As illustrated in FIG. 40, when the irradiation region 10 is placed in the outside of the movable object 100, the first infrared receiver 121, the second infrared receiver 122 and the sixth infrared receiver 126, which are placed in the direction of the irradiation region 10 among the infrared receivers 121 to 126, may receive the infrared signal emitted to the irradiation region 10. The first infrared receiver 121, the second infrared receiver 122 and the sixth infrared receiver 126 may receive all infrared signals according to the distance between the irradiation region 10 and the movable object 100. In contrast, the third infrared receiver to the fifth infrared receiver 123 to 125 may not detect the infrared signal emitted to the irradiation region 10 since the third infrared receiver to the fifth infrared receiver 123 to 125 are out of the infrared detection range of the irradiation region 10.

As illustrated in FIG. 41, when the movable object 100 is placed in the inside of the irradiation region 10, the plurality of infrared receivers 121 to 126 each may receive all infrared signals. In this case, the plurality of infrared receivers 121 to 126 each may differently receive all infrared signals. Particularly, the plurality of infrared receivers 121 to 126 each may receive an infrared signal that is emitted to the unit zone (z1 to z33) in which each infrared receiver 121 to 126 is placed. Alternatively, the plurality of infrared receivers 121 to 126 each may relatively strongly receive an infrared signal, which is emitted to the unit zone (z1 to z33) in which each infrared receiver 121 to 126 is placed, or the plurality of infrared receivers 121 to 126 each may receive a relatively many infrared signal, which is emitted to the unit zone (z1 to z33) in which each infrared receiver 121 to 126 is placed.

Particularly, according to an embodiment as illustrated in FIG. 41, the first infrared receiver 121, the second infrared receiver 122 and the sixth infrared receiver 126 may mainly receive infrared signals of the second unit zone (z2) and the third infrared receiver 123 and the fifth infrared receiver 125 may mainly receive infrared signals of the third unit zone (z3). In addition, the fourth infrared receiver 124 may mainly receive infrared signals of the fourth unit zone (z4).

The above mentioned infrared signal may be transmitted to the second controller 110.

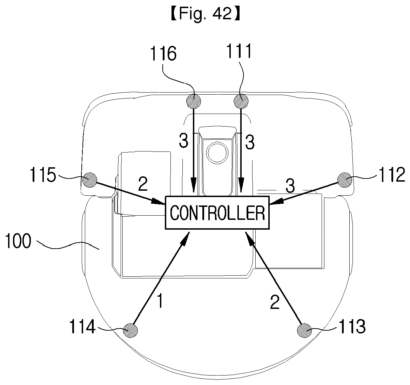

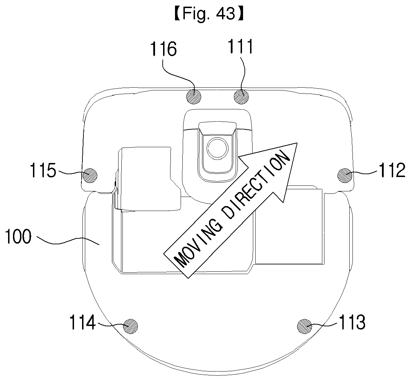

FIG. 42 is a view illustrating a process in which the received infrared signal is transmitted to the second controller. FIGS. 43 to 46 are views illustrating a process in which the second controller determines a direction based on the identification signal received by the infrared receiver of the movable object.

As mentioned above, the first infrared receiver 121, the second infrared receiver 122, the third infrared receiver 123, the fourth infrared receiver 124, the fifth infrared receiver 125 and the sixth infrared receiver 126 may output an electrical signal corresponding to the received infrared signal and transmit the output electrical signal to the second controller 110 through the wire or the circuit.

The second controller 110 may perform the determination related to the movement of the movable object 100 based on the transmitted electrical signal. In this case, the second controller 110 may identify the unit zone (z1 to z4) and perform the determination related to the movement of the movable object 100 according to the identified unit zone (z1 to z4).

According to an embodiment, the second controller 110 may identify the unit zone (z1 to z4) by using the identification signal (SG1 to SG4) contained in the received infrared signal.

For example, an electrical signal corresponding to the infrared signal having three pulse signals (p2 to p4) may be transmitted to the second controller 110 from the first infrared receiver 121, the second infrared receiver 122 and the sixth infrared receiver 126. An electrical signal corresponding to the infrared signal having two pulse signals (p3 and p4) may be transmitted to the second controller 110 from the third infrared receiver 123 and the fifth infrared receiver 125. An electrical signal corresponding to the infrared signal having one pulse signals (p4) may be transmitted to the second controller 110 from the fourth infrared receiver 124.

In this case, as illustrated in FIGS. 15 to 19, the second controller 110 may determine the type and the number of the pulse signal (p1 to p4) by using the transmitted electrical signal, and determine whether the infrared light (IR1 to IR4) is overlapped or not, and which infrared light (IR1 to IR4) is overlapped, based on the type and the number of the pulse signal (p1 to p4).

Particularly, the second controller 110 may recognize the type and the temporal position of the pulse signal (p1 to p4) from the received infrared signal (IRS11 to IRS14) by using the transmitted electrical signal. For example, the second controller 110 may determine that the second identification signal to the fourth identification signal (SG2 to SG4) are mixed, when the lead signal is detected and then the second pulse signal (p2), the third pulse signal (p3) and the fourth pulse signal (p4) are sequentially detected after a certain time is expired, and at last the end signal is detected. According to the result of the determination, the second controller 110 may determine that the second infrared light to the fourth infrared light (IR2 to IR4) are overlapped with each other.

The second controller 110 may determine a position of the unit zone (z2) by using the received the second infrared light to the fourth infrared light (IR2 to IR4). Particularly, since the second infrared light to the fourth infrared light (IR2 to IR4) are received while being overlapped with each other, the second controller 110 may determine that the second unit zone (z2) is present in the direction of the first infrared receiver 121, the second infrared receiver 122 and the sixth infrared receiver 126, which output the transmitted electrical signal. Accordingly, the second controller 110 may recognize in which direction the unit zone (z2) is disposed. According to embodiments, the second controller 110 may determine the distance between the unit zone (z2) and the movable object 100 by using the intensity of the received infrared signal (IRS11 to IRS14).

According to an embodiment, the second controller 110 may identify the type of unit zone (z1 to z4) by reading out the database stored in the second storage 108 or according to what is pre-programmed.

In the same manner, the second controller 110 may determine that the third unit zone (z3) is present in the direction of the third infrared receiver 123 and the fifth infrared receiver 125, and the fourth unit zone (z4) is present in the direction of the fourth infrared receiver 124.

When the unit zone (z1 to z4) placed in the direct of the infrared receiver 121 to 126 is determined, the second controller 110 may determine the moving direction by reading out the database stored in the second storage 108 or according to what is pre-programmed.

According to an embodiment, the second controller 110 may control the movable object 100 so that the movable object 100 sequentially moves in the plurality of unit zone (z1 to z4) according to the predefined set.

For example, the second controller 110 may control the driving portion 150 of the movable object 100 so that the movable object 100 moves in the first unit zone (z1), the second unit zone (z2), the third unit zone (z3) and the fourth unit zone (z4) in order. Alternatively, the second controller 110 may move in the fourth unit zone (z4), the third unit zone (z3), the second unit zone (z2), and the first unit zone (z1) in order.

In addition, the second controller 110 may call the predefined order or pattern stored in the additional database and then the second controller 110 may allow the movable object 100 to move in the identified unit zone (z1 to z4) according to the called pattern.

According to an embodiment, the second controller 110 may determine that the movable object 100 moves to a direction in which much more infrared light (IR1 to IR4) are overlapped and then the second controller 110 may determine the moving direction of the movable object 100 according to the determination, as illustrated in FIG. 43. In this case, the second controller 110 may determine a direction in which the infrared receivers 121, 122 and 126 are disposed, i.e., a direction in which much more overlapped infrared signal (IRS12) is received, as a moving direction of the movable object 100. According to the determined moving direction of the movable object 100, the second controller 110 may control the driving portion 150 so that the movable object 100 moves. As illustrated in FIG. 43, when the movable object 100 is stopped, the second controller 110 may rotate the left driving wheel 153a faster than the right driving wheel 153b to change the direction of the movable object 100 and then to rotate the left driving wheel 153a and the right driving wheel 153b at the same angular velocity to move the movable object 100 to the upper right direction.

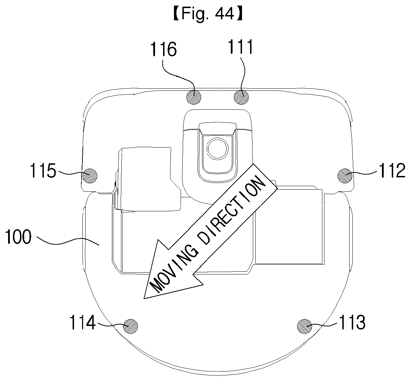

According to anther embodiment, the second controller 110 may determine that the movable object 100 moves to a direction to which much less infrared light, e.g., only fourth infrared light (IR4) is emitted and the second controller 110 may control the driving portion 150 so that the movable object 100 moves to the moving direction of the movable object 100, e.g., the direction in which the fourth infrared signal (IRS14) is received, as illustrated in FIG. 44. As illustrated in FIG. 44, when the movable object 100 is stopped, the second controller 110 may rotate the right driving wheel 153b faster than the left driving wheel 153a to change the direction of the movable object 100 to the lower left direction and then to rotate the driving wheel 153 and the right driving wheel 153b at the same angular velocity to move the movable object 100 to the lower left direction.

As illustrated in FIG. 42, an electrical signal corresponding to same infrared signal may be transmitted to the some infrared receiver 121, 122 and 126, and an electrical signal corresponding to the infrared signal different from other infrared signal may be transmitted to other infrared receiver 123 to 125. In this case, the second controller 110 may determine a moving direction by calculating the center of gravity or the sum of the vectors.

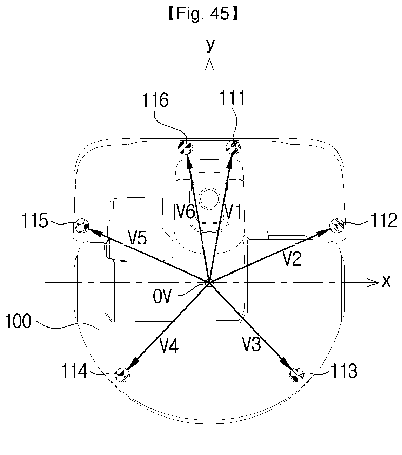

FIG. 45 is a view illustrating an example of a method in which the second controller determines a direction based on the identification signal received by the infrared receiver of the movable object.

As illustrated in FIG. 45, the second controller 110 may define a first vector to a sixth vector (v1 to v6) directed to the first infrared receiver to the sixth infrared receiver 121 to 126 with respect to an origin (ov), determine the size of the first vector to the sixth vector (v1 to v6) corresponding to the number of the overlapped infrared light and then determine the moving direction of the movable object 100 by calculating the sum of the first vector to the sixth vector (v1 to v6) whose size are determined.

Particularly, the second controller 110 may determine the number of overlapped infrared light, which is derived from the infrared signal received by the first infrared receiver 121, as the size of the first vector (v1) corresponding to the first infrared receiver 121, and determine the size of other vectors (v2 to v6) in the same manner. Accordingly, the second controller 110 may acquire a result vector (vd) by calculating the sum of the vectors (v1 to v6) and then determine the moving direction of the movable object 100 according to the result vector (vd). In this case, the second controller 110 may determine the direction of the result vector (vd) as the moving direction of the movable object 100 or the second controller 110 may determine the direction opposite to the direction of the result vector (vd) as the moving direction of the movable object 100. Alternatively, the second controller 110 may determine the direction perpendicular to the direction of the result vector (vd) as the moving direction of the movable object 100.

According to embodiments, the second controller 110 may calculate the sum of the vectors by adding a certain weight value to each vector (v1 to v6). For example, the second controller 110 may assign a larger weight value to each vector (v1 to v6) as the number of the overlapped infrared light is large.

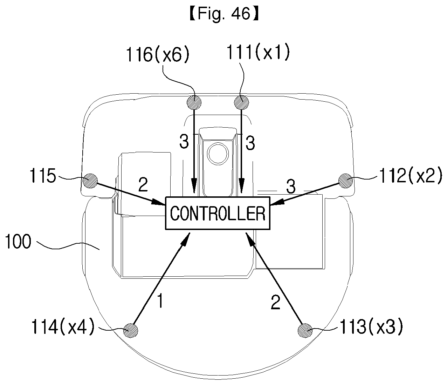

FIG. 46 is a view illustrating another example of a method in which the second controller determines a direction based on the identification signal received by the infrared receiver of the movable object.

As illustrated in FIG. 46, the second controller 110 may define a first point to a sixth point (x1 to x6) in which the first infrared receiver to the sixth infrared receiver 121 to 126 is placed, determine the number of the overlapped infrared light, as the weight in the corresponding point (x1 to x6), and determine a moving direction of the movable object 100 by calculating the center of gravity based on the weight thereof.

Particularly, the second controller 110 may determine the number of overlapped infrared light, which is derived from the infrared signal received by the first infrared receiver 121, as the weight of the first point (x1) corresponding to the first infrared receiver 121, and determine the weight of other points (x2 to x6) in the same manner. Accordingly, the second controller 110 may calculate the position of the center of gravity by using the determined weight. The second controller 110 may determine the moving direction of the movable object 100 according to the position of the center of gravity. Particularly, the second controller 110 may determine to which direction the center of gravity is biased and determine a direction in which the center of gravity is biased, as the moving direction of the movable object 100. Alternatively, the second controller 110 may determine a direction opposite to the direction in which the center of gravity is biased, as the moving direction of the movable object 100.

According to embodiments, the second controller 110 may calculate the center of gravity by adding a certain weight value to each point (x1 to x6). For example, the second controller 110 may assign a larger weight value to point (x1 to x6) as the number of the overlapped infrared light is large. Therefore, it may be possible to more clearly calculate the position of the center of gravity.

Hereinafter various examples of a path in which the movable object is moved, when the infrared light is irradiated by the remote controller according to the first embodiment.

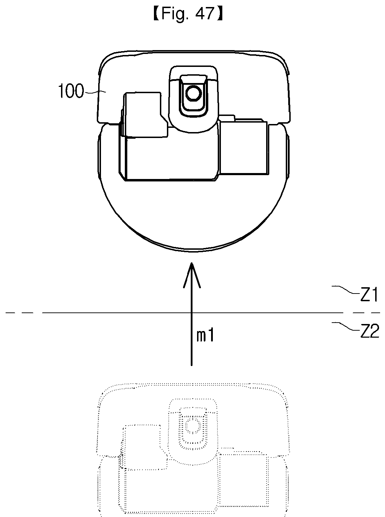

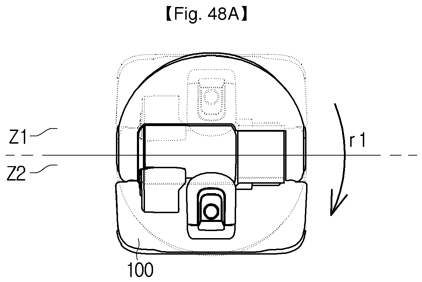

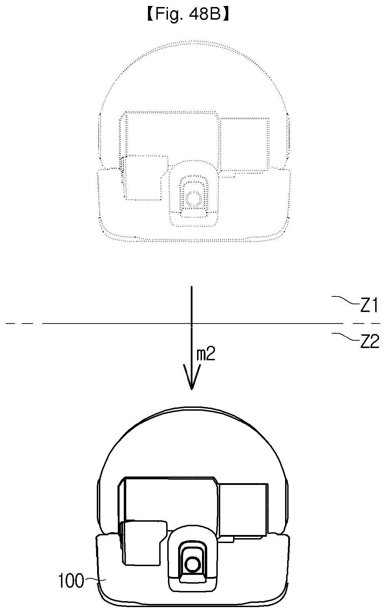

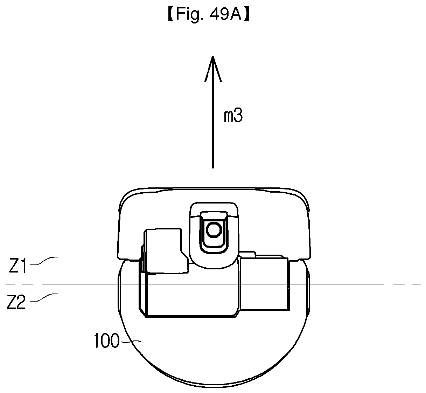

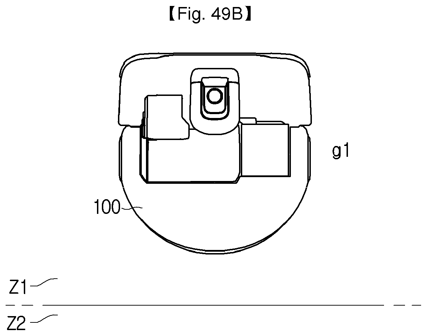

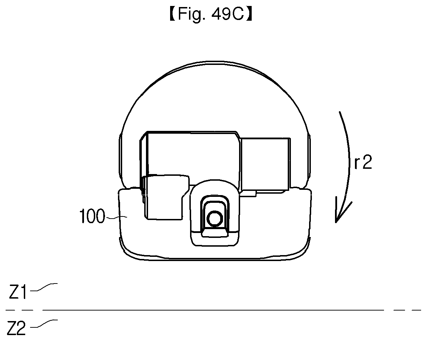

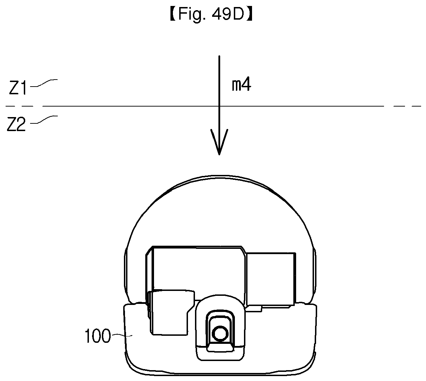

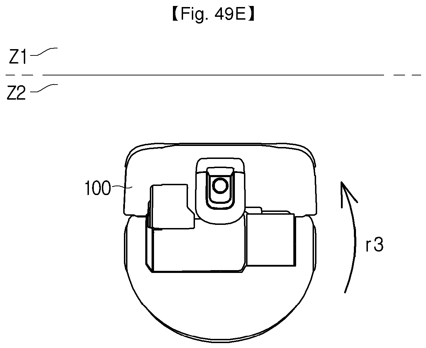

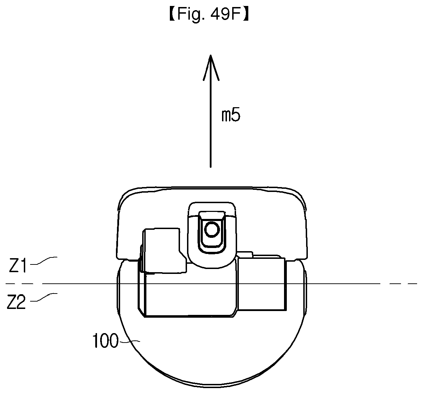

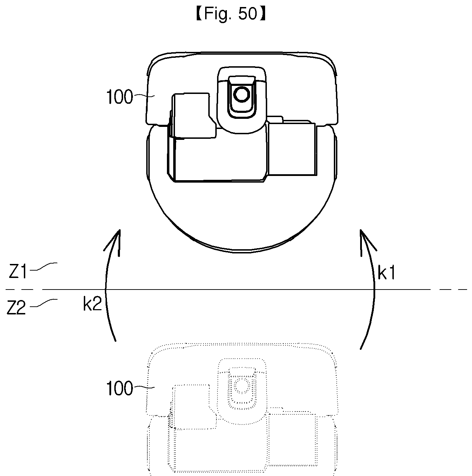

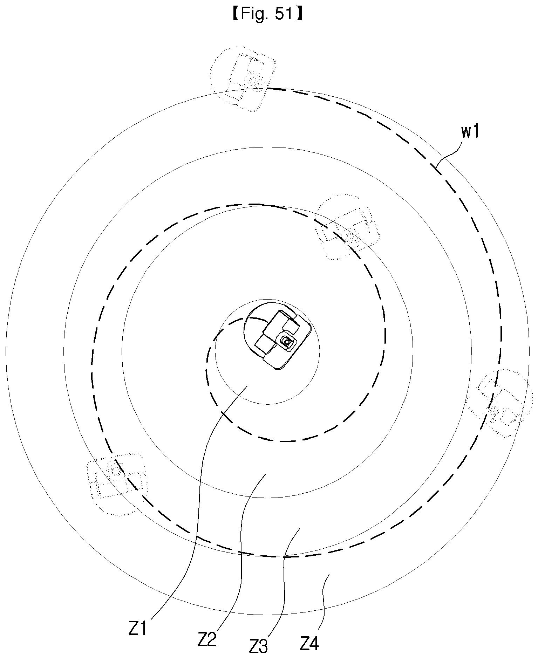

FIG. 47 is a view illustrating a first example of a path in which the movable object is moved, when the infrared light is irradiated by the remote controller according to the first embodiment, FIGS. 48A and 48B are views illustrating a second example of a path in which the movable object is moved, when the infrared light is irradiated by the remote controller according to the first embodiment. FIGS. 49A to 49F are views illustrating a third example of a path in which the movable object is moved, when the infrared light is irradiated by the remote controller according to the first embodiment, and FIG. 50 is a view illustrating a fourth example of a path in which the movable object is moved, when the infrared light is irradiated by the remote controller according to the first embodiment. FIG. 51 is a view illustrating a fifth example of a path in which the movable object is moved, when the infrared light is irradiated by the remote controller according to the first embodiment.

As illustrated in FIGS. 47 to 51, the movable object 100 may move between the unit zone (z1 and z2) in various methods.

As illustrated in FIG. 47, the movable object 100 may linearly move from the second unit zone (z2) to the first unit zone (z1) (m1). In this case, the first unit zone (z1) may be a zone in which the relatively more infrared light are overlapped than the second unit zone (z2), or in contrast, the first unit zone (z1) may be a zone in which the relatively less infrared light are overlapped than the second unit zone (z2).

As illustrated in FIGS. 48A and 48B, the movable object 100 may be rotated in a certain direction (r1) and then move from the first unit zone (z1) to the second unit zone (z2) (m2). This may be performed when the front direction of the movable object 100 is not the same as the determined moving direction. As mentioned above, the first unit zone (z1) may be a zone in which the relatively more infrared light are overlapped than the second unit zone (z2), or in contrast, the first unit zone (z1) may be a zone in which the relatively less infrared light are overlapped than the second unit zone (z2).

As illustrated in FIGS. 49A to 49F, the movable object 100 may be reciprocally movable between the first unit zone (z1) and the second unit zone (z2). Particularly, the movable object 100 may firstly move to the first unit zone (z1) (m3) and then stop (q1) after moving by a predetermined distance or a predetermined time, and rotate at the stopped position to an opposite direction (r2) and then move to the second unit zone (z2) (m4). The movable object 100 may move to the second unit zone (z2) by a predetermined distance or with a predetermined time and then stop, and rotate at the stopped position to an opposite direction (r3) and return to the first unit zone (z1) (m5). By repeating the above mentioned process, the movable object 100 may be reciprocally movable between the first unit zone (z1) and the second unit zone (z2) by at least one time. As mentioned above, the first unit zone (z1) may be a zone in which the relatively more infrared light are overlapped than the second unit zone (z2), or in contrast, the first unit zone (z1) may be a zone in which the relatively less infrared light are overlapped than the second unit zone (z2).

As illustrated in FIG. 50, the movable object 100 may move from the second unit zone (z2) to the first unit zone (z1) along a curved path (k1 and 2). In this case, the first unit zone (z1) may be a zone in which the relatively more infrared light are overlapped than the second unit zone (z2), or in contrast, the first unit zone (z1) may be a zone in which the relatively less infrared light are overlapped than the second unit zone (z2).

As illustrated in FIG. 51, the movable object 100 may sequentially move in the fourth unit zone (z4), the third unit zone (z3), the second unit zone (z2) and the first unit zone (z1) along a spiral path (w1). According to embodiments, the movable object 100 may move in the direction opposite to the moving direction, as illustrated in FIG. 51. In this case, the movable object 100 may sequentially move in the first unit zone (z1), the second unit zone (z2), the third unit zone (z3) and the fourth unit zone (z4). k^{th} unit zone (zk) may be a zone in which relatively more infrared light are overlapped than a k+1^{th} unit zone (zk+1) or a zone in which relatively less infrared light are overlapped than a k+1^{th} unit zone (zk+1), wherein k is a natural number equal to 1 or greater than 1 and equal to 3 or greater than 3.

Hereinafter various examples in which the movable object is moved, when the infrared light is irradiated by the remote controller according to the second embodiment will be described.

When the infrared light is irradiated by the remote controller according to the second embodiment, the second controller 110 may determine whether to move the movable object 100 or the moving direction of the movable object 100 according to a predefined movement pattern as described in the following. The predefined movement pattern may be stored in the database.

According to the predefined movement pattern, the second controller 110 may allow the movable object 100 to move forward and to rotate according to the infrared reception direction. Particularly, when the infrared light is received through the infrared receiver 121 to 126, the second controller 110 may determine to which direction the infrared light is mainly received, based on the reception of the infrared light.

In order to determine the infrared reception direction, the second controller 110 may calculate the center of gravity or the sum of the vectors. In addition, the second controller 110 may define a position of the infrared receiver 121 to 126, as a certain angle, and determine the infrared reception direction by averaging the angle of the infrared receiver 121 to 126 in which the infrared light is received.

When the infrared reception direction is determined, the second controller 110 may move the movable object 100 forward or relatively less or relative more rotate the movable object 100 according to the determined reception direction. For example, when the infrared reception direction is the direction of the first infrared receiver 121 and the sixth infrared receiver 126, the second controller 110 may move the movable object 100 forward and when the infrared reception direction is the direction of the second infrared receiver 122, the second controller 110 may relatively less rotate the movable object 100 to the right side. When the infrared reception direction is the direction of the third infrared receiver 123, the second controller 110 may relatively more rotate the movable object 100 to the right side, and when the infrared reception direction is the direction of the fourth infrared receiver 124, the second controller 110 may relatively more rotate the movable object 100 to the left side. In addition, when the infrared reception direction is the direction of the fifth infrared receiver 125, the second controller 110 may relatively less rotate the movable object 100 to the left side.

When at least one infrared receiver 121 to 126 recognizes an infrared signal according to a single type infrared light, e.g., the first infrared light (IR1), the second controller 110 may move the movable object 100 according to the above mentioned movement pattern. When all infrared receivers 121 to 126 recognize an infrared signal according to a single type infrared light, e.g., the first infrared light (IR1), the second controller 110 may allow the movable object 100 to linearly move.

When an infrared signal in which two or three infrared light are overlapped is received, the second controller 110 may move the movable object 100 according to the additionally assigned pattern. When all infrared receivers 121 to 126 receive an infrared signal generated by a single infrared light, the second controller 110 may ignore and discard the infrared signal generated by a single infrared light.

When all infrared receivers 121 to 126 receive an infrared signal in which three infrared light are overlapped, the second controller 110 may stop the movable object 100.

When the size of the seventh unit zone (z7) in which three signals are overlapped, is smaller than the movable object 100, the second controller 110 may stop the movable object 100.

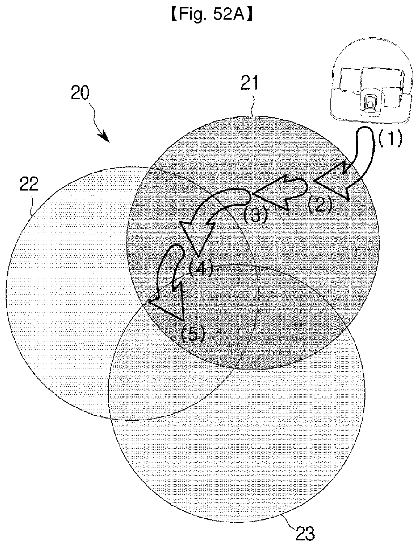

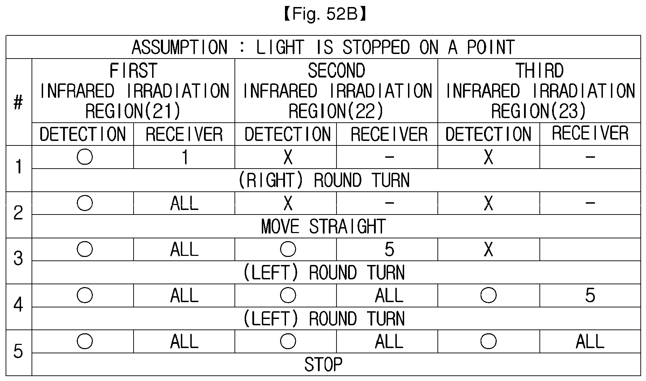

According to the above mentioned movement pattern, the second controller 110 may control the movement of the movable object 100 as illustrated in FIGS. 52A to 56. A number in the left side in a table of FIGS. 52B, 53B, 54B and 55B may represent the position of the movable object 100 of FIGS. 52A, 53A, 54A and 55A. In the upper right side in the table, "O" related to the detection of the infrared light represents that the infrared receiver detects the infrared light and "X" represents that the infrared receiver does not detect the infrared light. A number related to the receiver represents the infrared receiver detecting the infrared light, wherein "1" represents the first infrared receiver 121, "2" represents the second infrared receiver 122, "3" represents the third infrared receiver 123, "4" represents the fourth infrared receiver 124, and "5" represents the fifth infrared receiver 125. In the upper lower in the table, a number represents the operation of the movable object 100.

FIGS. 52A and 52B are views illustrating a first example in which the movable object is moved when the infrared light is irradiated by the remote controller according to the second embodiment.

According to the above mentioned movement pattern, when the movable object 100 is placed in a point (1) in the outside of the first infrared irradiation region to the third infrared irradiation region 11 to 13, only the first infrared receiver 121 may detect the infrared signal from the first infrared irradiation region 11, and the movable object 100 may be relatively less rotated to the right side.

When the movable object 100 is placed in a point (2), all infrared receivers 121 to 126 may detect the infrared signal from the first infrared irradiation region 11, the movable object 100 may move straight.

When the movable object 100 is placed in a point (3), all infrared receivers 121 to 126 may detect the infrared signal from the first infrared irradiation region 11 and the fifth infrared receiver 125 may detect the infrared signal from the second infrared irradiation region 12. In this case, the movable object 100 may rotate to the right side.

When the movable object 100 is placed in a point (4), all infrared receivers 121 to 126 may detect the infrared signal from the first infrared irradiation region 11 and the second infrared irradiation region 12 and the fifth infrared receiver 125 may detect the infrared signal from the third infrared irradiation region 13. In this case, the movable object 100 may rotate to the right side.

When the movable object 100 is placed in a point (5), all infrared receivers 121 to 126 may detect the infrared signal from all infrared irradiation regions 11 to 13 and the movable object 100 may terminate the movement and stop.

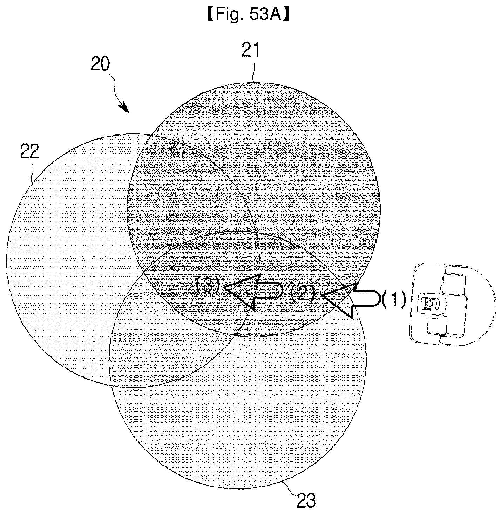

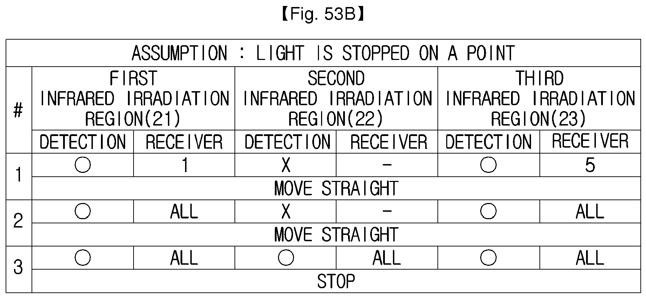

FIGS. 53A and 53B are views illustrating a second example in which the movable object is moved when the infrared light is irradiated by the remote controller according to the second embodiment.

According to the movement pattern, when the movable object 100 is placed in a point (1) in the outside of the first infrared irradiation region to the third infrared irradiation region 11 to 13, the first infrared receiver 121 may detect the infrared signal from the first infrared irradiation region 11 and the fifth infrared receiver 125 or the sixth infrared receiver 126 may detect the infrared signal from the third infrared irradiation region 13. In this case the movable object 100 may move straight.

When the movable object 100 is placed in a point (2), all infrared receivers 121 to 126 may detect the infrared signal from the first infrared irradiation region 11 and the infrared signal from the third infrared irradiation region 13, and the movable object 100 may maintain to move straight.

When the movable object 100 is placed in a point (3), all infrared receivers 121 to 126 may detect the infrared signal from all infrared irradiation regions 11 to 13. In this case, the movable object 100 may terminate the movement and stop.

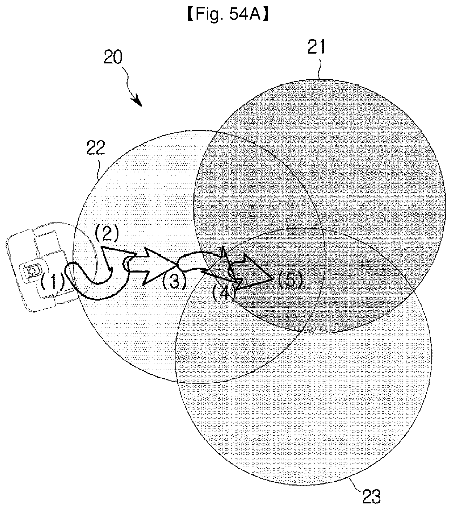

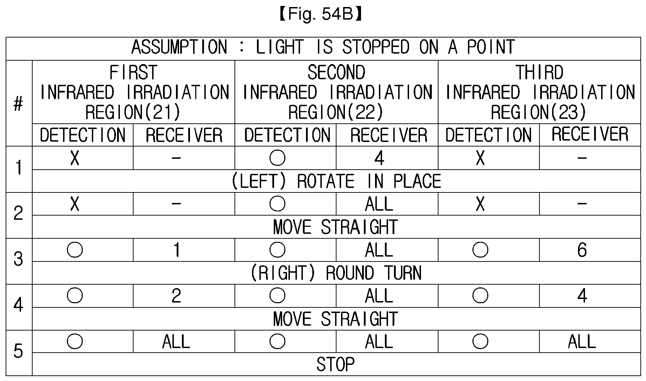

FIGS. 54A and 54B are views illustrating a third example in which the movable object is moved when the infrared light is irradiated by the remote controller according to the second embodiment.

According to the movement pattern, as illustrated in FIG. 54A, when the movable object 100 is placed in a point (1) in the outside of the first infrared irradiation region to the third infrared irradiation region 11 to 13, and when the front direction of the movable object 100 faces the direction opposite to the direction in which the first infrared irradiation region to the third infrared irradiation region 11 to 13 are placed, only fourth infrared receiver 124 may detect the infrared signal from the second infrared irradiation region 12 and the movable object 100 may rotate in place and face the opposite direction.

When the movable object 100 is placed in a point (2), all infrared receivers 121 to 126 may detect the infrared signal from the second infrared irradiation region 12 and the movable object 100 may move straight.

When the movable object 100 is placed in a point (3), all infrared receivers 121 to 126 may detect the infrared signal from the second infrared irradiation region 12, the first infrared receiver 121 may further detect the infrared signal from the first infrared irradiation region 11 and the sixth infrared receiver 126 may further detect the infrared signal from the third infrared irradiation region 13. In this case, the movable object 100 may rotate to the right side.

When the movable object 100 is placed in a point (4), the second infrared receiver 122 may detect the infrared signal from the first infrared irradiation region 11 and the fourth infrared receiver 124 may detect the infrared signal from the third infrared irradiation region 13. All infrared receivers 121 to 126 may detect the infrared signal from the second infrared irradiation region 12. In this case, the movable object 100 may move straight.

When the movable object 100 is placed in a point (5), all infrared receivers 121 to 126 may detect the infrared signal from all infrared irradiation regions 11 to 13 and the movable object 100 may terminate the movement and stop.

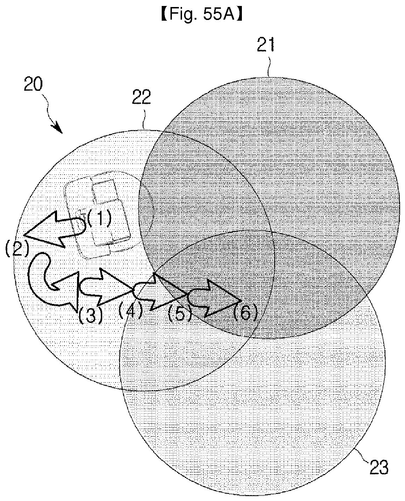

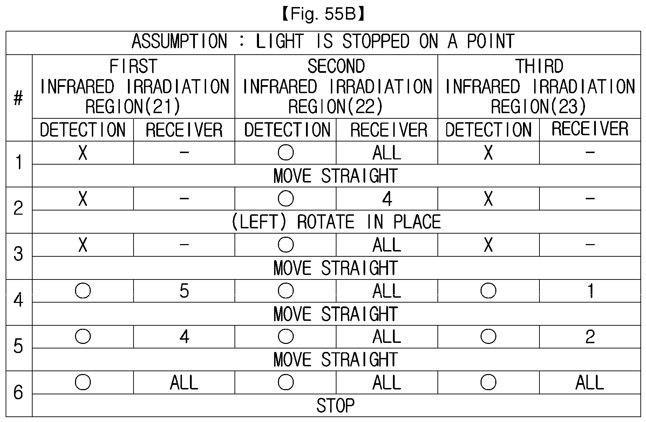

FIGS. 55A and 55B are views illustrating a fourth example in which the movable object is moved when the infrared light is irradiated by the remote controller according to the second embodiment.

According to the movement pattern, as illustrated in FIG. 55A, when the movable object 100 is placed in a point (1) in the first infrared irradiation region and the second infrared irradiation region 11 and 12 and when the movable object 100 faces the opposite direction of the first infrared irradiation region 11, all infrared receivers 121 to 126 may detect the infrared signal from the second infrared irradiation region 12 and the movable object 100 may move straight.

When the movable object 100 is placed in a point (2) and when the movable object 100 is escaped from the second infrared irradiation region 12 and thus the movable object 100 is escaped from all infrared irradiation regions 11 to 13, only fourth infrared receiver 124 may detect the infrared signal from the second infrared irradiation region 12 and the movable object 100 may rotate in place. In this case, the movable object 100 may rotate to the left direction.

When the movable object 100 is placed in a point (3), all infrared receivers 121 to 126 may detect the infrared signal from the second infrared irradiation region 12, and the movable object 100 may move forward.

When the movable object 100 is placed in a point (4), the fifth infrared receiver 125 may detect the infrared signal from the first infrared irradiation region 11 and the first infrared receiver 121 may detect the infrared signal from the third infrared irradiation region 13. All infrared receivers 121 to 126 may detect the infrared signal from the second infrared irradiation region 12. In this case, the movable object 100 may straightly move forward.

When the movable object 100 is placed in a point (5), the fourth infrared receiver 124 may detect the infrared signal from the first infrared irradiation region 11 and the second infrared receiver 122 may detect the infrared signal from the third infrared irradiation region 13. All infrared receivers 121 to 126 may detect the infrared signal from the second infrared irradiation region 12. In this case, the movable object 100 may maintain the forward movement.

When the movable object 100 is placed in a point (6), all infrared receivers 121 to 126 may detect the infrared signal from all infrared irradiation regions 11 to 13 and the movable object 100 may terminate the movement and stop.

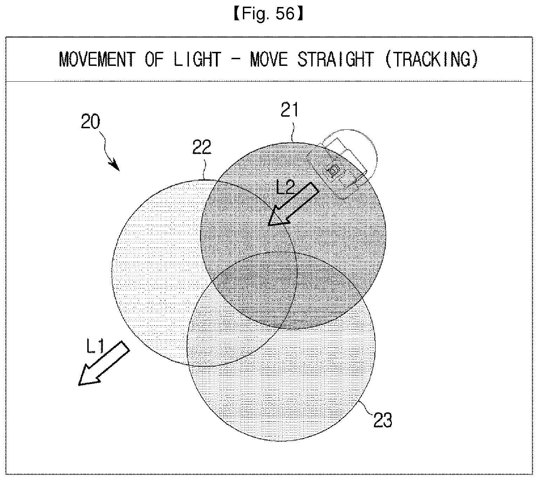

FIG. 56 is a view illustrating a fifth example in which the movable object is moved when the infrared light is irradiated by the remote controller according to the second embodiment.

When a user (u) moves the irradiation region 10 to a certain direction (L1) by moving the remote controller 200, the movable object 100 may move to a direction (L2) that is the same as or similar to the direction (L1) by corresponding to the movement of the irradiation region 10. In other words, the movable object 100 may move by following the infrared light emitted from the remote controller 200.

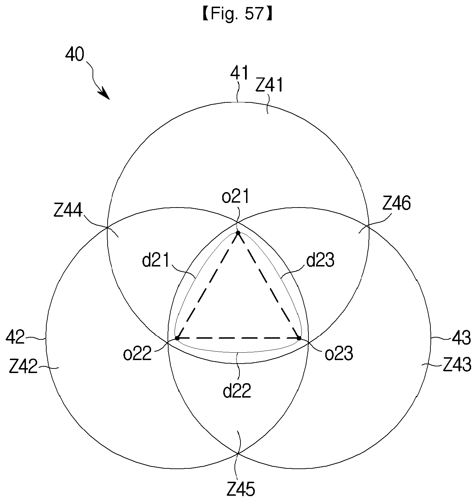

FIG. 57 is a view illustrating a case in which a distance between the first infrared irradiation region and the third infrared irradiation region, to which the infrared light is emitted by the second embodiment of the remote controller, is relatively shorter.

As illustrated in FIG. 57, when three infrared emitters 231 to 233 are provided, an infrared irradiation region 40 may be formed with three infrared irradiation regions 41 to 43. In this case, three infrared irradiation regions 41 to 43 may be placed closer than the infrared irradiation region 20, as illustrated in FIG. 23. In other words, a distance (d21, d22 and d23) among three infrared irradiation regions 41 to 43 may be shorter than the distance (d11, d12 and d13) among three infrared irradiation regions 21 to 23, as illustrated in FIG. 23. In this case, as illustrated in FIG. 57, a central point (o21, o22 and o23) of each infrared irradiation regions 41 to 43 may be present in a unit zone (z47) in which three infrared irradiation regions 41 to 43 are overlapped. In this case, as mentioned above, the unit zone may be divided into a plurality of unit zones (z41 to z47) according to the number and the type of the infrared light.

When three infrared irradiation regions 41 to 43 are placed closer than the infrared irradiation region 20, as illustrated in FIG. 23, the movable object 100 may move based on the movement pattern different from the above mentioned movement pattern.

Particularly, in a state in which three infrared irradiation regions 41 to 43 are placed closer than the infrared irradiation region 20, as illustrated in FIG. 23, when the infrared light is received through each infrared receiver 121 to 126, the second controller 110 may determine from which direction the infrared light is received based on the infrared light. The second controller 110 may move the movable object 100 forward according to the determined reception direction or the second controller 110 may relatively less or relatively more rotate the movable object 100.

When at least one infrared receiver 121 to 126 recognizes an infrared signal according to a single type infrared light, e.g., the first infrared light (IR1), the second controller 110 may move the movable object 100 according to the above mentioned movement pattern. When all infrared receivers 121 to 126 recognize an infrared signal according to a single type infrared light, e.g., the first infrared light (IR1), the second controller 110 may allow the movable object 100 to linearly move.

When an infrared signal in which two or three infrared lights are overlapped is received, the second controller 110 may move the movable object 100 according to the additionally assigned pattern. When all infrared receivers 121 to 126 receive an infrared signal generated by a single infrared light, the second controller 110 may ignore and discard the infrared signal generated by a single infrared light.

When all infrared receivers 121 to 126 receive an infrared signal in which three infrared lights are overlapped, the second controller 110 may stop the movable object 100.

In the unit zone (z41, z42 and z43) in which the infrared light is not overlapped, all infrared receivers 121 to 126 may not receive the infrared signal from all directions and accordingly, the second controller 110 may ignore a part of the received infrared signal.

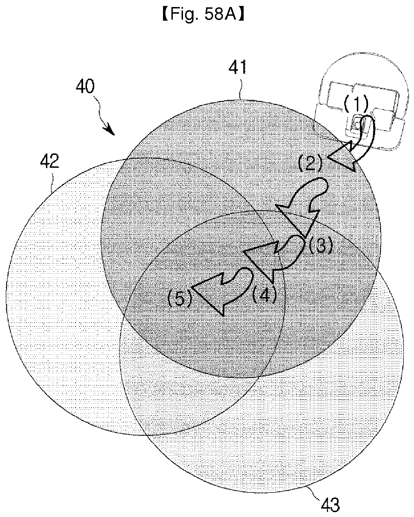

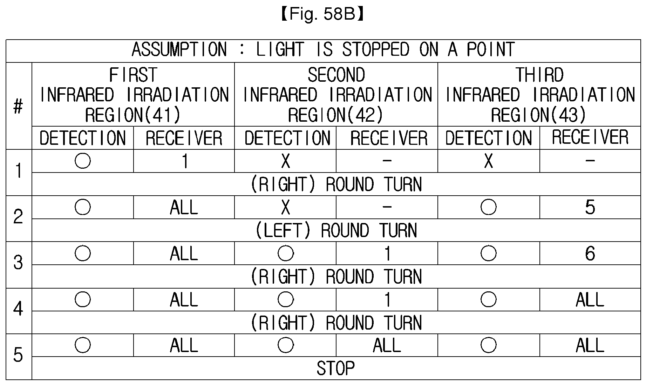

FIGS. 58A and 58B are views illustrating a first example in which the movable object moves when a distance between the first infrared irradiation region and the third infrared irradiation region, to which the infrared light is emitted, is relatively shorter.

According to the movement pattern, as illustrated in FIG. 58A, when the movable object 100 is placed in a point (1) in the outside of the first infrared irradiation region to the third infrared irradiation region 11 to 13, only first infrared receiver 121 may detect the infrared signal from the first infrared irradiation region 11, and other infrared receivers 122 and 123 may not detect any infrared signal. In this case, the movable object 100 may move forward while turning right.

When the movable object 100 is placed in a point (2), all infrared receivers 121 to 126 may detect the infrared signal from the first infrared irradiation region 11, but the second controller 110 may ignore and discard the infrared signal. Therefore, the infrared signal in the first infrared irradiation region 11 received through all infrared receivers 121 to 126 may be not used to determine the moving direction of the movable object 100 or whether to rotate the movable object 100. Meanwhile, the fifth infrared receiver 125 may further detect the infrared signal from the third infrared irradiation region 13. In this case, the movable object 100 may move while turning left.

When the movable object 100 is placed in a point (3), all infrared receivers 121 to 126 may detect the infrared signal from the first infrared irradiation region 11 but the second controller 110 may ignore and discard the infrared signal. The first infrared receiver 121 may further detect the infrared signal from the second infrared irradiation region 12 and the sixth infrared receiver 126 may further detect the infrared signal from the third infrared irradiation region 13. In this case, the movable object 100 may forward while continuously turning right.

When the movable object 100 is placed in a point (4), all infrared receivers 121 to 126 may detect the infrared signal from the first infrared irradiation region 11 and the third infrared irradiation region 13 but the second controller 110 may ignore and discard the infrared signal. The first infrared receiver 121 may further detect the infrared signal from the second infrared irradiation region 12. The infrared signal in the second infrared irradiation region 12 may be detected by all infrared receivers 121 to 126. In this case, the movable object 100 may move forward while turning right.

When the movable object 100 is placed in a point (5), all infrared receivers 121 to 126 may detect the infrared signal from all infrared irradiation regions 11 to 13 and the movable object 100 may terminate the movement and stop.

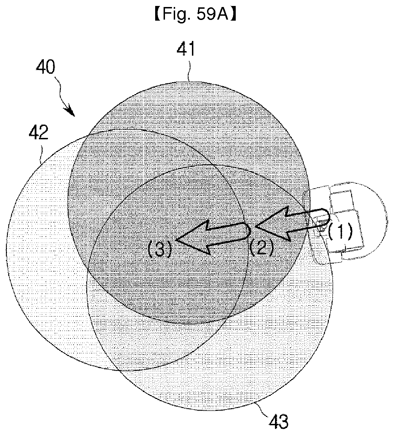

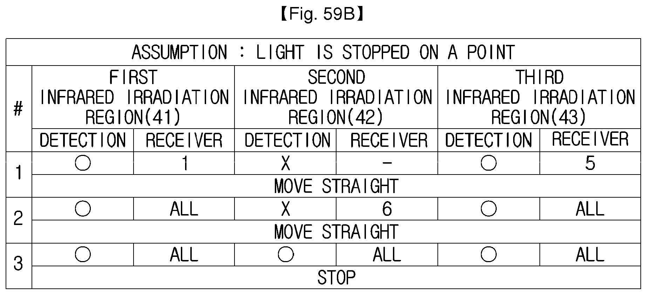

FIGS. 59A and 59B are views illustrating a second example in which the movable object moves when a distance between the first infrared irradiation region and the third infrared irradiation region, to which the infrared light is emitted, is relatively shorter.

According to the movement pattern, as illustrated in FIG. 59A, when the movable object 100 is placed in a point (1) in the outside of the first infrared irradiation region to the third infrared irradiation region 11 to 13, the first infrared receiver 121 may detect the infrared signal from the first infrared irradiation region 11, and the fifth infrared receiver 125 or the sixth infrared receiver 126 may detect the infrared signal from the third infrared irradiation region 13. In this case, the movable object 100 may move straight.

When the movable object 100 is placed in a point (2), all infrared receivers 121 to 126 may detect the infrared signal from the first infrared irradiation region 11 and the infrared signal from the third infrared irradiation region 13, but the second controller 110 may ignore the infrared signal. The sixth infrared receiver 126 may further detect the infrared signal from the second infrared irradiation region 12. In this case, the movable object 100 may continue to move straight.

When the movable object 100 is placed in a point (3), all infrared receivers 121 to 126 may detect the infrared signal from all infrared irradiation regions 11 to 13 and the movable object 100 may terminate the movement and stop.

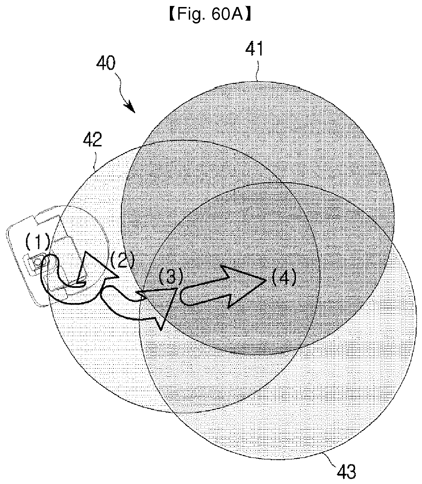

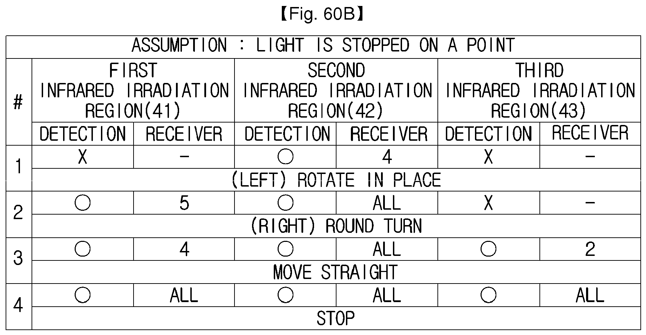

FIGS. 60A and 60B are views illustrating a third example in which the movable object moves when a distance between the first infrared irradiation region and the third infrared irradiation region, to which the infrared light is emitted, is relatively shorter.

According to the movement pattern, as illustrated in FIG. 60A, when the movable object 100 is placed in a point (1) in the outside of the first infrared irradiation region to the third infrared irradiation region 11 to 13 and when the front direction of the movable object 100 faces the direction opposite to the direction in which the first infrared irradiation region to the third infrared irradiation region 11 to 13 are placed, only fourth infrared receiver 124 may detect the infrared signal from the second infrared irradiation region 12 and the movable object 100 may rotate in place and face the opposite direction.

When the movable object 100 is placed in a point (2), all infrared receivers 121 to 126 may detect the infrared signal from the second infrared irradiation region 12. As mentioned above, the second controller 110 may ignore the infrared signal in the second infrared irradiation region 12 detected by all infrared receivers 121 to 126 and may not use the infrared signal for the control of the movable object 100. The fifth infrared receiver 125 may further detect the infrared signal from the first infrared irradiation region 11. In this case, the movable object 100 may move straight.

When the movable object 100 is placed in a point (3), all infrared receivers 121 to 126 may detect the infrared signal from the second infrared irradiation region 12, but the second controller 110 may ignore the infrared signal and not use the infrared signal for the control of the movable object 100. The fourth infrared receiver 124 may further detect the infrared signal from the first infrared irradiation region 11. The second infrared receiver 122 may further detect the infrared signal from the third infrared irradiation region 13. In this case, the movable object 100 may continue to move straight.

When the movable object 100 is placed in a point (4), all infrared receivers 121 to 126 may detect the infrared signal from all infrared irradiation regions 11 to 13 and the movable object 100 may terminate the movement and stop.

Hereinafter examples in which the movable object moves according to the third embodiment of the remote controller as illustrated in FIGS. 33 and 34 will be described.

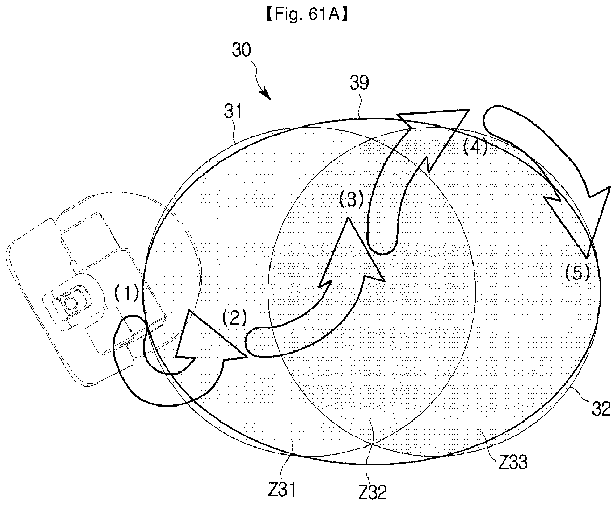

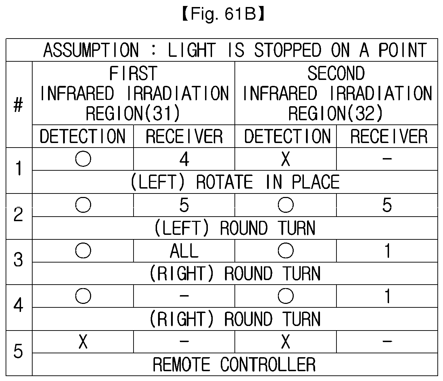

FIGS. 61A and 61B are views illustrating an example in which the movable object is moved when the infrared light is irradiated by of the remote controller according to the third embodiment. A number in the left side in a table of FIG. 61B may represent the position of the movable object 100 of FIG 61A. In the upper right side in the table, "O" related to the detection of the infrared light represents that the infrared receiver detects the infrared light and "X" represents that the infrared receiver does not detect the infrared light. A number related to the receiver represents the infrared receiver detecting the infrared light. In the upper lower in the table, a number represents the operation of the movable object 100.

FIG. 61A illustrates the first irradiation region 31, the second irradiation region 32, and the visible light irradiation region 39 formed in the inside, the outside or the surrounding of the first irradiation region 31 and the second irradiation region 32. The visible light irradiation region 39 may be a region to which a visible light emitted from the above mentioned visible light lamp 251e to 251g and 252e to 252g is incident.

According to the third embodiment of the remote controller 200, since the infrared light is emitted by two infrared emitters 251 and 252 and two infrared irradiation regions 31 and 33 are present, the movable object 100 may move according to the pattern different from the above mentioned pattern.

When the second controller 110 recognizes the unit zone (z33) in which infrared lights are overlapped, the second controller 110 may accept a signal, which is transmitted by any one infrared light between two overlapped infrared lights, and discard a signal, which is transmitted by the other infrared light. In this case, any one infrared light between two infrared lights emitted from two infrared emitters 251 and 252 may correspond to a main infrared light, and the other infrared light may correspond to an auxiliary infrared light. When the main infrared light and the auxiliary infrared light are overlapped, the second controller 110 may determine the operation of the movable object 100 by only using the infrared signal by the main infrared light while discarding the infrared signal by the auxiliary infrared light.

When the second controller 110 recognizes the unit zone (z31 and z32) in which the infrared light are not overlapped, the second controller 110 may move the movable object 100 by calculating the infrared reception direction. That is, when the second controller 110 recognizes the main infrared light, the second controller 110 may move the movable object 100 to the reception direction of the main infrared, and when the second controller 110 recognizes the auxiliary infrared light, the second controller 110 may move the movable object 100 to the reception direction of the auxiliary infrared.

Particularly, as illustrated in FIG. 61A, when the movable object 100 is placed in a point (1) in the outside of the first infrared irradiation region and the second infrared irradiation region 31 and 32, and when the front direction of the movable object 100 faces the direction opposite to the direction in which the first infrared irradiation region and the second infrared irradiation region 31 and 32 are placed, the fourth infrared receiver 124 may detect the infrared signal from the first irradiation region 31, e.g., the infrared signal by the auxiliary infrared light, and other infrared emitters 121 to 123, 125 and 126 may not detect any infrared signal. In this case, the second controller 110 may control the movable object 100 so that the movable object 100 rotates in place to the left direction.

When the movable object 100 rotates and places in a point (2), the fifth infrared receiver 125 may detect the infrared signal from the first irradiation region 31, e.g., the infrared signal by the auxiliary infrared light, and the infrared signal from the second irradiation region 32, e.g., the infrared signal by the main infrared light. The second controller 110 may ignore the infrared signal of the first irradiation region 31 and determine the operation of the movable object 100 by using only the infrared signal of the second irradiation region 32. Accordingly, the movable object 100 may move while turning the left side.

When the movable object 100 is placed in a point (3), all infrared receivers 121 to 126 may detect the infrared signal from the first irradiation region 31 and the first infrared receiver 121 may detect the infrared signal from the second irradiation region 32. The second controller 110 may ignore the infrared signal from the first irradiation region 31 and determine the operation of the movable object 100 by using only the infrared signal of the second irradiation region 32. Accordingly, the movable object 100 may move while turning the right side.

When the movable object 100 is placed in a point (4), the infrared signal of the first irradiation region 31 may be not detected by any one infrared receiver 121 to 126 and the infrared signal of only second infrared irradiation region 32 may be detected by the first infrared receiver 121. In this case, the movable object 100 may move while turning the right side.

When the user (u) performs the operation, e.g., turning off the power of the remote controller 200 and thus the operation of the remote controller 200 is terminated, the remote controller 200 may stop at a point (5).

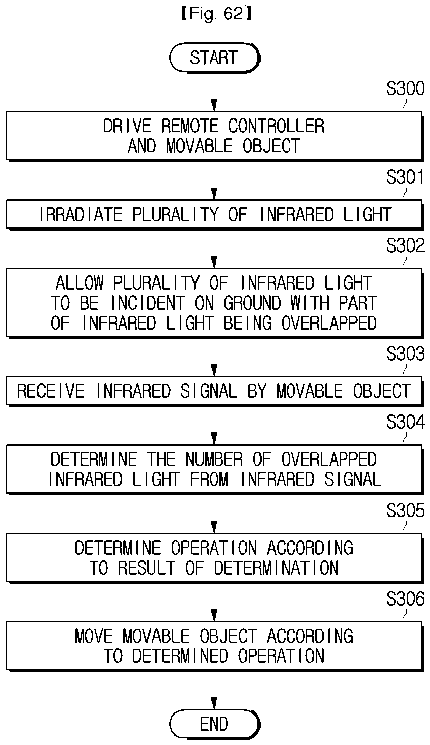

Hereinafter a movement control method of the movable object will be described with reference to FIGS. 62 to 64.

FIG. 62 is a flowchart illustrating a movement control method of the movable object according to an embodiment.

According to the movement control method of the movable object, as illustrated in FIG. 62, the movable object 100 and the remote controller 200 may start to drive (s300). The movable object 100 and the remote controller 200 may independently start to drive. The movable object 100 and the remote controller 200 may start to drive by the operation of the user (u).

The remote controller 200 may irradiate the plurality of infrared light (IR1 to IR4) such that at least two of the infrared lights (IR1 to IR4) are overlapped. For example, the remote controller 200 may include the first infrared emitter 221 and the second infrared emitter 222, and according to embodiments, the remote controller 200 may further include the third infrared emitter 223 or the fourth infrared emitter 224.

According to an embodiment, the first infrared emitter 221 may include the first lens 221b converging or diverging the first infrared light (IR1) emitted from the first infrared illuminating portion 221a, and the second infrared emitter 222 may include the second lens 222b converging or diverging the second infrared light (IR2) emitted from the second infrared illuminating portion 222a so as to emit the second infrared light (IR2) to a range different from the range of the first lens 221b.

According to another embodiment, the first infrared emitter 221 may include the first tube 221c and the second infrared emitter 222 may include the second tube 222c having a length different from the first tube 221c. Since the first tube 221c of the first infrared emitter 221 and the second tube 222c of the second infrared emitter 222 are different from each other, the first infrared light (IR1) emitted from the first infrared emitter 221 and the second infrared light (IR2) emitted from the second infrared emitter 222 may be irradiated to the different range.

According to embodiments, by using different lens 221b and 222b and different tube 221c and 222c, the first infrared emitter 221 and the second infrared emitter 222 may be configured to emit the infrared light (IR1 and IR2) to the different range.

The first infrared emitter 221 may include the first infrared guide portion 241, in which the first lens 221b and the first tube 221c are installed, and provided in the first direction, and the second infrared emitter 222 may include the second infrared guide portion 242, in which the second lens 222b and the second tube 222c are installed, and provided in the second direction different from the first direction to which the first infrared guide portion 241 is directed.

The movable object 100 may receive the infrared signal (IRS11 to IRS27) and move according to the received infrared signal (IRS11 to IRS27). The infrared signal (IRS11 to IRS27) may include at least one of the plurality of the infrared lights (IR1 and IR4) emitted from the remote controller 200.

The movable object 100 may include at least one infrared receiver 123 to 126 to receive the infrared signal (IRS11 to IRS27), and the infrared receiver 123 to 126 each may be installed in at least one of the front surface, the side surface and the rear surface of the movable object 100. For example, the infrared receiver 123 to 126 may be installed in all of the front surface, the left and right side surface and the rear surface of the movable object 100 and thus the movable object 100 may receive the infrared signal (IRS11 to IRS27) from all directions.

When the plurality of the infrared lights (IR1 and IR4) is emitted from the remote controller 200 (s 301), the emitted plurality of the infrared lights (IR1 and IR4) may be incident to the infrared irradiation region 11 to 14 on the ground (G). In this case, at least two of the plurality of the infrared lights (IR1 and IR4) may be overlapped on the ground (G) (s 302), as mentioned above.

The movable object 100 may receive the infrared signal (IRS11 to IRS27) of the infrared light (IR1 and IR4) incident to the ground (G) (s 303). The movable object 100 may receive at least one of the infrared light (IR1 and IR4) incident to the ground (G) by receiving the infrared signal (IRS11 to IRS27).

The movable object 100 may determine the number of the overlapped infrared light (IR1 and IR4) or identify the overlapped infrared light (IR1 and IR4) based on the infrared signal (IRS11 to IRS27). When the movable object 100 receives infrared signal (IRS11 to IRS27) from the non-overlapped infrared light, the movable object 100 may identify the emitted infrared light (IR1 and IR4) (s 304).

The movable object 100 may determine the operation of the movable object 100 based on at least one of the identified infrared light (IR1 and IR4) and the number of the overlapped infrared light (IR1 and IR4) (s 305). The movable object 100 may identify the unit zone (z1 to z4) according to at least one of the identified infrared light and the number of the overlapped infrared light and determine the operation of the movable object 100 based on the identified unit zone (z1 to z4).

In this case, by using the received infrared signal (IRS11 to IRS27), the movable object 100 may calculate the center of gravity or the sum of the vectors by using at least one of the emitted or overlapped infrared light and the number of the overlapped infrared light, and determine the moving direction based on the result of the calculation. According to embodiments, the movable object 100 may calculate the center of gravity or the sum of the vectors by applying a weight value to at least one of the emitted or overlapped infrared light and the number of the overlapped infrared light. For the calculation of the center of gravity or the sum of the vectors, the position of the infrared receiver 121 to 126 provided in the movable object 100 may be used.

The movable object 100 may start the operation according to the determined operation. The operation of the movable object 100 may include the movement of the movable object 100 according to the predetermined pattern, wherein the movement of the movable object 100 may include a movement to the identified unit zone (z1 to z4) or a movement among the identified unit zone (z1 to z4).

According to an embodiment, the movable object 100 may move from the first unit zone to the n^{th} unit zone (z1 to z4) according to a predetermined order.

According to another embodiment, the movable object 100 may move from the first unit zone in which the number of overlapped infrared light is relatively small, to the second unit zone in which the number of overlapped infrared light is relatively large, or in contrast, the movable object 100 may move from the second unit zone in which the number of overlapped infrared light is relatively large to the first unit zone in which the number of overlapped infrared light is relatively small. Alternatively, the movable object 100 may reciprocate between the first unit zone and the second unit zone and the movable object 100 may move according to a method that is combination thereof.

The movable object 100 may move to a certain unit zone or move between certain unit zones according to at least one of the linear path, the curved path and the spiral path.

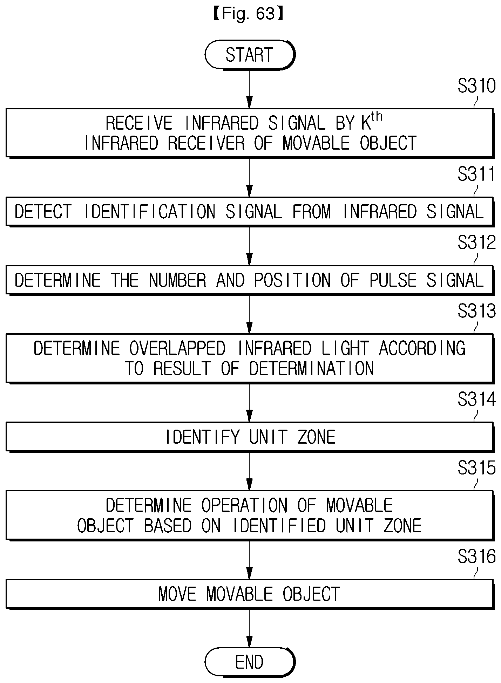

FIG. 63 is a flowchart illustrating a process in which the movable object receives the infrared light and determines the moving direction by using the received infrared light in details.

As illustrated in FIG. 63, when the k^{th} infrared receiver 121 to 126 (k is a natural number equal to or more than 1) of the movable object 100 receives the infrared signal (IRS11 to IRS27) (s 310), the second controller 110 of the movable object 100 may detect the identification signal from the received infrared signal (IRS11 to IRS27) (s 311). The identification signal (SG1 to SG4) may represent a signal for identifying the plurality of infrared lights (IR1 to IR4). The identification signal (SG1 to SG4) may include the lead signal (I), the pulse signal (p1 to p4) and the end signal (e), and the identification signal (SG1 to SG4) may allow the plurality of infrared lights (IR1 to IR4) to be identified due to the difference of the pulse signal (p1 to p4). As for the pulse signal (p1 to p4), the pulse may be present at a different time and thus it may be possible to distinguish the identification signal (SG1 to SG4) by using the pulse signal (p1 to p4).

The movable object 100 may detect the pulse signal (p1 to p4) from the received infrared signal (IRS11 to IRS27) and check and determine the position in time and the number of the pulse signal (p1 to p4) (s 312).

According to the result of the determination about the pulse signal (p1 to p4), it may be possible to identify the infrared light (IR1 to IR4) from the infrared signal (IRS11 to IRS27) and determine whether the infrared light are overlapped or not and the number of the overlapped infrared light.

The movable object 100 may identify the unit zone (z1 to z4) based on at least one of the identified infrared light (IR1 to IR4) and the number of the overlapped infrared light (s 314), and determine the operation of the movable object according to the identified unit zone (z1 to z4) (s 315). The movable object 100 may identify the unit zone (z1 to z4) corresponding to the infrared receiver 121 to 126 based on the infrared signal (IRS11 to IRS27) input to each infrared receiver 121 to 126.

The movable object 100 may start to move according to the determined operation (s 316).

Although a few embodiments of the present disclosure have been shown and described, it would be appreciated by those skilled in the art that changes may be made in these embodiments. The invention is defined in the claims.

## Claims

1. A movable object (100) comprising:
a plurality of infrared receivers (121 to 128) configured to receive at least one infrared light among a plurality of infrared lights (IR1 to IR8) emitted from a plurality of light sources (221 to 228, 231 to 233, 251, 252) of a remote controller (200), the plurality of infrared lights (IR1 to IR8) being entirely or partially overlapped with each other; and
a controller (110) configured to identify a unit zone (z1 to z6, z21 to z27, z31 to z33, z41 to z47) for each of the plurality of infrared receivers (121 to 128) according to the number of overlapped infrared lights (IR1 to IR8) received by each of the plurality of infrared receivers (121 to 128), wherein each unit zone is defined by the number of overlapped infrared lights in that zone; and
**characterized in that** the controller (110) is further configured to:
calculate a weighted centre location between the plurality of infrared receivers (121 to 128) using the number of overlapped lights at each receiver as a weight, or calculate a vector sum as the sum of a plurality of vectors (v1 to v6), wherein each vector (v1 to v6) is directed to one of the plurality of infrared receivers (121 to 128) from an origin (ov) and the size of each vector corresponds to the number of overlapped lights at the respective receiver (121 to 128), and
to determine a moving direction of the movable object relative to the position of the weighted centre location or the direction of the vector sum.

2. The movable object of claim 1, wherein
the controller controls the movable object so that the movable object moves to one of the identified unit zones or moves along in between the identified unit zones, according to a predetermined pattern.

3. The movable object of claim 2, wherein
the unit zone comprises a first unit zone to a n^{th} unit zone, wherein the controller allows the movable object to sequentially move from first unit zone to the n^{th} unit zone according to a predetermined order, wherein n is a natural number equal to or more than 1.

4. The movable object of claim 3, wherein
the controller controls the movable object so that the movable object moves from the first unit zone in which the number of overlapped infrared lights is relatively small, to the second unit zone in which the number of overlapped infrared lights is relatively large, or the movable object moves from the second unit zone to the first unit zone or the movable object reciprocates between the first unit zone and the second unit zone.

5. The movable object of claim 3, wherein
the controller controls the movable object so that the movable object moves from the first unit zone to the second unit zone or from the second unit zone to the first unit zone according to at least one of a linear path, a curved path, and a spiral path.

6. The movable object of claim 1, wherein
the plurality of infrared lights each comprises an identification signal to identify the plurality of infrared lights from each other, wherein the controller determines the number of the overlapped infrared lights, by using an identification signal that is mixed according to the overlap of the infrared lights.

7. The movable object of claim 6, wherein
the controller detects a pulse from the identification signal that is mixed according to the overlap of the infrared lights to determine the number of the pulses in the mixed identification signal, determines the number of the overlapped infrared lights in a certain zone according to the determined number of pulses, and identifies the certain zone as a certain unit zone according to the determined number of the overlapped infrared lights.

8. The movable object of claim 1, wherein
the entire or a part of a first irradiation region (10, 11 to 14, 21 to 23, 31, 41 to 43) to which the first infrared light is emitted among the plurality of infrared lights, is contained in a second irradiation region (10, 11 to 14, 21 to 23, 32, 41 to 43) to which the second infrared light, which is different from the first infrared light, is emitted, so that the entire or a part of the first irradiation region and the entire or a part of the second irradiation region are overlapped with each other.

9. The movable object of claim 8, wherein
the unit zone comprises at least one of a point in which the first irradiation region and the second irradiation region are overlapped with each other, and a point in which the first irradiation region and the second irradiation region are not overlapped with each other.

10. The movable object of claim 1, wherein
the plurality of light sources is provided in a remote controller (200) separated from the movable object.

11. A movement control method of a movable object (100) comprising:
emitting, by a remote controller (200), a first infrared light and a second infrared light to be different from each other in at least one of a direction and a range, wherein a part of the second infrared light is overlapped with the first infrared light;
receiving, by the movable object (100), at least one of the first infrared light and the second infrared light;
determining the number of overlapped infrared lights on the basis of infrared light received by each of a plurality of infrared receivers (121 to 128) of the movable object (100);
identifying a unit zone (z1 to z6) for each of the plurality of infrared receivers (121 to 128) according to the determined number of overlapped infrared lights received by each of the plurality of infrared receivers (121 to 128), wherein each unit zone is defined by the number of overlapped infrared lights in that zone; and
**characterized by** calculating a weighted centre location between the plurality of infrared receivers (121 to 128) using the number of overlapped lights at each receiver as a weight, or calculate a vector sum as the sum of a plurality of vectors (v1 to v6), wherein each vector (v1 to v6) is directed to one of the plurality of infrared receivers (121 to 128) from an origin (ov) and the size of each vector corresponds to the number of overlapped lights at the respective receiver (121 to 128), and
moving the movable object (100) relative to the position of the weighted centre location or the direction of the vector sum.

12. The movement control method of claim 11, wherein
the moving of the movable object includes moving the movable object to one of the identified unit zones or along in between the identified unit zones according to a predetermined pattern.

13. The movement control method of claim 11, wherein
the plurality of infrared lights each comprises an identification signal to identify the plurality of infrared lights from each other,
wherein the identifying of a unit zone according to the number of the overlapped infrared lights on the basis of the first infrared light and second infrared light received by the movable object, comprises determining the number of the overlapped infrared lights by using the identification signal mixed according to the overlap of the infrared lights.

14. The movement control method of claim 11, wherein
the unit zone comprises at least one of a point, in which a first irradiation region (10, 11 to 14, 21 to 23, 31, 41 to 43) to which the first infrared light is emitted and a second irradiation region (10, 11 to 14, 21 to 23, 32, 41 to 43) to which the second infrared light is emitted are overlapped with each other, and a point in which the first irradiation region and the second irradiation region are not overlapped with each other.

## Patentansprüche

1. Bewegliches Objekt (100), das Folgendes umfasst:
mehrere Infrarotempfänger (121 bis 128), konfiguriert zum Empfangen mindestens eines Infrarotlichts unter mehreren Infrarotlichtern (IR1 bis IR8), die von mehreren Lichtquellen (221 bis 228, 231 bis 233, 251, 252) einer Fernbedienung (200) emittiert werden, wobei die mehreren Infrarotlichter (IR1 bis IR8) einander ganz oder teilweise überlappen; und
eine Steuerung (110), konfiguriert zum Identifizieren einer Einheitszone (z1 bis z6, z21 bis z27, z31 bis z33, z41 bis z47) für jeden der mehreren Infrarotempfänger (121 bis 128) entsprechend der Anzahl von überlappenden Infrarotlichtern (IR1 bis IR8), die von jedem der mehreren Infrarotempfänger (121 bis 128) empfangen werden, wobei jede Einheitszone durch die Anzahl von überlappenden Infrarotlichtern in dieser Zone definiert wird; und
**dadurch gekennzeichnet, dass** die Steuerung (110) ferner konfiguriert ist zum:
Berechnen eines gewichteten zentralen Orts zwischen den mehreren Infrarotempfängern (121 bis 128) anhand der Anzahl von überlappenden Lichtern an jedem Empfänger als Gewichtung, oder Berechnen einer Vektorsumme als die Summe aus mehreren Vektoren (v1 bis v6), wobei jeder Vektor (v1 bis v6) von einem Ursprung (ov) auf einen der mehreren Infrarotempfänger (121 bis 128) gerichtet ist und die Größe jedes Vektors der Anzahl von überlappenden Lichtern am jeweiligen Empfänger (121 bis 128) entspricht, und
Bestimmen einer Bewegungsrichtung des beweglichen Objekts relativ zur Position des gewichteten zentralen Orts oder der Richtung der Vektorsumme.

2. Bewegliches Objekt nach Anspruch 1, wobei
die Steuerung das bewegliche Objekt so steuert, dass sich das bewegliche Objekt gemäß einem vorbestimmten Muster zu einer der identifizierten Einheitszonen bewegt oder sich zwischen den identifizierten Einheitszonen entlang bewegt.

3. Bewegliches Objekt nach Anspruch 2, wobei
die Einheitszone eine erste Einheitszone bis zu einer n-ten Einheitszone umfasst, wobei es die Steuerung zulässt, dass sich das bewegliche Objekt sequentiell von der ersten Einheitszone zur n-ten Einheitszone in einer vorbestimmten Reihenfolge bewegt, wobei n eine natürliche Zahl gleich oder größer als 1 ist.

4. Bewegliches Objekt nach Anspruch 3, wobei
die Steuerung das bewegliche Objekt so steuert, dass sich das bewegliche Objekt von der ersten Einheitszone, in der die Anzahl der überlappenden Infrarotlichter relativ gering ist, zur zweiten Einheitszone bewegt, in der die Anzahl von überlappenden Infrarotlichter relativ groß ist, oder dass sich das bewegliche Objekt von der zweiten Einheitszone zur ersten Einheitszone bewegt oder dass sich das bewegliche Objekt zwischen der ersten Einheitszone und der zweiten Einheitszone hin- und herbewegt.

5. Bewegliches Objekt nach Anspruch 3, wobei
die Steuerung das bewegliche Objekt so steuert, dass sich das bewegliche Objekt von der ersten Einheitszone zur zweiten Einheitszone oder von der zweiten Einheitszone zur ersten Einheitszone gemäß mindestens einem aus einem linearen Weg, einem gekrümmten Weg und einem spiralförmigen Weg bewegt.

6. Bewegliches Objekt nach Anspruch 1, wobei
die mehreren Infrarotlichter jeweils ein Identifikationssignal umfassen, um die mehreren Infrarotlichter untereinander zu identifizieren, wobei die Steuerung die Anzahl der überlappenden Infrarotlichter mittels eines Identifikationssignals bestimmt, das entsprechend der Überlappung der Infrarotlichter gemischt wird.

7. Bewegliches Objekt nach Anspruch 6, wobei
die Steuerung einen Impuls aus dem Identifizierungssignal erkennt, der entsprechend der Überlappung der Infrarotlichter gemischt wird, um die Anzahl der Impulse im gemischten Identifizierungssignal zu bestimmen, die Anzahl der überlappenden Infrarotlichter in einer bestimmten Zone entsprechend der bestimmten Anzahl der Impulse bestimmt und die bestimmte Zone als eine bestimmte Einheitszone entsprechend der bestimmten Anzahl der überlappenden Infrarotlichter identifiziert.

8. Bewegliches Objekt nach Anspruch 1, wobei
ein erster Bestrahlungsbereich (10, 11 bis 14, 21 bis 23, 31, 41 bis 43), in den das erste Infrarotlicht unter den mehreren Infrarotlichtern emittiert wird, ganz oder teilweise in einem zweiten Bestrahlungsbereich (10, 11 bis 14, 21 bis 23, 32, 41 bis 43) enthalten ist, in den das zweite Infrarotlicht, das sich vom ersten Infrarotlicht unterscheidet, emittiert wird, so dass der erste Bestrahlungsbereich und der zweite Bestrahlungsbereich einander ganz oder teilweise überlappen.

9. Bewegliches Objekt nach Anspruch 8, wobei
die Einheitszone einen Punkt, in dem der erste Bestrahlungsbereich und der zweite Bestrahlungsbereich einander überlappen, und/oder einen Punkt umfasst, in dem der erste Bestrahlungsbereich und der zweite Bestrahlungsbereich einander nicht überlappen.

10. Bewegliches Objekt nach Anspruch 1, wobei
die mehreren Lichtquellen in einer von dem beweglichen Objekt separaten Fernbedienung (200) vorgesehen sind.

11. Verfahren zur Bewegungssteuerung eines beweglichen Objekts (100), das Folgendes beinhaltet:
Emittieren, durch eine Fernbedienung (200), eines ersten Infrarotlichts und eines zweiten Infrarotlichts, so dass sie sich voneinander in einer Richtung und/oder einer Reichweite unterscheiden, wobei ein Teil des zweiten Infrarotlichts mit dem ersten Infrarotlicht überlappt;
Empfangen, durch das bewegliche Objekt (100), des ersten Infrarotlichts und/oder des zweiten Infrarotlichts;
Bestimmen der Anzahl von überlappenden Infrarotlichtern auf der Basis von Infrarotlicht, das von jedem von mehreren Infrarotempfängern (121 bis 128) des beweglichen Objekts (100) empfangen wird;
Identifizieren einer Einheitszone (z1 bis z6) für jeden der mehreren Infrarotempfänger (121 bis 128) entsprechend der bestimmten Anzahl von überlappenden Infrarotlichtern, die von jedem der mehreren Infrarotempfänger (121 bis 128) empfangen werden, wobei jede Einheitszone durch die Anzahl von überlappenden Infrarotlichtern in dieser Zone definiert ist; und
**gekennzeichnet durch** Berechnen eines gewichteten zentralen Orts zwischen den mehreren Infrarotempfängern (121 bis 128) anhand der Anzahl von überlappenden Lichtern an jedem Empfänger als Gewichtung, oder Berechnen einer Vektorsumme als die Summe aus mehreren Vektoren (v1 bis v6), wobei jeder Vektor (v1 bis v6) von einem Ursprung (ov) auf einen der mehreren Infrarotempfänger (121 bis 128) gerichtet ist und die Größe jedes Vektors der Anzahl von überlappenden Lichtern am jeweiligen Empfänger (121 bis 128) entspricht, und
Bewegen des beweglichen Objekts (100) relativ zur Position des gewichteten zentralen Orts oder zur Richtung der Vektorsumme.

12. Bewegungssteuerungsverfahren nach Anspruch 11, wobei
das Bewegen des beweglichen Objekts das Bewegen des beweglichen Objekts zu einer der identifizierten Einheitszonen oder zwischen den identifizierten Einheitszonen entlang gemäß einem vorbestimmten Muster beinhaltet.

13. Bewegungssteuerungsverfahren nach Anspruch 11, wobei
die mehreren Infrarotlichter jeweils ein Identifikationssignal umfassen, um die mehreren Infrarotlichter voneinander zu unterscheiden,
wobei das Identifizieren einer Einheitszone entsprechend der Anzahl der überlappenden Infrarotlichter auf der Basis des ersten Infrarotlichts und des zweiten Infrarotlichts wie von dem beweglichen Objekt empfangen das Bestimmen der Anzahl der überlappenden Infrarotlichter anhand des entsprechend der Überlappung der Infrarotlichter gemischten Identifikationssignals umfasst.

14. Bewegungssteuerungsverfahren nach Anspruch 11, wobei
die Einheitszone einen Punkt, in dem ein erster Bestrahlungsbereich (10, 11 bis 14, 21 bis 23, 31, 41 bis 43), zu dem das erste Infrarotlicht emittiert wird, und ein zweiter Bestrahlungsbereich (10, 11 bis 14, 21 bis 23, 32, 41 bis 43), zu dem das zweite Infrarotlicht emittiert wird, einander überlappen, und/oder einen Punkt umfasst, in dem der erste Bestrahlungsbereich und der zweite Bestrahlungsbereich einander nicht überlappen.

## Revendications

1. Objet mobile (100) comprenant :
une pluralité de récepteurs à infrarouge (121 à 128) configurés pour recevoir au moins une lumière infrarouge parmi une pluralité de lumières infrarouges (IR1 à IR8) émises à partir d'une pluralité de sources lumineuses (221 à 228, 231 à 233, 251, 252) d'un organe de commande distant (200), la pluralité de lumières infrarouges (IR1 à IR8) étant en chevauchement total ou partiel les unes avec les autres ; et
un organe de commande (110) configuré pour identifier une zone unitaire (z1 à z6, z21 à z27, z31 à z33, z41 à z47) pour chaque récepteur de la pluralité de récepteurs à infrarouge (121 à 128) en fonction du nombre de lumières infrarouges en chevauchement (IR1 à IR8) reçues par chaque récepteur de la pluralité de récepteurs à infrarouge (121 à 128), dans lequel chaque zone unitaire est définie par le nombre de lumières infrarouges en chevauchement dans cette zone ; et
**caractérisé en ce que** l'organe de commande (110) est configuré en outre pour :
calculer une localisation centrale pondérée entre la pluralité de récepteurs à infrarouge (121 à 128) grâce à l'utilisation du nombre de lumières en chevauchement au niveau de chaque récepteur en tant que poids, ou calculer une somme vectorielle en tant que somme d'une pluralité de vecteurs (v1 à v6), chaque vecteur (v1 à v6) étant dirigé vers un récepteur de la pluralité de récepteurs à infrarouge (121 à 128) à partir d'une origine (ov) et la taille de chaque vecteur correspondant au nombre de lumières en chevauchement au niveau du récepteur respectif (121 à 128), et
pour déterminer une direction de mouvement de l'objet mobile relativement à la position de la localisation centrale pondérée ou la direction de la somme vectorielle.

2. Objet mobile de la revendication 1, dans lequel
l'organe de commande assure la commande de l'objet mobile de sorte que l'objet mobile se déplace vers l'une des zones unitaires identifiées ou se déplace en long entre les zones unitaires identifiées, en fonction d'un schéma prédéterminé.

3. Objet mobile de la revendication 2, dans lequel
la zone unitaire comprend une première zone unitaire jusqu'à une n^{ième} zone unitaire, dans lequel l'organe de commande autorise l'objet mobile à se déplacer de manière séquentielle depuis la première zone unitaire jusqu'à la n^{ième} zone unitaire en fonction d'un ordre prédéterminé, dans lequel n est un nombre naturel égal ou supérieur à 1.

4. Objet mobile de la revendication 3, dans lequel
l'organe de commande assure la commande de l'objet mobile de sorte que l'objet mobile se déplace depuis la première zone unitaire dans laquelle le nombre de lumières infrarouges en chevauchement est relativement petit, jusqu'à la deuxième zone unitaire dans laquelle le nombre de lumières infrarouges en chevauchement est relativement grand, ou l'objet mobile se déplace depuis la deuxième zone unitaire jusqu'à la première zone unitaire ou l'objet mobile effectue un va-et-vient entre la première zone unitaire et la deuxième zone unitaire.

5. Objet mobile de la revendication 3, dans lequel
l'organe de commande assure la commande de l'objet mobile de sorte que l'objet mobile se déplace depuis la première zone unitaire jusqu'à la deuxième zone unitaire ou depuis la deuxième zone unitaire jusqu'à la première zone unitaire en fonction d'au moins un trajet parmi un trajet linéaire, un trajet incurvé, et un trajet en spirale.

6. Objet mobile de la revendication 1, dans lequel
la pluralité de lumières infrarouges comprend, chacune, un signal d'identification afin d'identifier la pluralité de lumières infrarouges les unes par rapport aux autres, dans lequel l'organe de commande détermine le nombre des lumières infrarouges en chevauchement, grâce à l'utilisation d'un signal d'identification qui est mélangé en fonction du chevauchement des lumières infrarouges.

7. Objet mobile de la revendication 6, dans lequel
l'organe de commande détecte une impulsion à partir du signal d'identification qui est mélangé en fonction du chevauchement des lumières infrarouges afin de déterminer le nombre des impulsions dans le signal d'identification mélangé, détermine le nombre des lumières infrarouges en chevauchement dans une certaine zone en fonction du nombre déterminé d'impulsions, et identifie la certaine zone en tant que certaine zone unitaire en fonction du nombre déterminé des lumières infrarouges en chevauchement.

8. Objet mobile de la revendication 1, dans lequel
la totalité ou une partie d'une première région d'irradiation (10, 11 à 14, 21 à 23, 31, 41 à 43) vers laquelle la première lumière infrarouge est émise parmi la pluralité de lumières infrarouges, est contenue dans une deuxième région d'irradiation (10, 11 à 14, 21 à 23, 32, 41 à 43) vers laquelle la deuxième lumière infrarouge, qui est différente de la première lumière infrarouge, est émise, de sorte que la totalité ou une partie de la première région d'irradiation et la totalité ou une partie de la deuxième région d'irradiation soient en chevauchement l'une avec l'autre.

9. Objet mobile de la revendication 8, dans lequel
la zone unitaire comprend au moins un point parmi un point dans lequel la première région d'irradiation et la deuxième région d'irradiation sont en chevauchement l'une avec l'autre, et un point dans lequel la première région d'irradiation et la deuxième région d'irradiation ne sont pas en chevauchement l'une avec l'autre.

10. Objet mobile de la revendication 1, dans lequel
la pluralité de sources lumineuses est prévue dans un organe de commande distant (200) séparé de l'objet mobile.

11. Procédé de commande de mouvement d'un objet mobile (100) comprenant :
l'émission, par un organe de commande distant (200), d'une première lumière infrarouge et d'une deuxième lumière infrarouge pour qu'elles soient différentes l'une de l'autre dans au moins un élément parmi une direction et une portée, dans lequel une partie de la deuxième lumière infrarouge est en chevauchement avec la première lumière infrarouge ;
la réception, par l'objet mobile (100), d'au moins une lumière parmi la première lumière infrarouge et la deuxième lumière infrarouge ;
la détermination du nombre de lumières infrarouges en chevauchement sur la base de la lumière infrarouge reçue par chaque récepteur d'une pluralité de récepteurs à infrarouge (121 à 128) de l'objet mobile (100) ;
l'identification d'une zone unitaire (z1 à z6) pour chaque récepteur de la pluralité de récepteurs à infrarouge (121 à 128) en fonction du nombre déterminé de lumières infrarouges en chevauchement reçu par chaque récepteur de la pluralité de récepteurs à infrarouge (121 à 128), chaque zone unitaire étant définie par le nombre de lumières infrarouges en chevauchement dans cette zone ; et
**caractérisé par** le calcul d'une localisation centrale pondérée entre la pluralité de récepteurs à infrarouge (121 à 128) grâce à l'utilisation du nombre de lumières en chevauchement au niveau de chaque récepteur en tant que poids, ou le calcul d'une somme vectorielle en tant que somme d'une pluralité de vecteurs (v1 à v6), chaque vecteur (v1 à v6) étant dirigé vers un récepteur de la pluralité de récepteurs à infrarouge (121 à 128) à partir d'une origine (ov) et la taille de chaque vecteur correspondant au nombre de lumières en chevauchement au niveau du récepteur respectif (121 à 128), et
le déplacement de l'objet mobile (100) relativement à la position de la localisation centrale pondérée ou la direction de la somme vectorielle.

12. Procédé de commande de mouvement de la revendication 11, dans lequel
le déplacement de l'objet mobile inclut le déplacement de l'objet mobile vers l'une des zones unitaires identifiées ou en long entre les zones unitaires identifiées en fonction d'un schéma prédéterminé.

13. Procédé de commande de mouvement de la revendication 11, dans lequel
la pluralité de lumières infrarouges comprend, chacune, un signal d'identification afin d'identifier la pluralité de lumières infrarouges les unes par rapport aux autres,
dans lequel l'identification d'une zone unitaire en fonction du nombre de lumières infrarouges en chevauchement sur la base de la première lumière infrarouge et de la deuxième lumière infrarouge reçu par l'objet mobile, comprend la détermination du nombre des lumières infrarouges en chevauchement grâce à l'utilisation du signal d'identification mélangé en fonction du chevauchement des lumières infrarouges.

14. Procédé de commande de mouvement de la revendication 11, dans lequel
la zone unitaire comprend au moins un point parmi un point, dans lequel une première région d'irradiation (10, 11 à 14, 21 à 23, 31, 41 à 43) vers laquelle la première lumière infrarouge est émise et une deuxième région d'irradiation (10, 11 à 14, 21 à 23, 32, 41 à 43) vers laquelle la deuxième lumière infrarouge est émise sont en chevauchement l'une avec l'autre, et un point dans lequel la première région d'irradiation et la deuxième région d'irradiation ne sont pas en chevauchement l'une avec l'autre.
